# EUROPEAN PATENT APPLICATION

(11) **EP 2 496 022 A1**
(43) Date of publication of application: **05.09.2012**
(21) Application number: 10826326.0
(22) Date of filing: 26.10.2010
(51) Int. Cl.: H04W 48/02, H04W 16/16, H04W 72/04

(54) **MOBILE COMMUNICATION SYSTEM**

(30) Priority: 30.10.2009 JP 2009250209
(71) Applicant: Mitsubishi Electric Corporation, Tokyo 100-8310 (JP)
(72) Inventor: MAEDA, Miho, Tokyo 100-8310 (JP); MOCHIZUKI, Mitsuru, Tokyo 100-8310 (JP); IWANE, Yasushi, Tokyo 100-8310 (JP)
(74) Representative: Sajda, Wolf E.
(86) International application number: PCT/JP2010/006327
(87) International publication number: WO 2011/052190

(57) **Abstract**

A mobile communication system includes: a base station for specific subscribers that operates in a closed access mode setting corresponding to a closed access mode in which specific user equipments are allowed access and in a hybrid access mode setting corresponding to the closed access mode as well as an open access mode in which user equipments to be allowed access are not specified; and a base station that does not specify a user equipment that makes access and, in a case where the base station for specific subscribers is installed outside a communication area of the base station that does not specify a user equipment that makes access, the base station for specific subscribers is caused to operate in the hybrid access mode setting.

## Description

### Technical Field

The present invention relates to a mobile communication system in which a base station performs radio communication with a plurality of user equipments.

### Background Art

Commercial service of a wideband code division multiple access (W-CDMA) system among so-called third-generation communication systems has been offered in Japan since 2001. In addition, high speed downlink packet access (HSDPA) service for achieving higher-speed data transmission using a downlink has been offered by adding a channel for packet transmission high speed-downlink shared channel (HS-DSCH)) to the downlink (dedicated data channel, dedicated control channel).
Further, in order to increase the speed of data transmission in an uplink direction, service of a high speed up link packet access (HSUPA) has been offered. W-CDMA is a communication system defined by the 3rd generation partnership project (3GPP) that is the standard organization regarding the mobile communication system, where the specifications of Release 8 version are produced.

Further, 3GPP is studying new communication systems referred to as "long term evolution (LTE)" regarding radio areas and "system architecture evolution (SAE)" regarding the overall system configuration including a core network (merely referred to as network as well) as communication systems independent of W-CDMA. In the LTE, an access scheme, a radio channel configuration and a protocol are totally different from those of the current W-CDMA (HSDPA/HSUPA).
For example, as to the access scheme, code division multiple access is used in the W-CDMA, whereas in the LTE, orthogonal frequency division multiplexing (OFDM) is used in a downlink direction and single career frequency division multiple access (SC-FDMA) is used in an uplink direction. In addition, the bandwidth is 5 MHz in the W-CDMA, while in the LTE, the bandwidth can be selected from 1.4 MHz, 3 MHz, 5 MHz, 10 MHz, 15 MHz and 20 MHz for each base station. Further, differently from the W-CDMA, circuit switching is not provided but a packet communication system is only provided in the LTE.

The LTE is defined as a radio access network independent of the W-CDMA network because its communication system is configured with a new core network different from a core network (GPRS) of the W-CDMA. Therefore, for differentiation from the W-CDMA communication system, a base station that communicates with a user equipment (UE) and a radio network controller that transmits/receives control data and user data to/from a plurality of base stations are referred to as an E-UTRAN NodeB (eNB) and an evolved packet core (EPC: also referred to as access gateway (aGW)), respectively, in the LTE communication system.
Unicast service and evolved multimedia broadcast multicast service (E-MBMS service) are provided in this LTE communication system. The E-MBMS service is broadcast multimedia service, which is merely referred to as MBMS in some cases. Bulk broadcast contents such as news, weather forecast and mobile broadcast are transmitted to a plurality of user equipments. This is also referred to as point to multipoint service.

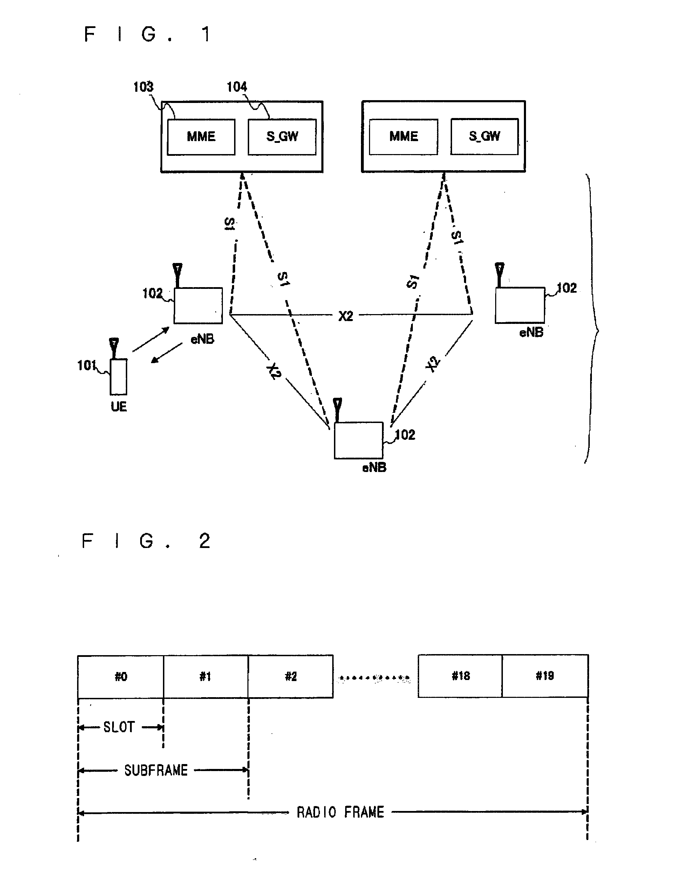

Non-Patent Document 1 describes the current decisions by 3GPP regarding an overall architecture in the LTE system. The overall architecture (Chapter 4.6.1 of Non-Patent Document 1) is described with reference to FIG. 1. FIG. 1 is a diagram illustrating the configuration of the LTE communication system. With reference to FIG. 1, the evolved universal terrestrial radio access (E-UTRAN) is composed of one or a plurality of base stations 102, provided that a control protocol (for example, radio resource management (RRC)) and a user plane (for example, packet data convergence protocol (PDCP), radio link control (RLC), medium access control (MAC), and physical layer (PHY)) for a user equipment 101 are terminated in the base station 102.
The base stations 102 perform scheduling and transmission of paging signaling (also referred to as paging messages) notified from a mobility management entity (MME) 103. The base stations 102 are connected to each other by means of an X2 interface. In addition, the base stations 102 are connected to an evolved packet core (EPC) by means of an S1 interface, more specifically, connected to the mobility management entity (MME) 103 by means of an S1_MME interface and connected to a serving gateway (S-GW) 104 by means of an S1_U interface.
The MME 103 distributes the paging signaling to multiple or a single base station 102. In addition, the MME 103 performs mobility control of an idle state. When the user equipment is in the idle state and an active state, the MME 103 manages a list of tracking areas. The S-GW 104 transmits/receives user data to/from one or a plurality of base stations 102. The S-GW 104 serves as a local mobility anchor point in handover between base stations. Moreover, there is provided a PDN gateway (P-GW), which performs per-user packet filtering and UE-ID address allocation.

The control protocol RRC between the user equipment 101 and the base station 102 performs broadcast, paging, RRC connection management and the like. The states of the base station and the user equipment in RRC are classified into RRC_Idle and RRC_CONNECTED. In RRC_IDLE, public land mobile network (PLMN) selection, system information (SI) broadcast, paging, cell reselection, mobility and the like are performed. In RRC_CONNECTED, the user equipment has RRC connection, is capable of transmitting/receiving data to/from a network, and performs, for example, handover (HO) and measurement of a neighbor cell.

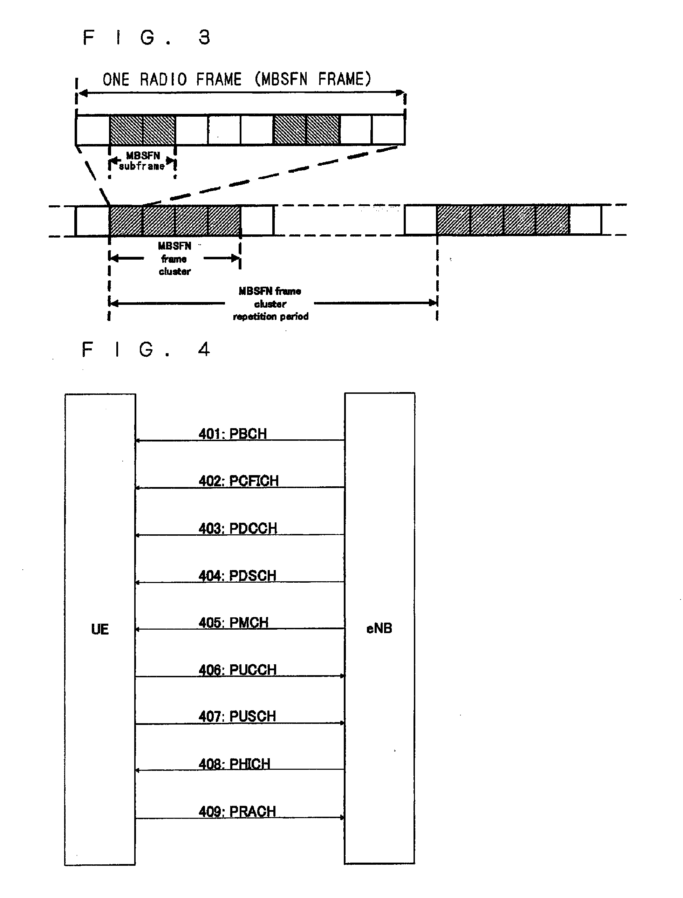

The current decisions by 3GPP regarding the frame configuration in the LTE system are described in Non-Patent Document 1 (Chapter 5), which are described with reference to FIG. 2. FIG. 2 is a diagram illustrating the configuration of a radio frame used in the LTE communication system. With reference to FIG. 2, one radio frame is 10 ms. The radio frame is divided into ten equally sized subframes.
The subframe is divided into two equally sized slots. The first and sixth subframes contain a downlink synchronization signal (SS) per each radio frame. The synchronization signals are classified into a primary synchronization signal (P-SS) and a secondary synchronization signal (S-SS). Multiplexing of channels for multimedia broadcast multicast service single frequency network (MBSFN) and for non-MBSFN is performed on a per-subframe basis.
Hereinafter, a subframe for MBSFN transmission is referred to as an MBSFN subframe. Non-Patent Document 2 describes a signaling example when MBSFN subframes are allocated. FIG. 3 is a diagram illustrating the configuration of the MBSFN frame. With reference to FIG. 3, the MBSFN subframes are allocated for each MBSFN frame. An MBSFN frame cluster is scheduled. A repetition period of the MBSFN frame cluster is allocated.

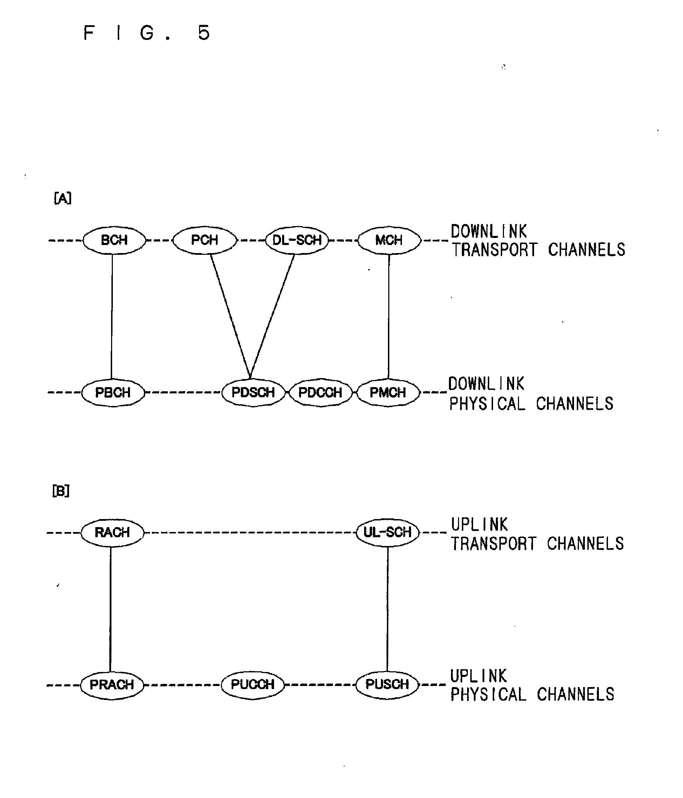

Non-Patent Document 1 describes the current decisions by 3GPP regarding the channel configuration in the LTE system. It is assumed that the same channel configuration is used in a closed subscriber group (CSG) cell as that of a non-CSG cell. A physical channel (Chapter 5 of Non-Patent Document 1) is described with reference to FIG. 4. FIG. 4 is a diagram illustrating physical channels used in the LTE communication system. With reference to FIG. 4, a physical broadcast channel (PBCH) 401 is a downlink channel transmitted from the base station 102 to the user equipment 101. A BCH transport block is mapped to four subframes within a 40 ms interval. There is no explicit signaling indicating 40 ms timing.
A physical control format indicator channel (PCFICH) 402 is transmitted from the base station 102 to the user equipment 101. The PCFICH notifies the number of OFDM symbols used for PDCCHs from the base station 102 to the user equipment 101. The PCFICH is transmitted in each subframe. A physical downlink control channel (PDCCH) 403 is a downlink channel transmitted from the base station 102 to the user equipment 101. The PDCCH notifies the resource allocation, HARQ information related to DL-SCH (downlink shared channel that is one of the transport channels shown in FIG. 5) and the PCH (paging channel that is one of the transport channels shown in FIG. 5).
The PDCCH carries an uplink scheduling grant. The PDCCH carries Ack/Nack that is a response signal to uplink transmission. The PDCCH is referred to as an L1/L2 control signal as well. A physical downlink shared channel (PDSCH) 404 is a downlink channel transmitted from the base station 102 to the user equipment 101. A DL-SCH (downlink shared channel) that is a transport channel and a PCH that is a transport channel are mapped to the PDSCH. A physical multicast channel (PMCH) 405 is a downlink channel transmitted from the base station 102 to the user equipment 101. A multicast channel (MCH) that is a transport channel is mapped to the PMCH.

A physical uplink control channel (PUCCH) 406 is an uplink channel transmitted from the user equipment 101 to the base station 102. The PUCCH carries Ack/Nack that is a response signal to downlink transmission. The PUCCH carries a channel quality indicator (CQI) report. The CQI is quality information indicating the quality of received data or channel quality. In addition, the PUCCH carries a scheduling request (SR). A physical uplink shared channel (PUSCH) 407 is an uplink channel transmitted from the user equipment 101 to the base station 102. A UL-SCH (uplink shared channel that is one of the transport channels shown in FIG. 5) is mapped to the PUSCH. A physical hybrid ARQ indicator channel (PHICH) 408 is a downlink channel transmitted from the base station 102 to the user equipment 101. The PHICH carries Ack/Nack that is a response to uplink transmission. A physical random access channel (PRACH) 409 is an uplink channel transmitted from the user equipment 101 to the base station 102. The PRACH carries a random access preamble.

A downlink reference signal which is a known symbol in a mobile communication system is inserted in the first, third and last OFDM symbols of each slot. The physical layer measurement objects of a user equipment include, for example, reference symbol received power (RSRP).

The transport channel (Chapter 5 of Non-Patent Document 1) is described with reference to FIG. 5. FIG. 5 is a diagram illustrating transport channels used in the LTE communication system. FIG. 5(A) shows mapping between a downlink transport channel and a downlink physical channel.
FIG. 5(B) shows mapping between an uplink transport channel and an uplink physical channel. A broadcast channel (BCH) is broadcast to the entire base station (cell) regarding the downlink transport channel. The BCH is mapped to the physical broadcast channel (PBCH). Retransmission control according to a hybrid ARQ (HARQ) is applied to a downlink shared channel (DL-SCH).
Broadcast to the entire base station (cell) is enabled. The DL-SCH supports dynamic or semi-static resource allocation. The semi-static resource allocation is also referred to as persistent scheduling. The DL-SCH supports discontinuous reception (DRX) of a user equipment for enabling the user equipment to save power. The DL-SCH is mapped to the physical downlink shared channel (PDSCH). The paging channel (PCH) supports DRX of the user equipment for enabling the user equipment to save power. Broadcast to the entire base station (cell) is required.
The PCH is mapped to physical resources such as the physical downlink shared channel (PDSCH) that can be used dynamically for traffic or physical resources such as the physical downlink control channel (PDCCH) of the other control channel. The multicast channel (MCH) is used for broadcast to the entire base station (cell). The MCH supports SFN combining of MBMS service (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH). The UL-SCH supports dynamic or semi-static resource allocation. The UL-SCH is mapped to the physical uplink shared channel (PUSCH). A random access channel (RACH) shown in FIG. 5(B) is limited to control information. There is a collision risk. The RACH is mapped to the physical random access channel (PRACH).

The HARQ is described. The HARQ is the technique for improving the communication quality of a channel by combination of automatic repeat request and forward error correction. The HARQ has an advantage that error correction functions effectively by retransmission even for a channel whose communication quality changes. In particular, it is also possible to achieve further quality improvement in retransmission through combination of the reception results of the first transmission and the reception results of the retransmission.
An example of the retransmission method is described. In a case where the receiver fails to successfully decode the received data (in a case where a cyclic redundancy check (CRC) error occurs (CRC=NG)), the receiver transmits "Nack" to the transmitter. The transmitter that has received "Nack" retransmits the data. In a case where the receiver successfully decodes the received data (in a case where a CRC error does not occur (CRC=OK)), the receiver transmits "Ack" to the transmitter.
The transmitter that has received "Ack" transmits the next data. Examples of the HARQ system include "chase combining". In chase combining, the same data sequence is transmitted in the first transmission and retransmission, which is the system for improving gains by combining the data sequence of the first transmission and the data sequence of the retransmission in retransmission.
This is based on the idea that correct data is partially included even if the data of the first transmission contains an error, and highly accurate data transmission is enabled by combining the correct portions of the first transmission data and the retransmission data. Another example of the HARQ system is incremental redundancy (IR). The IR is aimed to increase redundancy, where a parity bit is transmitted in retransmission to increase the redundancy by combining the first transmission and retransmission, to thereby improve the quality by an error correction function.

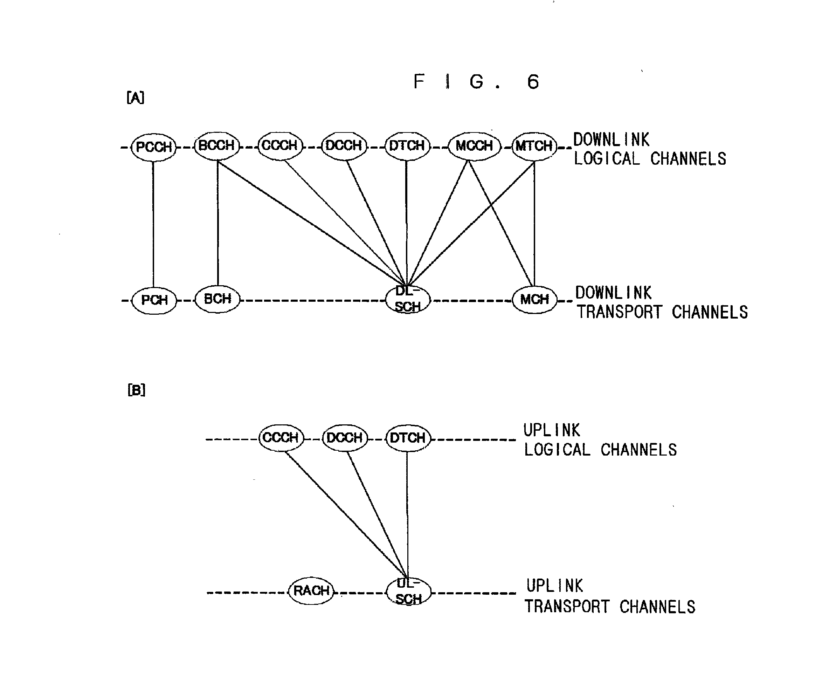

A logical channel (Chapter 6 of Non-Patent Document 1) is described with reference to FIG. 6. FIG. 6 is a diagram illustrating logical channels used in an LTE communication system. FIG. 6A shows mapping between a downlink logical channel and a downlink transport channel. FIG. 6B shows mapping between an uplink logical channel and an uplink transport channel. A broadcast control channel (BCCH) is a downlink channel for broadcast system control information. The BCCH that is a logical channel is mapped to the broadcast channel (BCH) or downlink shared channel (DL-SCH) that is a transport channel.
A paging control channel (PCCH) is a downlink channel for transmitting paging signals. The PCCH is used when the network does not know the cell location of a user equipment. The PCCH that is a logical channel is mapped to the paging channel (PCH) that is a transport channel. A common control channel (CCCH) is a channel for transmission control information between user equipments and a base station. The CCCH is used in a case where the user equipments have no RRC connection with the network. In downlink, the CCCH is mapped to the downlink shared channel (DL-SCH) that is a transport channel. In uplink, the CCCH is mapped to the UL-SCH that is a transport channel.

A multicast control channel (MCCH) is a downlink channel for point-to-multipoint transmission. The MCCH is a channel used for transmission of MBMS control information for one or several MTCHs from a network to a user equipment. The MCCH is a channel used only by a user equipment during reception of the MBMS. The MCCH is mapped to the downlink shared channel (DL-SCH) or multicast channel (MCH) that is a transport channel.
A dedicated control channel (DCCH) is a channel that transmits dedicated control information between a user equipment and a network. The DCCH is mapped to the uplink shared channel (UL-SCH) in uplink and mapped to the downlink shared channel (DL-SCH) in downlink. A dedicated traffic channel (DTCH) is a point-to-point communication channel for transmission of user information to a dedicated user equipment. The DTCH exists in uplink as well as downlink.
The DTCH is mapped to the uplink shared channel (UL-SCH) in uplink and mapped to the downlink shared channel (DL-SCH) in downlink. A multicast traffic channel (MTCH) is a downlink channel for traffic data transmission from a network to a user equipment. The MTCH is a channel used only by a user equipment during reception of the MBMS. The MTCH is mapped to the downlink shared channel (DL-SCH) or multicast channel (MCH).

GCI represents a global cell identity. A closed subscriber group (CSG) cell is introduced in the LTE and universal mobile telecommunication system (UMTS). The CSG is described below (Chapter 3.1 of Non-Patent Document 3). The closed subscriber group (CSG) is a cell in which subscribers who are allowed to use are specified by an operator (cell for specific subscribers).
The specific subscribers are allowed to make access one or more E-UTRAN cells of a public land mobile network (PLMN). One or more E-UTRAN cells in which the specific subscribers are allowed to make access are referred to as "CSG cell(s)". Note that access is limited in the PLMN. The CSG cell is part of the PLMN that broadcasts a specific CSG identity (CSG ID, CSG-ID). The authorized members of the subscriber group who have registered in advance access the CSG cells using the CSG-ID that is the access permission information. The CSG-ID is broadcast by the CSG cell or cells. A plurality of CSG-IDs exist in a mobile communication system.
The CSG-IDs are used by user equipments (UEs) for making access from CSG-related members easier. The locations of user equipments are traced based on an area composed of one or more cells. The locations are traced for enabling tracing of the locations of user equipments and calling (calling of user equipments) even in an idle state. An area for tracing locations of user equipments is referred to as a tracking area. A CSG whitelist is a list stored in the USIM in which all CSG IDs of the
CSG cells to which the subscribers belong are recorded. The CSG whitelist is also referred to as an allowed CSG ID list in some cases.

A "suitable cell" is described below (Chapter 4.3 of
Non-Patent Document 3). The "suitable cell" is a cell on which a UE camps to obtain normal service. Such a cell shall fulfill the following: (1) the cell is part of the selected PLMN or the registered PLMN, or part of the PLMN of an "equivalent PLMN list"; and (2) according to the latest information provided by a non-access stratum (NAS), the cell shall further fulfill the following conditions: (a) the cell is not a barred cell; (b) the cell is part of at least one tracking area (TA), not part of "forbidden LAs for roaming", where the cell needs to fulfill (1) above; (c) the cell shall fulfill the cell selection criteria; and (d) for a cell specified as CSG cell by system information (SI), the CSG-ID is part of a "CSG whitelist" of the UE (contained in the CSG whitelist of the UE).

An "acceptable cell" is described below (Chapter 4.3 of
Non-Patent Document 3). This is the cell on which a UE camps to obtain limited service (emergency calls). Such a cell shall fulfill all the following requirements. That is, the minimum required set for initiating an emergency call in an E-UTRAN network are as follows: (1) the cell is not a barred cell; and (2) the cell fulfills the cell selection criteria.

Camping on a cell represents the state where a UE has completed the cell selection/reselection process and the UE has selected a cell for monitoring the system information and paging information.

3GPP is studying base stations referred to as Home-NodeB (Home-NB, HNB) and Home-eNodeB (Home-eNB, HeNB). HNB/HeNB is a base station for, for example, household, corporation or commercial access service in UTRAN/E-UTRAN. Non-Patent Document 4 discloses three different modes of the access to the HeNB and HNB. Those are an open access mode, a closed access mode and a hybrid access mode. The respective modes have the following characteristics. In the open access mode, the HeNB and HNB are operated as a normal cell of a normal operator.
In the closed access mode, the HeNB and HNB are operated as a CSG cell. The CSG cell is a cell where only CSG members are allowed access. In the hybrid access mode, non-CSG members are allowed access at the same time. In other words, a cell in the hybrid access mode (also referred to as hybrid cell) is the cell that supports both the open access mode and the closed access mode.

### Prior Art Documents

### Non-Patent Documents

- Non-Patent Document 1:: 3GPP TS36.300 V9.1.0 Chapter 4.6.1, Chapter 4.6.2, Chapter 5, Chapter 6, and Chapter 10.7
- Non-Patent Document 2:: 3GPP R1-072963
- Non-Patent Document 3:: 3GPP TS36.304 V9.0.0 Chapter 3.1, Chapter 4.3 and Chapter 5.2.4
- Non-Patent Document 4:: 3GPP S1-083461
- Non-Patent Document 5:: 3GPP R2-082899
- Non-Patent Document 6:: 3GPP TS22.220 V9.1.1
- Non-Patent Document 7:: 3GPP TR25.820 V8.2.0
- Non-Patent Document 8:: 3GPP R2-094808

### Summary of Invention

### Problem to be Solved by the Invention

In a case where a HeNB/HNB cell being a base station for specific subscribers, which operates in a closed access mode, is installed outside the coverage of a macro cell (outside a communication area) being a base station that does not specify a user equipment that makes access, there may occur a situation in which a user equipment that has not been registered with the CSG to which the HeNB/HNB cell belongs cannot receive service within the coverage of the HeNB/HNB cell (within the communication area).
In a solution using a conventional method, a macro cell is newly installed in that location. As a result, that location is included in the macro cell coverage, which also enables a user equipment that has not been registered with the CSG to receive the service of a mobile communication system in that location. However, this causes a new problem that a considerable cost is required for the installation of a macro cell.
An object of the present invention is to provide a mobile communication system in which, in a case where a base station for specific subscribers is installed outside a communication area of a base station that does not specify user equipments that make access, even a user equipment other than the specific user equipments can receive the communication service while suppressing cost in the communication area of the base station for specific subscribers.

### Means to Solve the Problem

The present invention relates to a mobile communication system including a base station for specific subscribers and a base station, the base station for specific subscribers operating in a closed access mode setting corresponding to a closed access mode in which specific user equipments are allowed access and in a hybrid access mode setting corresponding to the closed access mode as well as an open access mode in which user equipments to be allowed access are not specified, the base station that does not specify a user equipment that makes access, wherein upon the base station for specific subscribers being installed outside a communication area of the base station that does not specify a user equipment that makes access, the base station for specific subscribers is caused to operate in the hybrid access mode setting.

### Effects of the Invention

According to the present invention, in a case where a base station for specific subscribers is installed outside the communication area of the base station that does not specify a user equipment that makes access, even a user equipment other than the specific user equipments can receive the service of a mobile communication system while suppressing costs in a communication area of the base station for specific subscribers.

### Brief Description of Drawings

- FIG. 1: is a diagram illustrating the configuration of an LTE communication system.
- FIG. 2: is a diagram illustrating the configuration of a radio frame used in the LTE communication system.
- FIG. 3: is a diagram illustrating the configuration of a multimedia broadcast multicast service single frequency network (MBSFN) frame.
- FIG. 4: is a diagram illustrating physical channels used in the LTE communication system.
- FIG. 5: is a diagram illustrating transport channels used in the LTE communication system.
- FIG. 6: is a diagram illustrating logical channels used in the LTE communication system.
- FIG. 7: is a block diagram showing the overall configuration of a mobile communication system currently under discussion of 3GPP.
- FIG. 8: is a block diagram showing the configuration of a user equipment 71 according to the present invention.
- FIG. 9: is a block diagram showing the configuration of a base station 72 according to the present invention.
- FIG. 10: is a block diagram showing the configuration of an MME according to the present invention.
- FIG. 11: is a block diagram showing the configuration of a HeNBGW according to the present invention.
- FIG. 12: is a flowchart showing an outline of cell search performed by a user equipment (UE) in the LTE communication system.
- FIG. 13: is a conceptual diagram showing the situation in which a CSG cell is installed within the coverage of a macro cell and received signal-to-interference ratio (SIR) at a user equipment in that situation.
- FIG. 14: is a conceptual diagram showing the situation in which a CSG cell is installed within the coverage of a plurality of (two in this case) macro cells and received signal-to-interference ratio (SIR) at a user equipment in that situation.
- FIG. 15: is a conceptual diagram of a method B of Non-Patent Document 7.
- FIG. 16: is a conceptual diagram of a solution of a first embodiment.
- FIG. 17: is a sequence diagram of a mobile communication system in a case of using a method (1) of selecting a cell to become a hybrid access mode, a method (1) of setting a hybrid access mode, and a method (1) of setting a carrier frequency of a HeNB/HNB in the first embodiment.
- FIG. 18: is a sequence diagram of a mobile communication system in a case of using a method (2) of selecting a cell to become a hybrid access mode, a method (2) of setting a hybrid access mode, and a method (3) of setting a carrier frequency of a HeNB/HNB in the first embodiment.
- FIG. 19: is a flow diagram showing a measurement operation of neighbor cells for cell search by a user equipment in the first embodiment.
- FIG. 20: shows a specific example in a case where the information of carrier frequencies are taken as indices of the carrier frequencies in a first modification of the first embodiment.
- FIG. 21: shows a specific example of the information in a case of allowing the recognition as to whether the carrier frequencies are used as carrier frequencies for CSG cells or carrier frequencies for macro cells in the first modification of the first embodiment.
- FIG. 22: is a flow diagram showing a measurement operation of neighbor cells for cell search by a user equipment in the first modification of the first embodiment.
- FIG. 23: is a conceptual diagram illustrating a problem of a second modification of the first embodiment.
- FIG. 24: is a flow diagram showing a measurement operation of neighbor cells for cell search by a user equipment in the second modification of the first embodiment.
- FIG. 25: is a conceptual diagram of a solution of a second embodiment.
- FIG. 26: is a flow diagram showing a measurement operation of neighbor cells for cell search by a user equipment in a first modification of the second embodiment.
- FIG. 27: is a conceptual diagram illustrating a problem of a second modification of the second embodiment.
- FIG. 28: is a flow diagram showing a measurement operation of neighbor cells for cell search by a user equipment in the second modification of the second embodiment.
- FIG. 29: is a conceptual diagram of a solution of a third embodiment.
- FIG. 30: is a conceptual diagram of a solution of a fourth embodiment.
- FIG. 31: is a flow diagram showing a measurement operation of neighbor cells for cell search by a user equipment in a first modification of the fourth embodiment.
- FIG. 32: is a conceptual diagram illustrating a problem of a second modification of the fourth embodiment.
- FIG. 33: is a flow diagram showing a measurement operation of neighbor cells for cell search by a user equipment in the second modification of the fourth embodiment.
- FIG. 34: is a conceptual diagram of a solution of a fifth embodiment.
- FIG. 35: is a flow diagram showing a measurement operation of neighbor cells for cell search by a user equipment in a first modification of the fifth embodiment.

### Embodiments for Carrying Out the Invention

### First Embodiment

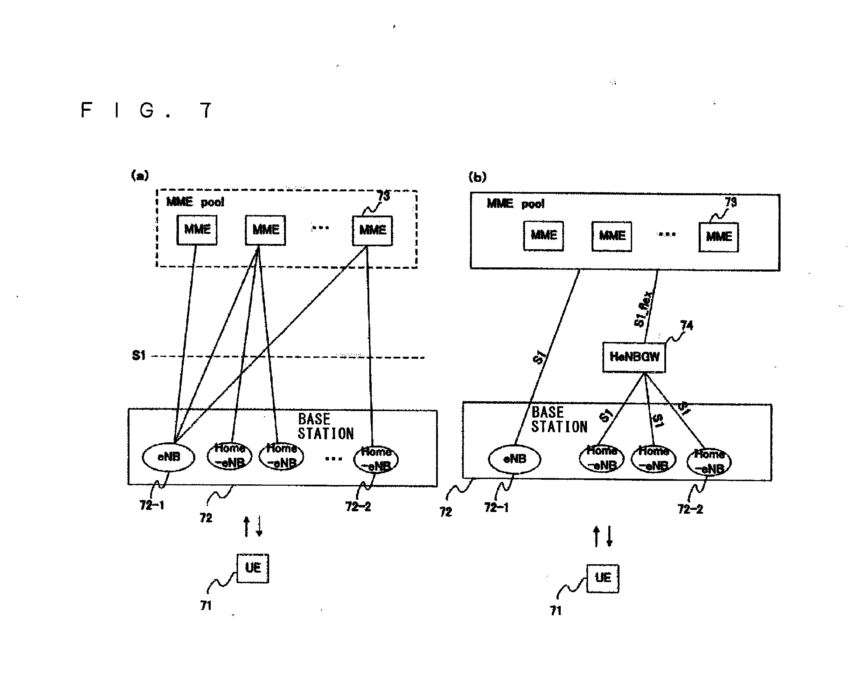

FIG. 7 is a block diagram showing an overall configuration of an LTE mobile communication system, which is currently under discussion of 3GPP. Currently, 3GPP is studying an overall system configuration including closed subscriber group (CSG) cells (Home-eNodeBs (Home-eNB and HeNB) of e-UTRAN, Home-NB (HNB) of UTRAN) and non-CSG cells (eNodeB (eNB) of e-UTRAN, NodeB (NB) of UTRAN, and BSS of GERAN) and, as to e-UTRAN, is proposing the configuration as shown in FIG. 7 (Chapter 4.6.1 of Non-Patent Document 1).

FIG. 7 is described. A user equipment (UE) 71 performs transmission/reception to/from a base station 72. The base stations 72 are classified into an eNB 72-1 and Home-eNBs 72-2. The eNB 72-1 is connected to MMEs 73 through S1 interfaces, and control information is communicated between the eNB and the MMEs. A plurality of MMEs 73 may be connected to one eNB 72-1. The eNBs are connected to each other by means of an X2 interface, and control information is communicated between the eNBs.

The Home-eNB 72-2 is connected to the MME 73 by means of the S1 interface, and control information is communicated between the Home-eNB and the MME. A plurality of Home-eNBs are connected to one MME. While, the Home-eNBs 72-2 are connected to the MMEs 73 through a Home-eNB Gateway (HeNBGW) 74. The Home-eNBs are connected to the HeNBGW by means of the S1 interfaces, and the HeNBGW 74 is connected to the MMEs 73 through an S1 interface. One or a plurality of Home-eNBs 72-2 are connected to one HeNBGW 74, and information is communicated therebetween through the S1 interface. The HeNBGW 74 is connected to one or a plurality of MMEs 73, and information is communicated therebetween through the S1 interface.

Further, 3GPP is currently studying the configuration below. The X2 interface between the Home-eNBs 72-2 is not supported. The HeNBGW 74 appears to the MME 73 as the eNB 72-1. The HeNBGW 74 appears to the Home-eNB 72-2 as the MME 73. The S1 interface between the Home-eNB 72-2 and the EPC is the same irrespective of whether or not the Home-eNB 72-2 is connected to the EPC through the HeNBGW 74. The mobility to the Home-eNB 72-2 or the mobility from the Home-eNB 72-2 that spans the MMEs 73 is not supported. The Home-eNB 72-2 supports a single cell.

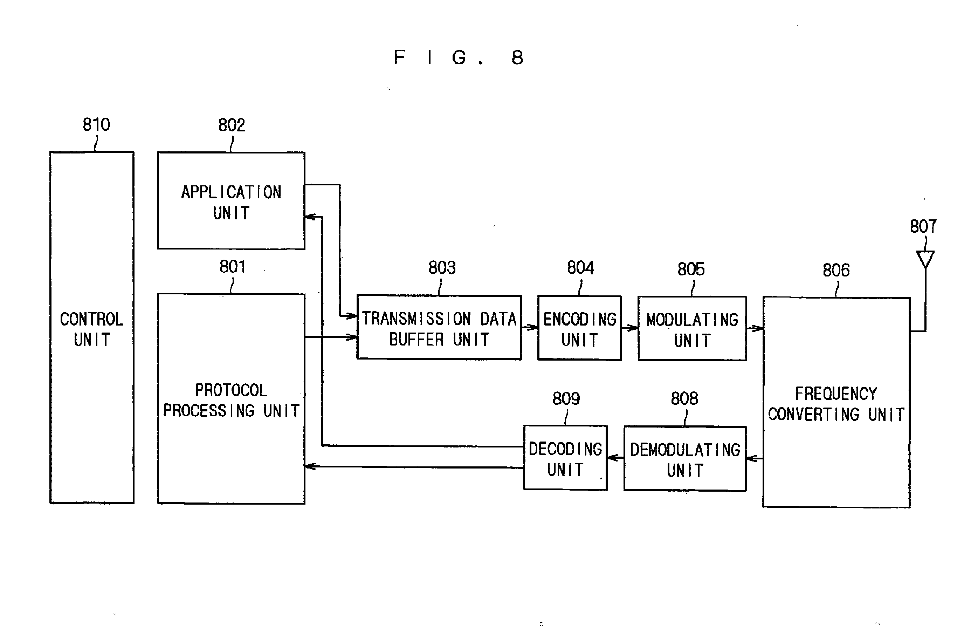

FIG. 8 is a block diagram showing the configuration of the user equipment (equipment 71 of FIG. 7) according to the present invention. The transmission process of the user equipment shown in FIG. 8 is described. First, a transmission data buffer unit 803 stores the control data from a protocol processing unit 801 and the user data from an application unit 802. The data stored in the transmission data buffer unit 803 is transmitted to an encoding unit 804 and is subjected to encoding process such as error correction.
There may exist data output from the transmission data buffer unit 803 directly to a modulating unit 805 without encoding process. The data encoded by the encoding unit 804 is modulated by the modulating unit 805. The modulated data is output to a frequency converting unit 806 after being converted into a baseband signal, and then is converted into a radio transmission frequency. After that, a transmission signal is transmitted from an antenna 807 to a base station 72. A user equipment 71 executes the reception process as follows. The antenna 807 receives the radio signal from the base station 72.
The received signal is converted from a radio reception frequency to a baseband signal by the frequency converting unit 806 and is then demodulated by a demodulating unit 808. The demodulated data is transmitted to a decoding unit 809 and is subjected to decoding process such as error correction. Among the pieces of decoded data, the control data is transmitted to the protocol processing unit 801, while the user data is transmitted to the application unit 802. A series of process of the user equipment is controlled by a control unit 810. This means that, though not shown, the control unit 810 is connected to the respective units (801 to 809).

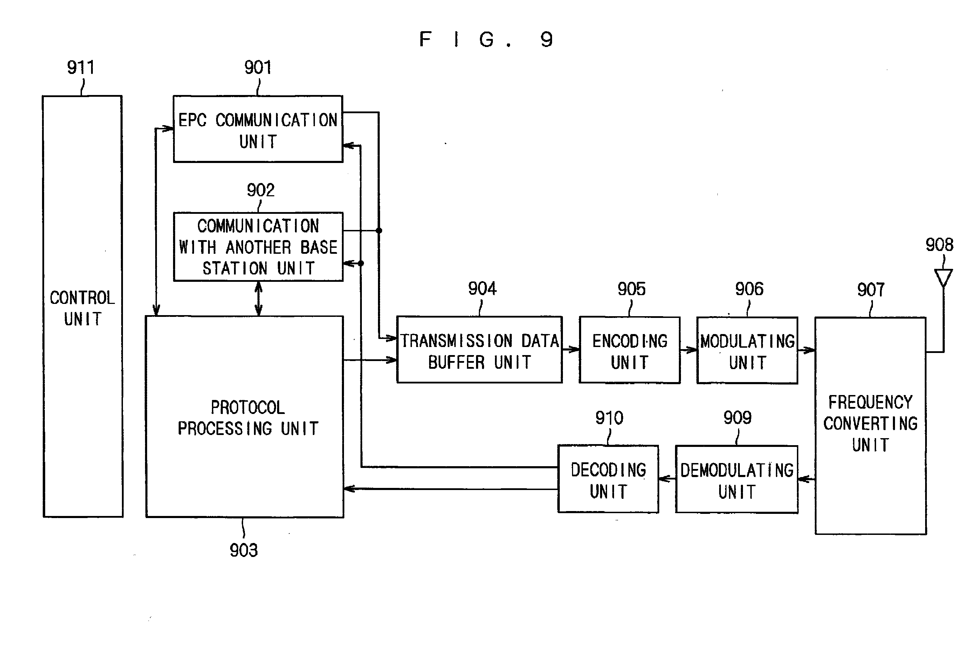

FIG. 9 is a block diagram showing the configuration of the base station (base station 72 of FIG. 7) according to the present invention. The transmission process of the base station shown in FIG. 9 is described. An EPC communication unit 901 performs data transmission/reception between the base station 72 and the EPCs (such as MME 73 and HeNBGW 74).
A communication with another base station unit 902 performs data transmission/reception to/from another base station.
The X2 interface between the Home-eNBs 72-2 is not intended to be supported, and accordingly, it is conceivable that the communication with another base station unit 902 may not exist in the Home-eNB 72-2. The EPC communication unit 901 and the communication with another base station unit 902 respectively transmit/receive information to/from the protocol processing unit 903. The control data from the protocol processing unit 903, and the user data and control data from the EPC communication unit 901 and the communication with another base station unit 902 are stored in the transmission data buffer unit 904.
The data stored in the transmission data buffer unit 904 is transmitted to an encoding unit 905 and is then subjected to encoding process such as error correction. There may exist the data output from the transmission data buffer unit 904 directly to a modulating unit 906 without encoding process. The encoded data is modulated by the modulating unit 906. The modulated data is output to a frequency converting unit 907 after being converted into a baseband signal, and is then converted into a radio transmission frequency.
After that, a transmission signal is transmitted from an antenna 908 to one or a plurality of user equipments 71. While, the reception process of the base station 72 is executed as follows. A radio signal from one or a plurality of user equipments 71 is received by the antenna 908. The received signal is converted from a radio reception frequency into a baseband signal by the frequency converting unit 907, and is then demodulated by a demodulating unit 909. The demodulated data is transmitted to a decoding unit 910 and is then subjected to decoding process such as error correction.
Among the pieces of decoded data, the control data is transmitted to the protocol processing unit 903, EPC communication unit 901, or communication with another base station unit 902, while the user data is transmitted to the EPC communication unit 901 and communication with another base station unit 902. A series of process by the base station 72 is controlled by a control unit 911. This means that, though not shown, the control unit 911 is connected to the respective units (901 to 910).

The functions of the Home-eNB 72-2 currently under discussion of 3GPP are described below (Chapter 4.6.2 of Non-Patent Document 1). The Home-eNB 72-2 has the same function as that of the eNB 72-1 and, further, has the following function in a case of connection to the HeNBGW 74. The Home-eNB 72-2 has a function of discovering a suitable serving HeNBGW 74. In a case where the Home-eNB 72-2 is connected to one HeNBGW 74 only, that is, in a case of connection to the HeNBGW 74, the Home-eNB 72-2 does not use the Flex function of the S1 interface.
When the Home-eNB 72-2 is connected to the HeNBGW 74, it is not simultaneously connected to another HeNBGW 74 or another MME 73. The TAC and PLMN ID used by the Home-eNB 72-2 are supported by the HeNBGW 74. When the Home-eNB 72-2 is connected to the HeNBGW 74, selection of the MME 73 at "UE attachment" is performed by the HeNBGW 74 instead of the Home-eNB 72-2. The Home-eNB 72-2 may be deployed without network planning. Accordingly, the Home-eNB 72-2 may be moved from one geographical area to another geographical area, and accordingly, may be required to be connected to a different HeNBGW 74 depending on its location.

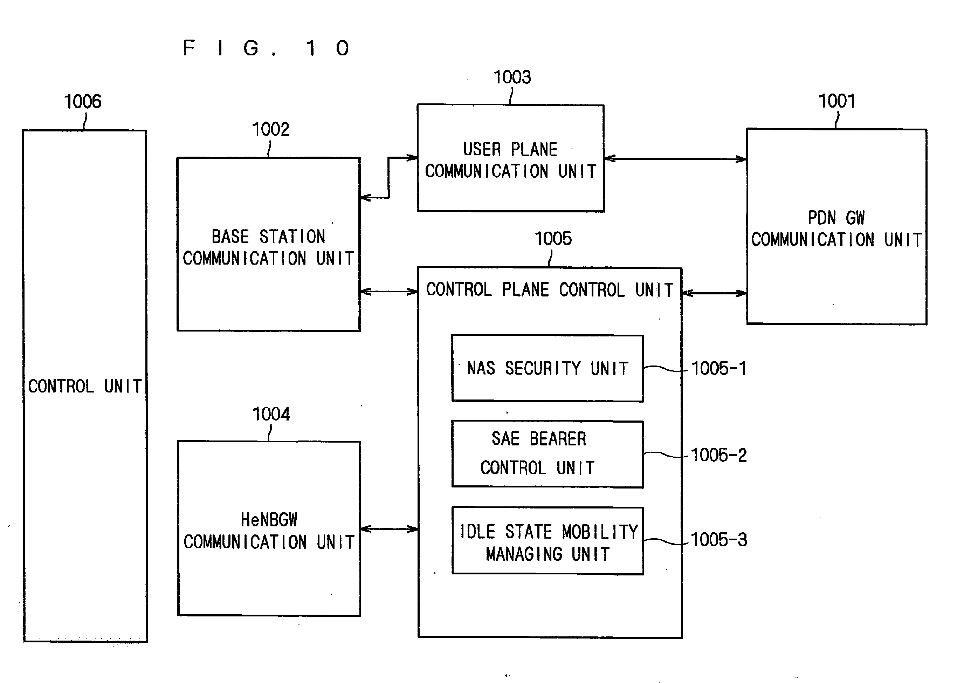

FIG. 10 is a block diagram showing the configuration of a mobility management entity (MME) according to the present invention. A PDN GW communication unit 1001 performs data transmission/reception between an MME 73 and a PDN GW. A base station communication unit 1002 performs data transmission/reception between the MME 73 and the base station 72 by means of the S1 interface. In the case where the data received from the PDN GW is user data, the user data is transmitted from the PDN GW communication unit 1001 to the base station communication unit 1002 through a user plane processing unit 1003 and is then transmitted to one or a plurality of base stations 72. In the case where the data received from the base station 72 is user data, the user data is transmitted from the base station communication unit 1002 to the PDN GW communication unit 1001 through the user plane processing unit 1003 and is then transmitted to the PDN GW.

In the case where the data received from the PDN GW is control data, the control data is transmitted from the PDN GW communication unit 1001 to a control plane control unit 1005. In the case where the data received from the base station 72 is control data, the control data is transmitted from the base station communication unit 1002 to the control plane control unit 1005. A HeNBGW communication unit 1004 is provided in the case where the HeNBGW 74 is provided, which performs data transmission/reception by means of the interface (IF) between the MME 73 and the HeNBGW 74 according to an information type. The control data received from the HeNBGW communication unit 1004 is transmitted from the HeNBGW communication unit 1004 to the control plane control unit 1005.
The processing results of the control plane control unit 1005 are transmitted to the PDN GW through the PDN GW communication unit 1001. The processing results of the control plane control unit 1005 are transmitted to one or a plurality of base stations 72 by means of the S1 interface through the base station communication unit 1002, and are transmitted to one or a plurality of HeNBGWs 74 through the HeNBGW communication unit 1004.

The control plane control unit 1005 includes a NAS security unit 1005-1, an SAE bearer control unit 1005-2 and an idle state mobility managing unit 1005-3, and performs overall process for the control plane. The NAS security unit 1005-1 provides, for example, security of a non-access stratum (NAS) message. The SAE bearer control unit 1005-2 manages, for example, a system architecture evolution (SAE) bearer.
The idle state mobility managing unit 1005-3 performs, for example, mobility management of an idle state (LTE-IDLE state, which is merely referred to as idle as well), generation and control of paging signaling in an idle state, addition, deletion, update and search of a tracking area (TA) of one or a plurality of user equipments 71 being served thereby, and TA list management. The MME begins a paging protocol by transmitting a paging message to the cell belonging to a tracking area (TA) in which the UE is registered. The idle state mobility managing unit 1005-3 may manage the CSG of the Home-eNBs 72-2 to be connected to the MME, CSG-IDs and a whitelist. In the CSG-ID management, the relationship between a user equipment corresponding to the CSG-ID and the CSG cell is managed (added, deleted, updated or searched).
For example, it may be the relationship between one or a plurality of user equipments whose user access registration has been performed with a CSG-ID and the CSG cells belonging to this CSG-ID. In the whitelist management, the relationship between the user equipment and the CSG-ID is managed (added, deleted, updated or searched). For example, one or a plurality of CSG-IDs with which user registration has been performed by a user equipment may be stored in the whitelist. The above-mentioned management related to the CSG may be performed by another part of the MME 73. A series of process by an MME 73 is controlled by a control unit 1006. This means that, though not shown, the control unit 1006 is connected to the respective units (1001 to 1005).

The function of the MME 73 currently under discussion of 3GPP is described below (Chapter 4.6.2 of Non-Patent Document 1). The MME 73 performs access control for one or a plurality of user equipments being members of closed subscriber groups (CSGs). The MME 73 recognizes the execution of paging optimization as an option.

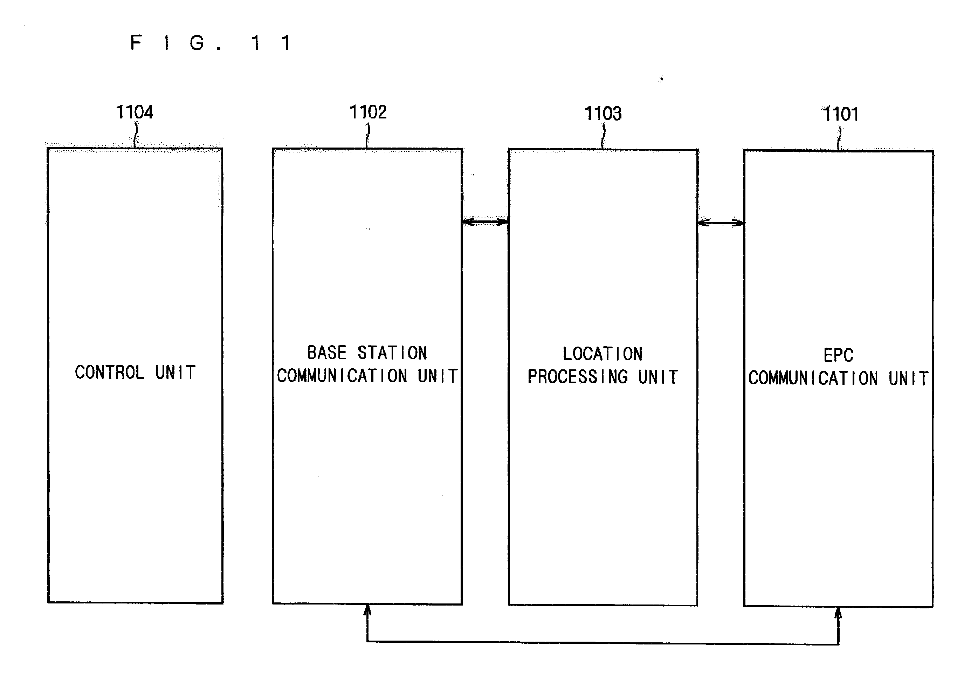

FIG. 11 is a block diagram showing the configuration of the HeNBGW according to the present invention. An EPC communication unit 1101 performs data transmission/reception between the HeNBGW 74 and the MME 73 by means of the S1 interface. A base station communication unit 1102 performs data transmission/reception between the HeNBGW 74 and the Home-eNB 72-2 by means of the S1 interface. A location processing unit 1103 performs the process of transmitting, to a plurality of Home-eNBs, the registration information or the like among the data transmitted from the MME 73 through the EPC communication unit 1101.
The data processed by the location processing unit 1103 is transmitted to the base station communication unit 1102 and is transmitted to one or a plurality of Home-eNBs 72-2 through the S1 interface. The data only caused to pass through (to be transparent) without requiring the process by the location processing unit 1103 is passed from the EPC communication unit 1101 to the base station communication unit 1102, and is transmitted to one or a plurality of Home-eNBs 72-2 through the S1 interface. A series of process by the HeNBGW 74 is controlled by a control unit 1104. This means that, though not shown, the control unit 1104 is connected to the respective units (1101 to 1103).

The function of the HeNBGW 74 currently under discussion of 3GPP is described below (Chapter 4.6.2 of Non-Patent Document 1). The HeNBGW 74 relays an S1 application. The HeNBGW 74 terminates the S1 application that is not associated with the user equipment 71 though it is a part of the procedures toward the Home-eNB 72-2 and towards the MME 73. When the HeNBGW 74 is deployed, the procedure that is not associated with the user equipment 71 is communicated between the Home-eNB 72-2 and the HeNBGW 74 and between the HeNBGW 74 and the MME 73. The X2 interface is not set between the HeNBGW 74 and another node. The execution of paging optimization is accepted as an option.

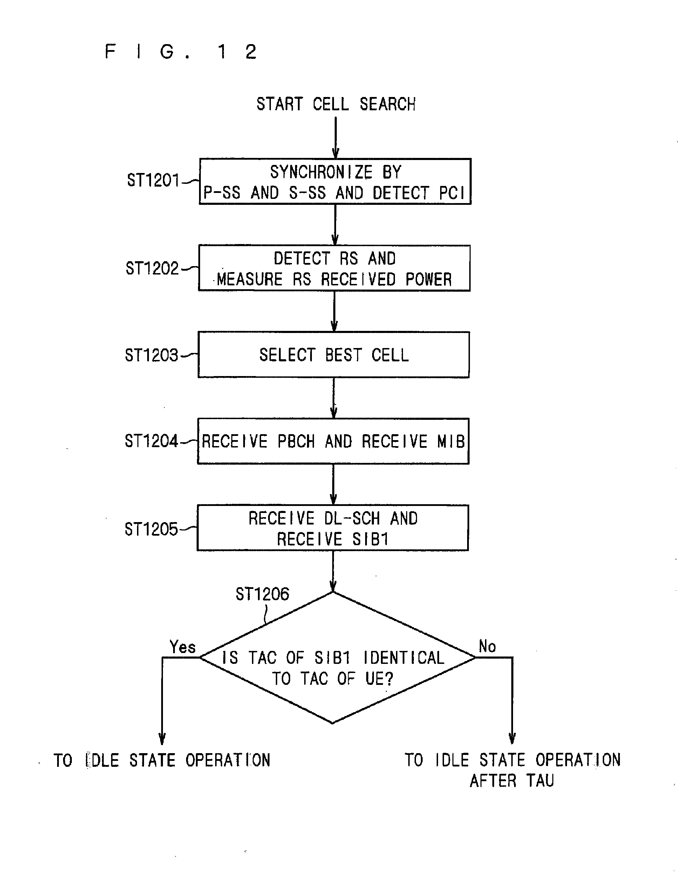

Next, an example of a typical cell search method in a mobile communication system is described. FIG. 12 is a flowchart showing an outline from cell search to idle state operation performed by a user equipment (UE) in the LTE communication system. When the cell search is started by the user equipment, in Step ST1201, the slot timing and frame timing are synchronized by a primary synchronization signal (P-SS) and a secondary synchronization signal (S-SS) transmitted from a nearby base station.
Synchronization codes, which correspond to physical cell identities (PCIs) assigned per cell one by one, are assigned to the synchronization signals (SS) including the P-SS and S-SS. The number of PCIs is currently studied in 504 ways, and these 504 ways are used for synchronization, and the PCIs of the synchronized cells are detected (specified). Next, in Step ST1202, a reference signal RS of the synchronized cells, which is transmitted from the base station per cell, is detected and the received power is measured.
The code corresponding to the PCI one by one is used for the reference signal RS, and separation from the other cells is enabled by correlation using the code. The code for RS of the cell is derived from the PCI specified in Step ST1201, which makes it possible to detect the RS and measure the RS received power. Next, in Step ST1203, the cell having the best RS reception quality (for example, cell having the highest RS received power; best cell) is selected from one or more cells that have been detected up to Step ST1202.
In Step ST1204, next, the PBCH of the best cell is received, and the BCCH that is the broadcast information is obtained. A master information block (MIB) containing the cell configuration information is mapped on the BCCH over the PBCH. Examples of the MIB information include the down link (DL) system bandwidth (also referred to as transmission bandwidth configuration (dl-bandwidth)), transmission antenna number and system frame number (SFN).

In Step ST1205, next, the DL-SCH of the cell is received based on the cell configuration information of the MIB, to thereby obtain a system information block (SIB) 1 of the broadcast information BCCH. The SIB1 contains the information regarding access to the cell, information related to cell selection and scheduling information of other SIB (SIBk; k is an integer equal to or larger than 2).
In addition, the SIB1 contains a tracking area code (TAC). In Step ST1206, next, the user equipment compares the TAC received in Step ST1205 with the TAC that has been already possessed by the user equipment. In a case where they are identical to each other as a result of comparison, the user equipment enters an idle state operation in the cell. In a case where they are different from each other as a result of comparison, the user equipment requires a core network (EPC) (including MME and the like) to change a TA through the cell for performing tracking area update (TAU).
The core network updates the TA based on an identification number (such as a UE-ID) of the user equipment transmitted from the user equipment together with a TAU request signal. The core network updates the TA, and then transmits the TAU accept signal to the user equipment. The user equipment rewrites (updates) the TAC (or TAC list) of the user equipment with the TAC of the cell. After that, the user equipment enters the idle state operation in the cell.

In the LTE and universal mobile telecommunication system (UMTS), the introduction of a closed subscriber group (CSG) cell is studied. As described above, access is allowed for only one or a plurality of user equipments registered with the CSG cell. One or a plurality of user equipments registered with the CSG cell constitute one CSG. A specific identification number referred to as CSG-ID is added to the thus constituted CSG. Note that one CSG may contain a plurality of CSG cells.
After being registered with any one of the CSG cells, the user equipment can access the other CSG cells of the CSG to which the registered CSG cell belongs. Alternatively, the Home-eNB in the LTE or the Home-NB in the UMTS is used as the CSG cell in some cases. The user equipment registered with the CSG cell has a whitelist. Specifically, the whitelist is stored in the SIM/USIM. The CSG information of the CSG cell with which the user equipment has been registered is listed in the whitelist.
Specific examples of the CSG information include CSG-ID, tracking area identity (TAI) and TAC. Any one of the CSG-ID and TAC is adequate as long as they are associated with each other. Alternatively, GCI is adequate as long as the CSG-ID, TAC and global cell identity (GCI) are associated with each other. As can be seen from the above, the user equipment which does not have a whitelist (including a case where the whitelist is empty in the present invention) is not allowed that makes access the CSG cell but is allowed that makes access only the non-CSG cell. On the other hand, the user equipment which has a whitelist is allowed that makes access the CSG cell of the CSG-ID with which registration has been performed as well as the non-CSG cell.

3GPP discusses that all physical cell identities (PCIs) are split (referred to as PCI-split) into ones reserved for CSG cells and the others reserved for non-CSG cells (Non-Patent Document 5). Further, 3GPP discusses that the PCI split information is broadcast in the system information from the base station to the user equipments being served thereby.
Disclosed here is the basic operation of a user equipment by PCI split. The user equipment that does not have the PCI split information needs to perform cell search using all PCIs (for example, using all 504 codes). On the other hand, the user equipment that has the PCI split information is capable of performing cell search using the PCI split information.
Further, 3GPP has determined that the PCIs for hybrid cells are not contained in the PCI range for CSG cells (Chapter 10.7 of Non-Patent Document 1).

3GPP allows temporary CSG members. A temporary member is also referred to as a temporary member or visitor. It is possible to configure a time period for a temporary member to be considered as a CSG member (Non-Patent Document 6).

In 3GPP, there are two modes in the method of selecting or reselecting a CSG cell by a user equipment. One is an automatic mode. The feature of the automatic mode is described below. The user equipment performs selection or reselection with the use of an allowed CSG ID list in the user equipment. After the completion of PLMN selection, the user equipment camps on one cell in the selected PLMN only in a case of a non-CSG cell or a CSG cell with a CSG ID present in the allowed CSG list. The user equipment disables an autonomous search function of the CSG cell if the allowed CSG list of the user equipment is empty (Chapter 5.2.4.8.1 of Non-Patent Document 3).

The second is a manual mode. The feature of the manual mode is described below. The user equipment shows a list of available CSGs in the currently selected PLMN. The list of CSGs provided to the user by the user equipment is not limited to the CSGs included in the allowed CSG list stored in the user equipment. The user selects the CSG based on the list of CSGs, and then the user equipment camps on the cell with the selected CSG ID, to thereby attempt registration (Chapter 5.2.4.8.1 of Non-Patent Document 3).

The HeNB and HNB are required to support various types of service. For example, an operator causes the predetermined HeNB and HNB to register user equipments therein and permits only the registered user equipments to make access the cells of the HeNB and HNB, so that the user equipments increase the available radio resources for performing high-speed communication. In such service, the operator correspondingly sets a higher accounting fee compared with normal service. In order to achieve the above-mentioned service, the CSG (closed subscriber group cell) cell accessible only to the registered (subscribed or member) user equipments is introduced.
It is required to install a large number of CSG (closed subscriber group cell) cells in shopping malls, apartment buildings, schools, companies and the like. For example, the CSG cells are required to be installed for each store in shopping malls, for each room in apartment buildings, for each classroom in schools, and for each section in companies in such a manner that only the users who have registered the respective CSG cells are permitted to use those CSG cells. The HeNB/HNB is required not only to complement the communication outside the coverage of the macro cell but also to support various types of service as described above.
This leads to a case where the HeNB/HNB is installed within the coverage of the macro cell. In the case where the HeNB/HNB is installed within the coverage of the macro cell, interference occurs between the HeNB/HNB and the macro cell. For the user equipment communicating with the HeNB/HNB within the coverage of the HeNB/HNB, the communication with the HeNB/HNB is hindered due to the interference of a radio wave from the macro cell, leading to a situation in which communication cannot be made if the interference power increases.
On the other hand, in a case where the user equipment communicating with the macro cell within the coverage of the macro cell moves into the coverage of the HeNB/HNB installed within the coverage of the macro cell, communication with the macro cell is hindered due to the interference of a radio wave from the HNB/HeNB, leading to a situation in which communication cannot be made if the interference power increases.

Generally, in a case where the interference power from the other cell increases within the coverage of a cell, the user equipment is configured to perform handover (HO) or cell reselection to the other cell or other suitable cell for preventing disconnection of communication. In a case where the user equipment cannot perform handover or cell reselection to such a cell, however, the interference power from the other cell increases, leading to a problem that communication is disconnected.
For example, as described above, 3GPP studies the case where the HNB/HeNB is the CSG cell in a closed access mode. Considering that the CSG cell is installed within the coverage of the macro cell, interference occurs between the macro cell and the CSG cell within the CSG coverage as described above. Such a case leads to a problem that the user equipment that has not performed user registration with the CSG cell cannot communicate with the macro cell due to the interference from the CSG cell.

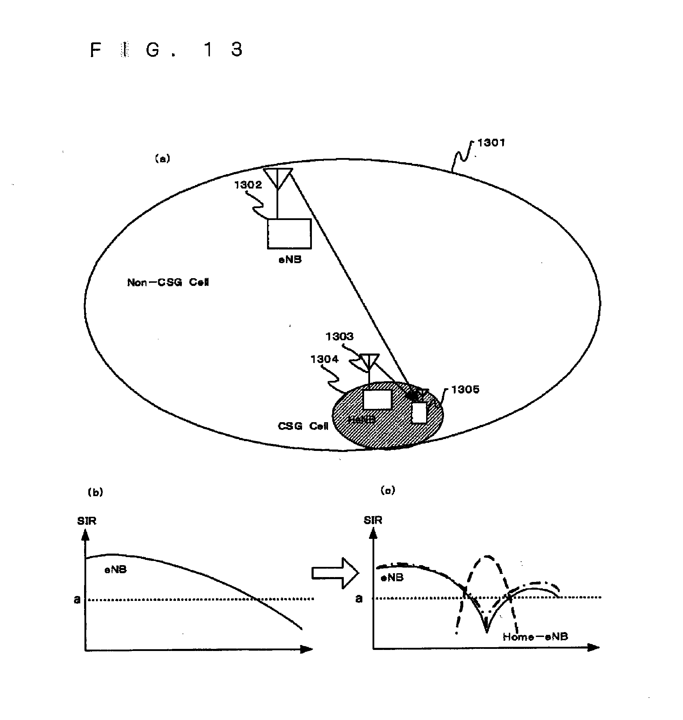

FIG. 13 is a conceptual diagram showing the situation in which a CSG cell is installed within the coverage of a macro cell and received signal-to-interference ratio (SIR) at the user equipment in that situation. In a case where a CSG cell 1303 is installed within a coverage 1301 of a macro cell 1302 and a user equipment 1305 communicating with the macro cell 1302 within the macro cell coverage 1301 moves into a coverage 1304 of the CSG cell 1303 installed in the macro cell coverage 1301 as shown in FIG. 13(a), a radio wave from the CSG cell 1303 becomes interference, which hinders the communication with the macro cell 1302.
FIG. 13(b) shows the SIR at the user equipment before the HeNB (corresponding to the CSG cell 1303) is installed, while FIG. 13(c) shows the SIR of the user equipment in a case where the HeNB 1303 is installed. A horizontal axis represents the distance from the base station (eNB) (corresponding to the macro cell 1302) of the macro cell and a vertical axis represents SIR. It is regarded that the user equipment has not performed user registration with the CSG.
As shown in FIG. 13(b), in the case where the HeNB is not installed, the SIR decreases as the user equipment goes apart from the eNB. Communication is enabled in a case where the SIR is larger than a threshold a and is not enabled in a case where the SIR is smaller than the threshold a. As shown in FIG. 13(c), in a case where the HeNB 1303 is installed within the coverage of the eNB (corresponding to the macro cell 1302), the radio wave from the HeNB 1303, which is represented by a broken line, is intensified in the vicinity of the HeNB 1303.
This radio wave from the HeNB 1303 becomes interference for the user equipment communicating with the eNB 1302, and the SIR from the eNB 1302 degrades considerably in the vicinity of the HeNB. This leads to a case where the SIR of the user equipment is smaller than the threshold a in the vicinity of the HeNB. The signal-to-interference ratio (SIR) received at the user equipment is represented by a broken line. Although the user equipment attempts to perform handover or cell reselection to the HeNB 1303, handover cannot be made and communication is disconnected because the HeNB 1303 is a CSG cell in a closed access mode and the user equipment 1305 has not been registered with the CSG.

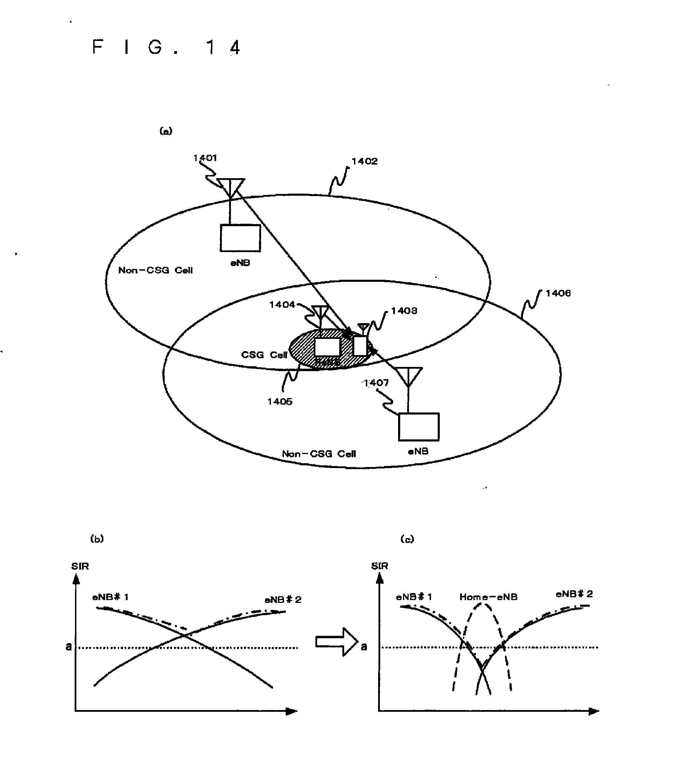

FIG. 14 is a conceptual diagram showing the situation in which a CSG cell 1404 is installed within the coverages 1402 and 1406 of a plurality of (two in this case) macro cells 1401 and 1407 and the received signal-to-interference ratio (SIR) at the user equipment in that situation. As shown in FIG. 14(a), in a case where the CSG cell 1404 is installed within the coverages 1402 and 1406 of the two macro cells 1401 and 1407, and a user equipment 1403 communicating with the macro cell 1401 or 1407 within the macro cell coverages 1402 and 1406 moves into the coverage of the CSG cell 1404 installed in the macro cell coverage 1405, the radio wave from the CSG cell 1404 becomes interference, which hinders the communication with the macro cells 1401 and 1407.
FIG. 14(b) shows the SIR at the user equipment 1403 before the HeNB is installed, while FIG. 14(c) shows the SIR at the user equipment 1403 in a case where the HeNB is installed. It is regarded that the user equipment has not performed user registration with the CSG. As shown in FIG. 14(b), in the case where the HeNB is not installed, the SIR decreases as the user equipment goes apart from an eNB#1 (for example, corresponding to the macro cell 1401). The radio wave from an eNB#2 (for example, corresponding to the macro cell 1407) is intensified in the middle, and the user equipment performs handover or cell reselection to the eNB#2 before the SIR due to a radio wave from the eNB#1 falls below the threshold a.
The signal-to-interference ratio (SIR) received at the user equipment is represented by a broken line. On the other hand, in a case where the HeNB 1404 is installed within the coverages of two cells 1401 and 1407 (eNB#1 and eNB#2 in FIG. 14(c)) as shown in FIG. 14(c), the radio wave from the HeNB, which is represented by a broken line, is intensified in the vicinity of the HeNB. Accordingly, this radio wave from the HeNB becomes interference for the user equipment communicating with the eNB#1 or eNB#2, and the SIR from the eNB#1 or eNB#2 degrades considerably in the vicinity of the HeNB. This leads to a case where the SIR of the user equipment is smaller than the threshold a in the vicinity of the HeNB. The signal-to-interference ratio (SIR) received at the user equipment is represented by a broken line.

In the case where the SIR of the user equipment 1403 is smaller than the threshold a in the vicinity of the HeNB, the user equipment communicating with the eNB#1 attempts to perform handover or cell reselection to the eNB#2. However, the SIR of the eNB#2 also falls below the threshold a, and thus handover or cell reselection is not allowed.
Further, while the user equipment 1403 attempts to perform handover or cell reselection to the HeNB 1404, access cannot be made because the HeNB is the CSG cell in a closed access mode, and the user equipment 1403 has not been registered with the CSG, whereby handover or cell reselection is not allowed. Therefore, communication is disconnected.

It is described in the example above that a problem occurs in a case where the user equipment communicating with the macro cell (eNB) cannot perform handover to the CSG cell. Similarly in a case where the user equipment communicating with the CSG cell cannot perform handover to the macro cell (eNB), a problem arises that communication is disconnected.

3GPP is studying the solutions for the above-mentioned interference problem (Non-Patent Document 7). Non-Patent Document 7 describes five methods from A to E. In the method A, the HeNB/HNB is a CSG member, uses a dedicated channel and has fixed power. In the method B, the HeNB/HNB is a CSG member, uses a dedicated channel and has adaptive power. In the method C, the HeNB/HNB is a CSG member, uses a co-channel and has adaptive power.
In the method D, the HeNB/HNB is a CSG member and uses a partial co-channel. In the method E, the HeNB/HNB operates in an open access mode and uses a dedicated channel or co-channel. On the dedicated channel, the HeNB/HNB uses a dedicated frequency different from that of the macro cell (NB or eNB). On the co-channel, the HeNB/HNB uses the same frequency as that of the macro cell (NB or eNB). On the partial co-channel, the frequency used by the HeNB/HNB is part of the frequency used by the macro cell (NB or eNB).

The present invention further discusses the case where the method A or method B of Non-Patent Document 7 is used as a solution for the above-mentioned interference problem when a HeNB/HNB is installed within a macro cell coverage.

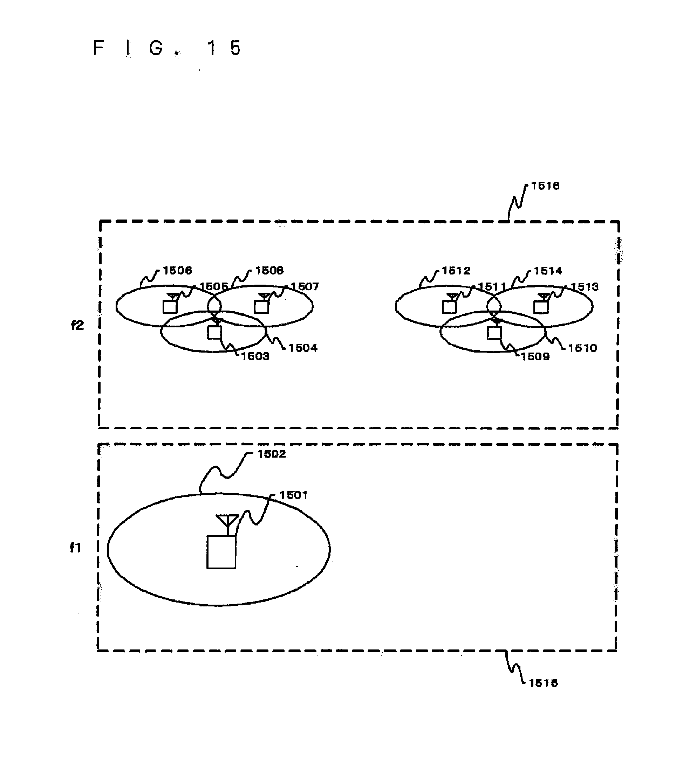

FIG. 15 is a conceptual diagram of the method B of Non-Patent Document 7. A HeNB/HNB 1503, a HeNB/HNB 1505 and a HeNB/HNB 1507 are installed in a coverage 1502 of a macro cell 1501. The coverage of the HeNB/HNB 1503 is represented by 1504. The coverage of the HeNB/HNB 1505 represented by 1506. The coverage of the HeNB/HNB 1507 is represented by 1508. Further, a HeNB/HNB 1509, a HeNB/HNB 1511 and a HeNB/HNB 1513 are installed outside the coverage of the macro cell (outside the communication area). The coverage of the HeNB/HNB 1509 is represented by 1510.
The coverage of the HeNB/HNB 1511 is represented by 1512. The coverage of the HeNB/HNB 1513 is represented by 1514. The HeNB/HNB 1503, HeNB/HNB 1505, HeNB/HNB 1507, HeNB/HNB 1509, HeNB/HNB 1511 and HeNB/HNB 1513 operate in a closed access mode.
The frequency used in the macro cell 1501 is a carrier frequency (f1) for a macro cell. A carrier frequency layer for a macro cell is represented by 1515.
The carrier frequency used in the HeNB/HNB 1503, HeNB/HNB 1505, HeNB/HNB 1507, HeNB/HNB 1509, HeNB/HNB 1511 and HeNB/HNB 1513 is a carrier frequency (f2) for CSG cells. The carrier frequency layer for CSG cells is denoted by 1516.
The HeNB/HNB 1503, HeNB/HNB 1505 and HeNB/HNB 1507 are installed within the coverage 1502 of the macro cell 1501, and thus an interference problem occurs as described with reference to FIG. 13 and FIG. 14 if the macro cell 1501, HeNB/HNB 1503, HeNB/HNB 1505 and HeNB/HNB 1507 operate at the same frequency.
In FIG. 15, however, an interference problem does not occur because the macro cell (1501) and the HeNBs/HNBs (1503, 1505 and 1507) operate at different frequencies.

Discussed here is a case where the HeNBs/HNBs (1503, 1505 and 1507 of FIG. 15) are installed within the coverage (1502 of FIG. 15) of the macro cell (1501 of FIG. 15) in a case where the method A or method B of Non-Patent Document 7 is used. The carrier frequency (f1) of the macro cell (1501 of FIG. 15) differs from the carrier frequency (f2) of the HeNB/HNB cells (1503, 1505 and 1507 of FIG. 15), and thus an interference problem is avoided, and it is not required to make the HeNB/HNB cells support an open access mode as a measure against interference. Further, even a user equipment that has not been registered with the CSG to which the HeNB/HNB cells belong can receive the service of a mobile communication system in a location in which the HeNB/HNB cells are installed. This is because such a user equipment is within the coverage (1502 of FIG. 15) of the macro cell (1501 of FIG. 15).
Meanwhile, a case where the HeNBs/HNBs (1509, 1511 and 1513 of FIG. 15) are installed outside the coverage of the macro cell (1501 of FIG. 15) when using the method A or method B of Non-Patent Document 7 is discussed. The HeNBs/HNBs are installed outside the coverage of the macro cell, and thus an interference problem does not occur. However, a user equipment that has not been registered with the CSG to which the HeNBs/HNBs belong cannot receive the service of a mobile communication system in a location in which the HeNB/HNB cells are installed. This is because the user equipment is outside the coverage of the macro cell (1501 of FIG. 15).

As described above, there arises a problem that a user equipment that has not been registered with the CSG cannot receive the service of a mobile communication system in a location in which HeNBs/HNBs cell operating in a closed mode are installed outside the coverage of a macro cell.
A conventional solution is described below. If a macro cell is installed in that location, that location is within the coverage of the macro cell, and a user equipment that has not been registered with the CSG can also receive the service of a mobile communication system in that location. However, it is considerably costly to install a macro cell.
The present invention solves the above-mentioned new problem. That is, the present invention discloses a method of solving a problem that in a case where HeNBs/HNBs operating in a closed access mode operate using the carrier frequency for a CSG cell, a user equipment that has not been registered with the CSG to which the HeNBs/HNBs belong cannot receive the service of a mobile communication system in the location in which the HeNBs/HNBs are installed outside the coverage of a macro cell, while suppressing cost.

The solution in the first embodiment is disclosed below. In a mobile communication system in which a carrier frequency for a CSG cell is provided, the access mode of the HeNB/HNB is a hybrid access mode. Meanwhile, the access mode of the HeNB/HNB is a hybrid access mode in a case where the carrier frequency for a macro cell differs from the carrier frequency for a CSG cell.
All HeNBs/HNBs installed outside the coverage of a macro cell may become a hybrid access mode. Alternatively, part of the HeNBs/HNBs installed outside the coverage of a macro cell may become the hybrid access mode. In the case where part of the HeNBs/HNBs becomes the hybrid access mode, the required HeNBs/HNBs may become the hybrid access mode. Specific examples of the required cells include cells installed outside the coverage of a macro cell, from which a user equipment that has not been registered with a CSG to which the HeNBs/HNBs within the coverage of the HeNBs/HNBs belong receives the service of a mobile communication system.
The carrier frequency of the HeNB/HNB operating in the hybrid access mode is set to a carrier frequency for a CSG cell. Alternatively, the carrier frequency of the HeNB/HNB that operates in the hybrid access mode may be a frequency different from the carrier frequency for a macro cell.
The carrier frequency for a CSG cell is also referred to as a CSG dedicated channel, CSG dedicated frequency, CSG dedicated carrier or CSG dedicated frequency layer. The carrier frequency for a CSG cell may be a frequency included in the frequency band for a CSG cell. The carrier frequency for the CSG cell may indicate the frequency band for a CSG cell. Further, the carrier frequency for a CSG cell may indicate a partial frequency band included in the frequency band for a CSG cell. The carrier frequency for a CSG cell may be a frequency different from the macro cell dedicated frequency. The carrier frequency for a CSG cell may be a frequency that is not included in the frequency band dedicated to a macro cell.
The carrier frequency for a macro cell is also referred to as a macro dedicated channel, macro dedicated frequency, macro dedicated carrier or macro dedicated frequency layer. The carrier frequency for a macro cell may be a frequency included in the frequency band for a macro cell. The carrier frequency for a macro cell may indicate the frequency band for a macro cell.
Further, the carrier frequency for a macro cell may indicate a partial frequency band included in the frequency band for a macro cell. The carrier frequency for a macro cell may be a frequency different from the CSG dedicated frequency. The carrier frequency for a macro cell may be a frequency that is not included in the band dedicated to a CSG cell.
Systems such as UTRA, LTE and LTE-A are designed such that an operation is allowed at a frequency band (also merely referred to as band on occasions) consisting of some successive frequencies in uplink as well as downlink. Each of those frequency bands is also referred to as a frequency band in some cases.

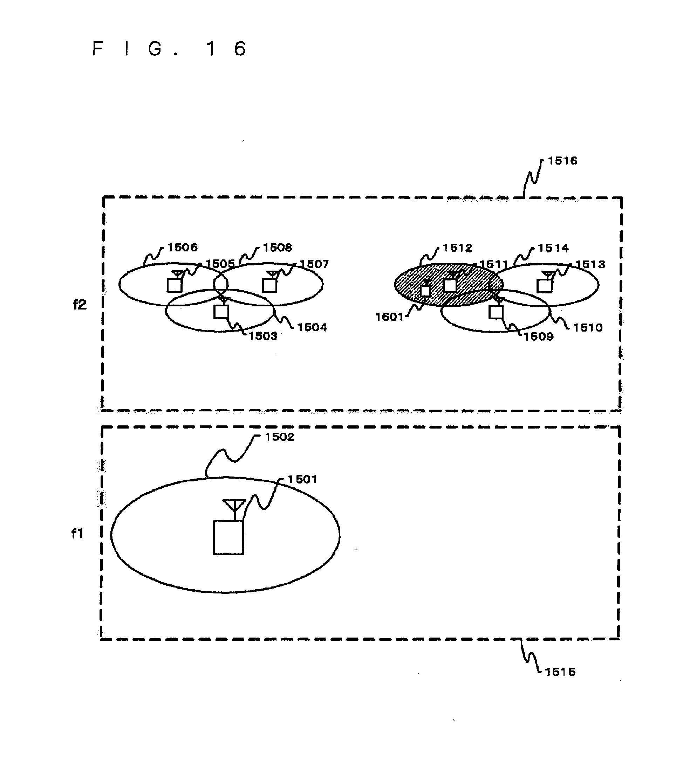

FIG. 16 is a conceptual diagram of the solution of the first embodiment. The same reference numerals as those of FIG. 15 denote the corresponding portions, which are not described. A location at which a base station is installed or a location of a user equipment is shown horizontally, and a frequency layer is shown vertically. For example, a user equipment 1601 is present outside the coverage of the macro cell.
The HeNB/HNB 1509, HeNB/HNB 1511 and HeNB/HNB 1513 are installed outside the coverage of the macro cell and operate in a closed access mode. The user equipment 1601 has not been registered with the CSG to which the HeNB/HNB 1511 belongs. Meanwhile, the user equipment 1601 needs to receive the service of a mobile communication system. Considered here is the case where the user equipment 1601 is located within the coverage 1512 of the HeNB/HNB 1511.
In the solution of the first embodiment, the access mode of the HeNB/HNB 1511 is a hybrid access mode. As a result, the coverage 1512 of the HeNB/HNB 1511 is an area supporting an open access mode, which is diagonally hatched in FIG. 16. The carrier frequency of the HeNB/HNB 1511 is the carrier frequency for a CSG cell. In FIG. 16, the carrier frequency of the HeNB/HNB 1511 is f2.

As the method of selecting a cell to become a hybrid access mode, a service provider or operator may select an area in which it wants to provide the communication service to user equipments other than specific user equipments and may judge that the access mode of the HeNB/HNB installed in the area needs to be hybrid. Alternatively, four specific examples of the method of selecting a HeNB/HNB operating in a closed access mode, whose access mode needs to be hybrid, in which the judgment by a service provider or the like is not required are disclosed below.
(1) A core network (EPC, including MME or the like) judges that in a case of rejecting a tracking area update (TAU) request by a user equipment, which has been transmitted via a HeNB/HNB operating in a closed access mode, the access mode of the HeNB/HNB needs to be hybrid. Alternatively, in a case of rejecting a tracking area update (TAU) request by the user equipment, which has been transmitted via a HeNB/HNB operating in a closed access mode, for the reason that the user equipment has not been registered with a CSG to which the HeNB/HNB belongs, the core network may judge that the access mode of the HeNB/HNB needs to be hybrid.
(2) A base station operating in a closed access mode judges that the access mode needs to be hybrid in a case of rejecting an RRC connection request by the user equipment. Alternatively, in a case of rejecting an RRC connection request by a user equipment for the reason that the user equipment has not been registered with the CSG to which the HeNB/HNB belongs, the base station operating in a closed access mode may judge that the access mode needs to be hybrid.
(3) A core network judges whether being within the coverage of a macro cell or outside the coverage of a macro cell from the location information of the HeNB/HNB operating in a closed access mode. If the location information of a HeNB/HNB operating in a closed access mode is outside the coverage of a macro cell, the core network judges that the access mode of the HeNB/HNB needs to be hybrid. Meanwhile, if the location information of a HeNB/HNB operating in a closed access mode is within the coverage of a macro cell, the core network may judge that the access mode of the HeNB/HNB does not need to be hybrid.
(4) A base station operating in a closed access mode measures the situation of neighbor cells, to thereby judge whether being within the coverage of a macro cell or outside the coverage of a macro cell. In the case of being outside the coverage of a macro cell, the base station judges that the access mode needs to be hybrid. Meanwhile, in the case of being within the coverage of a macro cell, the base station may judge that the access mode does not need to be hybrid.
   Meanwhile, as a specific example of the method of selecting a cell in which the setting of a hybrid access mode is released, a service provider or operator selects an area in which it is not required to provide communication service to user equipments other than specific user equipments, and if the access mode of the HeNB/HNB installed in the area is a hybrid access mode, releases the setting of the access mode. The hybrid access mode may be changed to a closed access mode.

Two specific examples of the method of setting a hybrid access mode are disclosed below. (1) A core network instructs a HeNB/HNB to set an access mode to hybrid. The setting may be instructed by means of an S1 interface. Alternatively, in a case of using the method (1) of selecting a cell to become a hybrid access mode, a reject for the TAU (TAU reject) may be notified and, at the same time, the setting mode of the access mode may be instructed. In that case, the setting contents of the access mode may be the information elements of the TAU reject notification message.
This enables to notify the TAU reject and instruct the setting of an access mode by one transmission of a message, leading to an effect that a processing load is reduced. Alternatively, the TAU reject notification may also serve to instruct the setting of a hybrid access mode. This leads to an effect that information does not need to be newly added. (2) The HeNB/HNB sets an access mode to hybrid independently without an instruction from a core network.

Three specific examples of the method of setting the carrier frequency of a HeNB/HNB are disclosed. (1) The core network instructs the setting of a carrier frequency every time it instructs a HeNB/HNB to set an access mode. This enables to set a carrier frequency with a high degree of freedom and achieve an effect that a mobile communication system capable of flexibly adopting to a change of a radio environment can be constructed. The setting of a carrier frequency with a high degree of freedom refers to, for example, in a case where there are a plurality of carrier frequencies for CSG cells, the setting of a carrier frequency from a plurality of carrier frequencies by a network every time an access mode is set to a hybrid mode, or every time an access mode is set for each CSG cell. The setting may be instructed by means of an S 1 interface. Alternatively, in a case of using the method (1) of selecting a cell to become a hybrid access mode, the setting of a carrier frequency may be instructed simultaneously with the notification of the reject (TAU reject) for the TAU request. In that case, the setting contents of a carrier frequency may be taken as the information elements of the reject notification massage for the TAU request. Accordingly, it is possible to notify the TAU reject and instruct the setting of a carrier frequency by one transmission of a message, leading to an effect that a processing load is reduced. In a case of using the method (1) of setting a hybrid access mode, the setting of a carrier frequency may be instructed simultaneously with the setting of the access mode. It is possible to receive the control information related to a HeNB/HNB, leading to effects of reductions in the processing load and processing delay.
(2) The core network instructs a HeNB/HNB to set a carrier frequency for each access mode in advance. The setting may be instructed by means of an S1 interface. The HeNB/HNB stores the carrier frequency for each access mode. In a case where an access mode is set, the HeNB/HNB selects a carrier frequency corresponding to an access mode. The setting method (2) is capable of reducing the setting frequency compared with the setting method (1) and achieving effects of reductions in the processing load and processing delay as a mobile communication system.
(3) A carrier frequency for each access mode is set in a static manner and is stored in a storage area (such as CPU, memory or SIM card) of a HeNB/HNB. Alternatively, a carrier frequency for each access mode may be determined in a static manner. In the case where an access mode is set, the HeNB/HNB selects a carrier frequency corresponding to an access mode.
   The setting method (3) does not need to instruct the setting of the carrier frequency of a HeNB/HNB by a core network differently from the setting methods (1) (2), leading to effects of reductions in the processing load and processing delay as a mobile communication system. Further, it is not necessary to provide new setting, leading to an effect that a mobile communication system can be prevented from becoming complicated.
   Note that it is possible to freely combine the four specific examples of the method of selecting a cell to become a hybrid access mode without requiring the judgment by a service provider or the like, the two specific examples of the method of setting a hybrid access mode, and the three specific examples of the method of setting the carrier frequency of a HeNB/HNB.

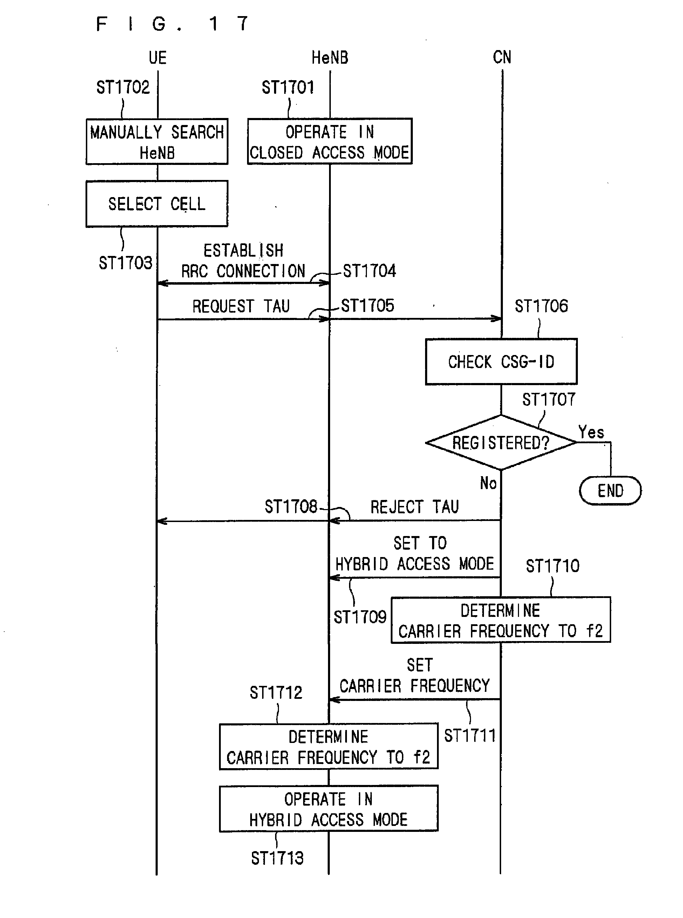

A specific operation example in a case where the method (1) of selecting a cell to become a hybrid access mode, the method (1) of setting a hybrid access mode, and the method (1) of setting the carrier frequency of a HeNB/HNB are used is described with reference to FIG. 17.
For example, as shown in FIG. 16, the macro cell 1501 and the HeNBs/HNBs 1503, 1505, 1507, 1509, 1511 and 1513 are installed, and the user equipment 1601 is present within the coverage 1512 of the HeNB/HNB 1511. The HeNBs/HNBs 1503, 1505, 1507, 1509, 1511 and 1513 operate in a closed access mode. The user equipment 1601 has not been registered with the CSG to which the HeNB/HNB 1511 belongs.
In Step ST1701, the HeNB/HNB 1511 operates in a closed access mode. In Step ST1702, a user of the user equipment 1601 executes the manual search for a HeNB. In Step ST1703, the user equipment 1601 performs a measurement operation of neighbor cells for cell search, to thereby perform cell search and cell selection. In this operation example, the user equipment 1601 is present within the coverage 1512 of the HeNB/HNB 1511, and thus selects the HeNB/HNB 1511.

Whether or not the CSG cell selected as a cell is a CSG cell where user access has been registered, a user equipment is allowed to establish RRC connection to the CSG cell and transmit a TAU request to the network through the CSG cell. Therefore, in Step ST1704, the user equipment 1601 transmits an RRC connection request to a CSG cell (in this case, HeNB/HNB 1511) where registration has not been made, and the HeNB/HNB 1511 that has received the RRC connection request transmits an allowance for this connection request to the user equipment 1601, so that RRC connection is established between the user equipment 1601 and the HeNB/HNB 1511.
In Step ST1705, the user equipment 1601 is prepared to transmit a TAU request message to the core network through the CSG cell (HeNB/HNB 1511) where registration has not been made. In this case, a user equipment transmits a user equipment identification number as well. The user equipment identification number may be included in a TAU request message, may be transmitted together with a TAU request message, or may be transmitted as another message.
Further, for allowing a CSG cell that is not a CSG cell where user registration has been made to distinguish between start of manual search and the other case, the information indicating the start of manual search may be included in the RRC connection request message and TAU request message from the user equipment. This allows a CSG cell where registration has not been made to transmit/receive a series of messages such as the establishment of RRC connection with the user equipment, the reception of a TAU request message from the user equipment, and the transmission of a TAU request message to a core network, which is limited to the start of manual search.

In Step ST1706, the core network that has received the TAU request message checks whether the user equipment belongs to the CSG of the HeNB/HNB 1511 based on the received user equipment identification number as well. Specifically, the core network has a list of user equipment identification numbers that have been allowed user access, which are associated per TAC or CSG-ID.
With reference to the list, the core network checks whether or not the user equipment (in this case, user equipment 1601) has been registered in association with a CSG-ID to which the cell (in this case, HeNB/HNB 1511) that has transmitted the TAU request message belongs. The process of Step ST1706 may be performed by, for example, MME or home subscriber server (HSS). HSS refers to the subscriber information database in a 3GPP mobile communication network, where the authentication information, in-cell information or the like is managed.
In Step ST1707, the core network judges whether or not the user equipment 1601 has been registered as a result of the check of Step ST1706. In a case where registration has not been made, the core network moves to Step ST1708. A case where registration has been made is not a characteristic portion of the present invention, and thus is not described.

In Step ST1708, the core network transmits a TAU reject notification to the user equipment 1601 via the HeNB/HNB 1511. As a result, the core network judges that the access mode of the HeNB/HNB needs to be hybrid. In Step ST1709, the core network instructs the HeNB/HNB 1511 to set to a hybrid access mode.
In Step ST1710, the core network determines the carrier frequency of the HeNB/HNB 1511. In this operation example, the carrier frequency of the HeNB/HNB 1511 set to the hybrid access mode is determined to the carrier frequency for a CSG cell, for example, f2 of FIG. 16. In Step ST1711, the core network instructs the HeNB/HNB 1511 the setting of the carrier frequency.
Step ST1708, Step ST1709 and Step ST1711 may be executed sequentially or executed simultaneously. In a case of sequential execution, the order thereof is appropriately determined.
In Step ST1712, the HeNB/HNB1511 sets the carrier frequency to the frequency instructed in Step ST1711. In this operation example, the HeNB/HNB 1511 sets to the carrier frequency for a CSG cell, for example, f2 of FIG. 16.
In Step ST1713, the HeNB/HNB 1511 sets the access mode to the mode instructed in Step ST1709. In this operation example, the HeNB/HNB 1511 sets to the hybrid access mode.

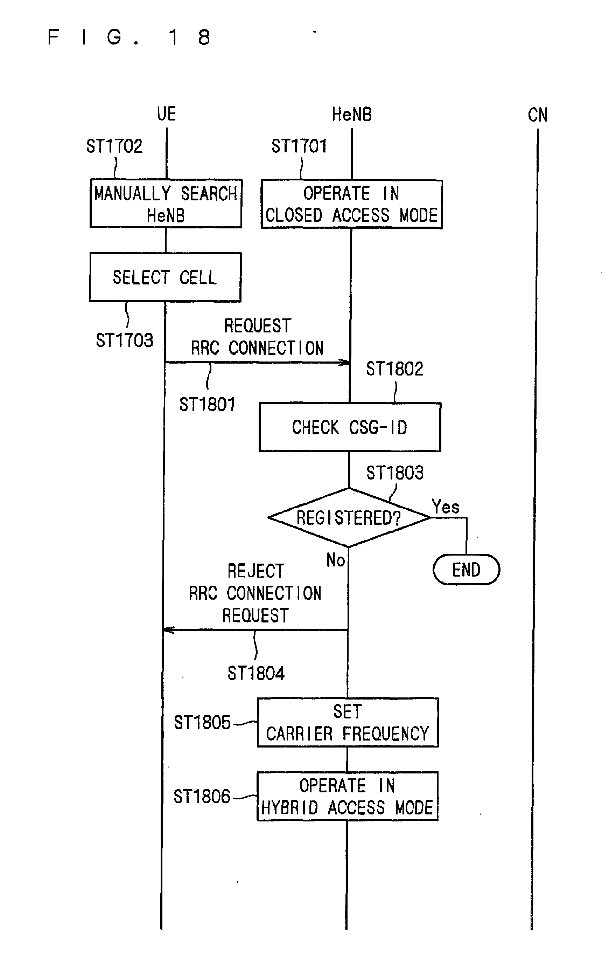

A specific operation example in a case where the method (2) of selecting a cell to become a hybrid access mode, the method (2) of setting a hybrid access mode, and the method (3) of setting the carrier frequency of a HeNB/HNB are used is described with reference to FIG. 18.
For example, as shown in FIG. 16, the macro cell 1501 and the HeNBs/HNBs 1503, 1505, 1507, 1509, 1511 and 1513 are installed, and the user equipment 1601 is present within the coverage 1512 of the HeNB/HNB 1511. The HeNBs/HNBs 1503, 1505, 1507, 1509, 1511 and 1513 operate in a closed access mode. The user equipment 1601 has not been registered with the CSG to which the HeNB/HNB 1511 belongs. The same reference numerals as those of FIG. 17 denote the corresponding portions, which are not described.
In Step ST1801, the user equipment 1601 transmits an RRC connection request to the HeNB/HNB 1511. In this case, the user equipment transmits a user equipment identification number as well. The user equipment identification number may be included in the RRC connection request, may be transmitted together with the RRC connection request, or may be transmitted as another message.
In Step ST1802, the HeNB/HNB 1511 checks whether the user equipment belongs to the CSG of the HeNB/HNB 1511 based on the received user equipment identification number. Specifically, the HeNB/HNB 1511 has a list of user equipment identification numbers that are associated with the TAC or CSG-ID to which own cell belongs, where user access is allowed.
With reference to the list, the HeNB/HNB 1511 checks whether or not the user equipment (in this case, user equipment 1601) that has transmitted an RRC connection request has been registered in association with the TAC or CSG-ID. In Step ST1803, the HeNB/HNB 1511 judges whether or not the user equipment 1601 has been registered as a result of the check in Step ST1802. In the case where the user equipment 1601 has not been registered, the HeNB/HNB 1511 moves to Step ST1804. The case where the user equipment 1601 has been registered is not a characteristic portion of the present invention, which is not described.

In Step ST1804, the HeNB/HNB 1511 transmits a rejection notification for the RRC connection request to the user equipment 1601. As a result, the HeNB/HNB 1511 judges that it is required to make the access mode of own cell hybrid.
In Step ST1805, the HeNB/HNB 1511 selects a carrier frequency corresponding to the hybrid access mode from the carrier frequencies per access mode prestored in the memory of own cell, and sets the selected one. One or a plurality of carrier frequencies may be stored in advance per access mode. In this operation example, for example, f2 of FIG. 16 is selected and set as the carrier frequency for a CSG cell.
In Step ST1806, the HeNB/HNB 1511 sets the access mode to a hybrid access mode. Alternatively, the HeNB/HNB 1511 may notify the core network of a change of the access mode. The notification may be executed by means of the S1 interface.

Next, a measurement operation of neighbor cells for cell search by a user equipment is described.
First, the rules in inter-frequency measurement by 3GPP, which is described in Non-Patent Document 3, are described. In the measurement operation of neighbor cells, a user equipment uses parameters provided by a serving cell. The frequency priority is broadcast in the system information. In a case where there is the reselection priority higher than the current frequency, the user equipment performs measurements at the different frequency.
In a case where there is the reselection priority equal to or lower than the current frequency, the user equipment performs measurements at the different frequency as follows. (1) In a case where the reception quality (servingcell) of the serving cell is better than the threshold (Snonintrasearch) in inter-frequency measurement, the user equipment does not perform measurements at the different frequency. (2) In a case where the threshold of the inter-frequency measurement has not been transmitted, or in a case where the reception quality of the serving cell is equal to or lower than the threshold of inter-frequency measurement, the user equipment performs measurements at the different frequency.
In a case where a user equipment camps on a CSG cell as a suitable cell, the current frequency is considered as a frequency with the highest priority. When at least one CSG-ID is included in the allowable CSG list of the user equipment, in addition to normal cell reselection, an automatic mode function of CSG cell search at a different frequency is used for detecting a CSG cell as a suitable cell. In a case where a user equipment detects a CSG cell as a suitable cell, the detected CSG cell is re-selected irrespective of the reselection priority of the frequency of a cell on which camping is currently performed.

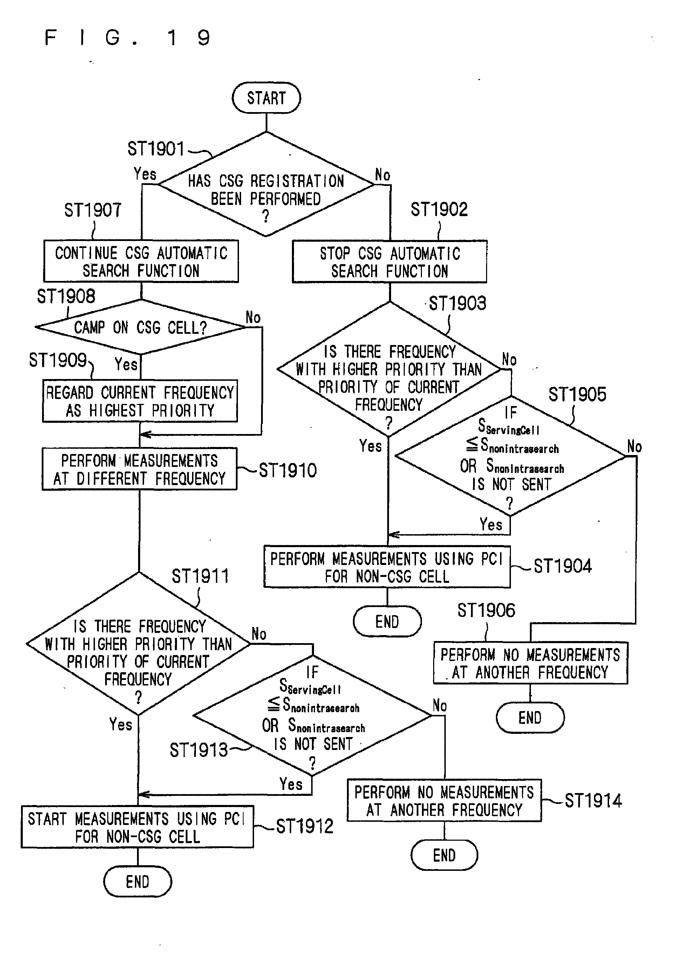

A specific example of the measurement operation of neighbor cells for cell search by a user equipment in the case where the first embodiment is applied is described with reference to FIG. 19. The measurement operation of neighbor cells for cell search can be used for the cell selection, cell reselection and selection of a handover target (target cell) in handover.
In Step ST1901, a user equipment judges whether or not CSG registration has been performed. As a specific example of the judgment, the user equipment judges whether or not a CSG-ID is included in a CSG whitelist or allowed CSG list. The user equipment judges that CSG registration has been performed in the case where a CSG-ID is included and that CSG registration has not been performed in the case where a CSG-ID is not included. In the case of judging that CSG registration has been performed, the user equipment moves to Step ST1907. In the case of judging that CSG registration has not been performed, the user equipment moves to Step ST1902.
In Step ST1902, the user equipment stops an automatic mode function of CSG cell search.
In Step ST1903, the user equipment judges whether or not there is a frequency indicating a higher reselection priority than the current frequency based on the priority of the frequency received through a serving cell. In the case where there is a frequency with a higher priority, the user equipment moves to Step ST1904. In the case where there is no frequency with a higher priority, the user equipment moves to Step ST1905.
In Step ST1904, in order to search for a cell operating in an open access mode or a cell operating in a hybrid access mode, the user equipment performs measurements using the PCIs for non-CSG cells at a different frequency indicating a higher reselection priority than the current frequency.
In Step ST1905, the user equipment judges whether or not the threshold of inter-frequency measurement has been transmitted, or whether or not the reception quality of a serving cell is equal to the threshold of the inter-frequency measurement or worse than the threshold (in a case where the reception quality is represented by SIR, is equal to or smaller than the threshold).
In the case where the threshold has not been transmitted, or in the case where the reception quality of a serving cell is equal to the threshold of the inter-frequency measurement or worse than the threshold (in a case where the reception quality is represented by SIR, is equal to or smaller than the threshold), the user equipment moves to Step ST1904. In the case where the reception quality of the serving cell is better than the threshold of the inter-frequency measurement, the user equipment moves to Step ST1906. In Step ST1906, the user equipment does not perform measurements at a different frequency.

In Step ST1907, the user equipment continues the automatic mode function of CSG cell search. In Step ST1908, the user equipment judges whether or not the CSG cell is camped on. In the case where the CSG cell is camped on, the user equipment moves to Step ST1909. In the case where the CSG cell is not camped on, the user equipment moves to Step ST1910.
In Step ST1909, the user equipment regards the current frequency as the highest reselection priority. In Step ST1910, the user equipment performs measurements at a different frequency for detecting a cell that supports a closed access mode as a suitable cell. Measurements are performed using all PCIs for detecting a CSG cell and a hybrid cell.
In Step ST1911, the user equipment judges whether or not there is a frequency indicating a higher reselection priority than the current frequency based on the priority of the frequency received through a serving cell. In the case where there is a frequency with a higher priority, the user equipment moves to Step ST1912. In the case where there is no frequency with a higher priority, the user equipment moves to Step ST1913.
In Step ST1912, the user equipment performs measurements using the PCIs for non-CSG cells at a different frequency indicating a higher reselection priority than the current frequency for searching for a cell operating in an open access mode or a cell operating in a hybrid access mode.
In Step ST1913, the user equipment judges whether or not the threshold of inter-frequency measurement has been transmitted or whether or not the reception quality of a serving cell is equal to the threshold of the inter-frequency measurement or worse than the threshold (in a case where the reception quality is represented by SIR, is equal to or smaller than the threshold).
In the case where the threshold has not been transmitted, or in the case where the reception quality of the serving cell is equal to the threshold of inter-frequency measurement or worse than the threshold (in a case where the reception quality is represented by SIR, is equal to or smaller than the threshold), the user equipment moves to Step ST1912. In the case where the reception quality of the serving cell is better than the threshold of inter-frequency measurement, the user equipment moves to Step ST1914. In Step ST1914, the user equipment does not perform measurements at a different frequency.

The first embodiment can achieve the effects below. The problem that in a case where the HeNB/HNB operating in a closed access mode operates using the carrier frequency for a CSG cell, a user equipment that has not been registered with a CSG to which the HeNB/HNB belongs cannot receive the service of a mobile communication system in the location in which the HeNB/HNB is installed outside the coverage of a macro cell can be solved without installing a macro cell which costs considerably.
That is, upon setting a HeNB/HNB operating in a closed access mode to a hybrid access mode without installing a macro cell, it is possible for a user equipment that has not been registered with the CSG to which the HeNB/HNB belongs to receive the service of a mobile communication system in the location in which the HeNB/HNB is installed outside the coverage of a macro cell.

### First Modification of First Embodiment

A problem to be solved by a first modification of the first embodiment is described. In a case where the solution of the first embodiment is executed, a new problem occurs as follows. Discussed here is the case where there are a plurality of carrier frequencies other than the carrier frequency (serving frequency) of a base station on which camping is performed or during communication. In this case, an unnecessary process is generated in the measurement operation of neighbor cells for cell search by a user equipment in the following respect. Specific description is given with reference to FIG. 19.
In Step ST1910, the user equipment performs measurements of neighbor cells for searching for a base station (of a CSG cell and a hybrid cell) supporting a closed access mode. Therefore, the search operation at a carrier frequency (for example, f1 of FIG. 16) at which there is no base station supporting a closed access mode, that is, at which there is only a base station operating in an open access mode in Step ST1910 is an unnecessary process per se. The unnecessary process by the user equipment causes a problem that power consumption of a user equipment increases.

A solution in the first modification of the first embodiment is disclosed below. A user equipment is caused to recognize the types of carrier frequencies. Four specific examples of the types of carrier frequencies are disclosed below. The (1) carrier frequency for a CSG cell, (2) carrier frequency for a macro cell, (3) carrier frequency for a CSG cell and carrier frequency for a macro cell, and (4) carrier frequency are used as a carrier frequency for a CSG cell or as a carrier frequency for a macro cell. Two specific examples of the information indicating a carrier frequency are disclosed below.
(1) The absolute value of the carrier frequency is used as the information of the carrier frequency. This achieves an effect of flexible adoption to, for example, an increase or decrease of carrier frequencies.
(2) The index of a carrier frequency is used as the information indicating the carrier frequency. The relationship between the carrier frequency and index may be determined in a static manner or in a semi-static manner.
In the case of determination in a static manner, the relationship between the carrier frequency and index may be stored in a storage area (such as CPU, memory or SIM card) of a user equipment or may be determined in advance. In the case of determination in a semi-static manner, the relationship between the carrier frequency and index may be notified to the user equipment in a case of change, or may be periodically notified a user equipment irrespective of the presence or absence of change.

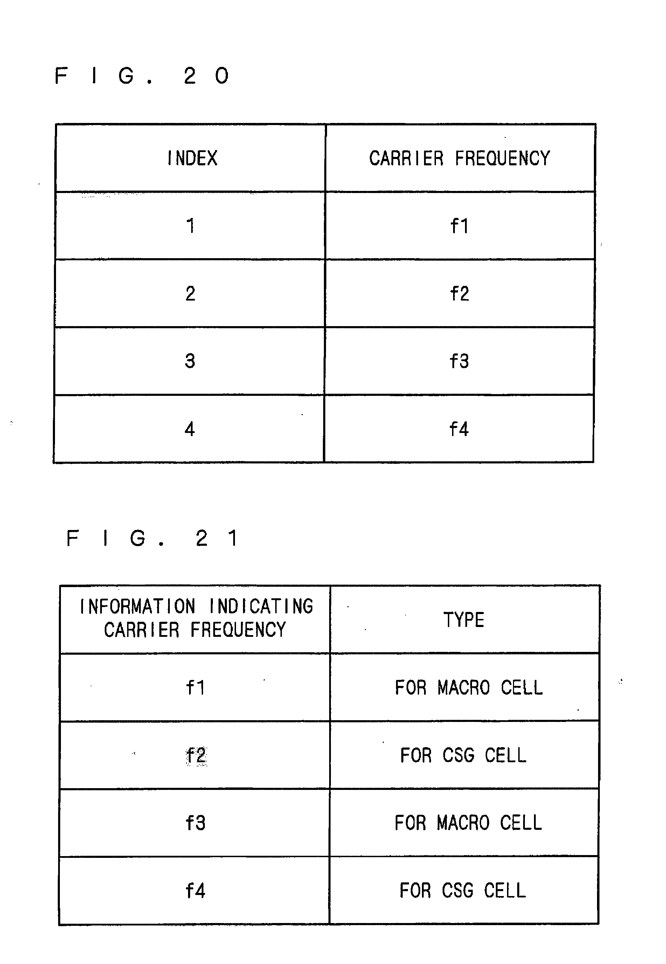

FIG. 20 shows a specific example in a case where the information indicating a carrier frequency is taken as an index of the carrier frequency. Indices "1", "2", "3" and "4" correspond to the carrier frequencies f1, f2, f3 and f4, respectively. This enables to reduce the information amount of the information indicating carrier frequencies, leading to an effect that radio resources are effectively used.
FIG. 21 shows a specific example in a case where the type as to whether the carrier frequencies are used as the carrier frequencies for CSG cells or carrier frequencies for macro cells is recognized, which is described in the specific example (4) of the types of carrier frequencies.
In FIG. 21, (1) and (2) described above are applicable to the information indicating the carrier frequency. As to the types of FIG. 21, for example, an information bit "1" may be for a macro cell and an information bit "0" may be for a CSG cell. This enables to reduce the information amount of types, leading to an effect that radio resources are effectively used.

Two specific examples of the method of causing a user equipment to recognize the types of carrier frequencies are disclosed below. (1) The core network notifies a user equipment. (2) The types of carrier frequencies are determined in a static manner. The types of carrier frequencies may be stored in a storage area (such as CPU, memory or SIM card) of a user equipment or may be determined in advance. Two specific examples of the method of notifying a user equipment of the types of carrier frequencies by a core network are disclosed below.
(1) Notification is made using a broadcast control channel (BCCH). All user equipments being served thereby can be notified, and accordingly, this is the method excellent in terms of effective use of radio resources. Conceivable as a specific example of the case of making notification using the BCCH is mapping on the MIB or SIB.
   The MIB is mapped on the PBCH, and thus, the method using the MIB is excellent in that a user equipment is capable of receiving a small amount of control delay. In the case of using the SIB, notification is made using the SIB1. The MIB or SIB1 is the minimally required broadcast information received from cell search to idle state operation, and thus, the method of using the MIB or SIB1 is excellent in that a control delay of a user equipment is reduced.
   Alternatively, notification may be made using the SIB3. The information regarding the intra-frequency cell reselection and cell reselection at different frequencies is mapped on the SIB3, and thus, the information used in the measurement of neighbor cells for cell search can be also received. This simplifies the process of a user equipment, leading to an effect that a processing load is reduced. Further, it may be part of the information elements of the cell reselection priority (cellReselectionPriority) in the SIB3.
   The information regarding the frequency used in the measurements of neighbor cells for cell search at different frequencies can be received as well, and thus the process of a user equipment is simplified, leading to an effect that a processing load can be reduced.
   Alternatively, notification may be made using the SIB5. The information regarding cell reselection at different frequencies is mapped on the SIB5, and thus, the information used in the measurement of neighbor cells for cell search at different frequencies can be received as well. This simplifies the process of a user equipment, leading to an effect that a processing load can be reduced. Further, it may be part of the information elements of the inter-frequency carrier frequency information (InterFreqCarrierFreqInfo) in the SIB5.
   The information regarding the frequency used in the measurements of neighbor cells for cell search at different frequencies can be received as well, and thus the process of a user equipment is simplified, leading to an effect that a process load can be reduced. Further, it may be part of the information elements of the cell reselection priority (cellReselectionPriority) in the SIB5. The information regarding the frequency used in the measurements of neighbor cells for cell search at different frequencies can be received as well, and thus the process of a user equipment is simplified, leading to an effect that a processing load can be reduced.
   Alternatively, notification may be made using the SIB9. The information regarding the HeNB is mapped in the SIB9. The information regarding the HeNB can be received as well, and thus the process of a user equipment can be simplified, leading to an effect that a processing load can be reduced. In the case where notification is made using the broadcast information, it may be broadcast only from a CSG cell or HeNB/HNB, that is, it is not required to be broadcast from a macro cell.
   Accordingly, it suffices that information is added to the broadcast information of the CSG cell and HeNB/HNB that are newly added entities, and it is not required to add information to the broadcast information of the macro cell that is an existing entity. This enables to construct a mobile communication system with high compatibility.
(2) Notification is made using the established connection between a user equipment and a network. The network notifies the information of carrier frequencies using the control information (c-plane) of the connection. As a specific example, the network maps the information of carrier frequencies to the CCCH or DCCH that is a logical channel, and notifies the user equipment of the information using the transport channel DL-SCH or physical channel PDSCH.
   In the construction of a mobile communication system, it is relatively easy to allow an increase of the information amount of the PDSCH other than the broadcast information. Accordingly, an effect that a mobile communication system is constructed easily can be achieved by the notification of the "information of carrier frequencies" that is newly provided in the present embodiment on the PDSCH. Further, it may be part of the information elements of the cell reselection priority (cellReselectionPriority). The information regarding the frequency used in the measurement of neighbor cells for cell search at different frequencies can be received as well, and thus the process of a user equipment can be simplified, leading to an effect that a processing load is reduced.

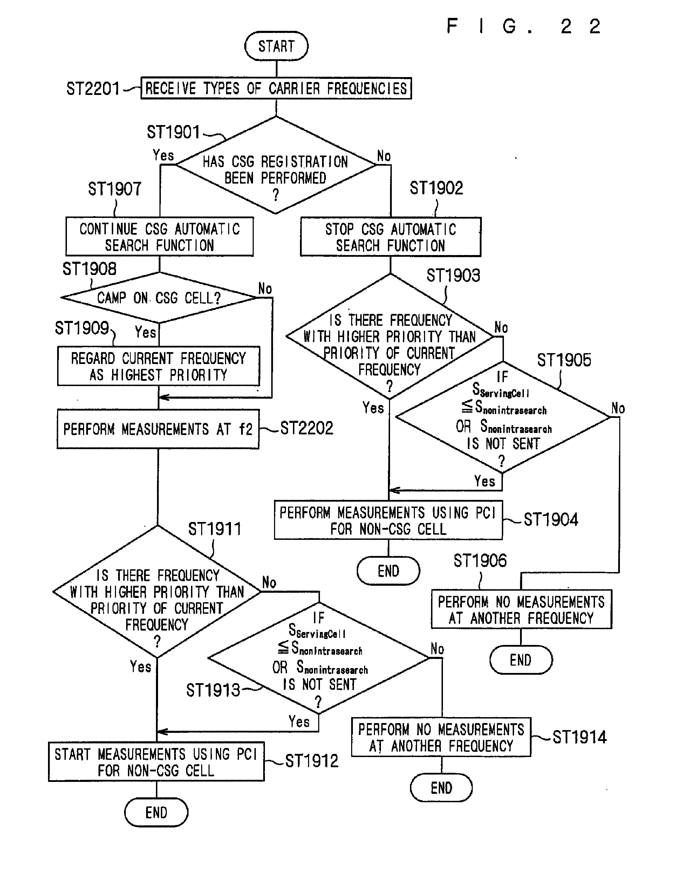

A specific example of the measurement operation of neighbor cells for cell search by a user equipment in the case where the first modification of the first embodiment is applied is described with reference to FIG. 22. The same reference numerals as those of FIG. 19 denote the corresponding portions, which are not described.
In Step ST2201, the user equipment receives the types of carrier frequencies from the core network. In Step ST2202, the user equipment performs measurements at different frequencies for detecting cells (a CSG cell and a hybrid cell) supporting the closed access mode as suitable cells. On that occasion, the user equipment performs measurements for detecting cells supporting a closed access mode as suitable cells, with the use of the types of carrier frequencies received from the core network in Step ST2201 at the carrier frequency (f2 of FIG. 16) for a CSG cell.
In a case where the types of the carrier frequencies have been determined in a static manner, the user equipment refers to the determined contents and performs measurements for detecting cells supporting a closed access mode as suitable cells, at the carrier frequency for a CSG cell. Measurements are performed using all PCIs for detecting a CSG cell and a hybrid cell.

The first modification of the first embodiment can achieve the effects below in addition to those of the first embodiment. In a case of performing measurements of neighbor cells for searching for a base station supporting a closed access mode, the user equipment is only required to perform measurements of neighbor cells for cell search at a carrier frequency for a CSG cell.
That is, merely upon search operation for searching for a base station supporting a closed access mode, it is possible to reduce the search operations at a carrier frequency at which a base station operating in an open access mode is present. This leads to effects of reductions in the processing load and power consumption of a user equipment. That is, in order to detect suitable cells supporting a closed access mode, a user equipment that has been registered with a CSG does not need to perform search using a plurality of frequencies including the carrier frequency for a CSG cell and the carrier frequency for a macro cell.
The search operation through change of carrier frequencies requires a high processing load for a user equipment. In addition, a user equipment that has been registered with the CSG needs to perform search operation at a different frequency for detecting a suitable CSG cell even when the reception quality of a serving cell is good or even in a case of high reselection priority of a carrier frequency of a base station on which camping is currently performed.
Accordingly, the fact that target carrier frequencies for detecting suitable cells supporting a closed access mode can be reduced by performing the present embodiment leads to a large effect in a reduction in the processing load of a user equipment.

### Second Modification of First Embodiment

A problem to be solved by a second modification of the first embodiment is described. In a case where the solution of the first modification of the first embodiment is executed, a new problem occurs as follows.
Considered here is the case where there are a plurality of carrier frequencies for CSG cells, and there are carrier frequencies for CSG cells that are usable as the carrier frequency of a HeNB/HNB operating in a hybrid access mode and carrier frequencies for CSG cells that are not used as the carrier frequency of a HeNB/HNB operating in a hybrid access mode. The carrier frequency for a CSG cell that is not used as the carrier frequency of the HeNB/HNB operating in a hybrid access mode may be taken as a CSG cell dedicated carrier frequency.

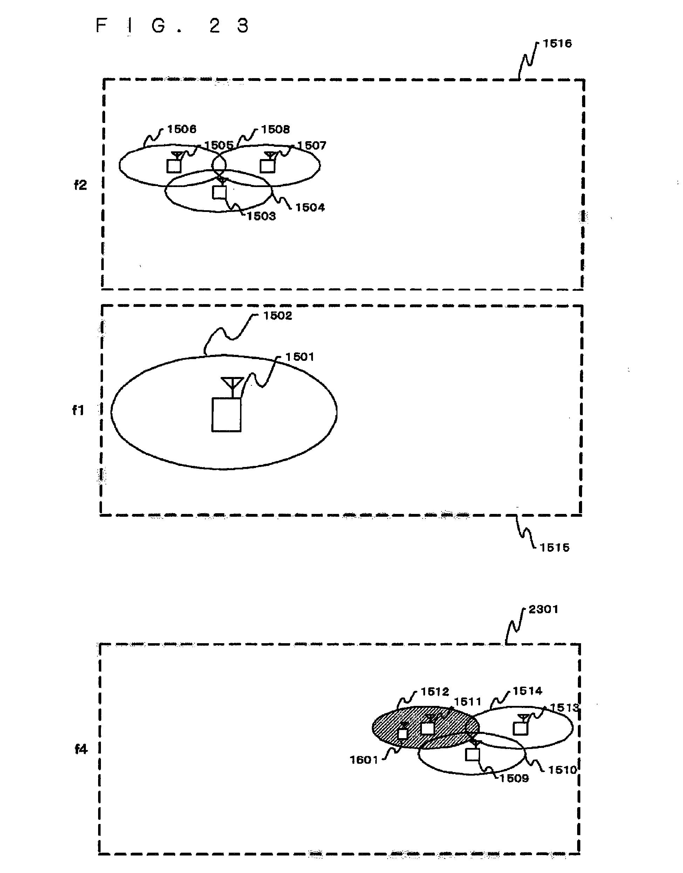

FIG. 23 is a conceptual diagram. The same reference numerals as those of FIG. 15 and FIG. 16 denote the corresponding portions, which are not described. The frequency used by the macro cell 1501 is represented as the carrier frequency (f1) for a macro cell. The carrier frequency layer for a macro cell is represented by 1515. The frequency used by the HeNB/HNB 1503, HeNB/HNB 1505 and HeNB/HNB 1507 may be the carrier frequency (f2) for a CSG cell or a carrier frequency dedicated to a CSG cell.
Further, it may be the carrier frequency for a CSG cell that is not used as the carrier frequency of the HeNB/HNB operating in a hybrid access mode. The carrier frequency layer for a CSG cell or the carrier frequency layer dedicated to a CSG cell is represented by 1516. The frequency used by the HeNB/HNB 1509, HeNB/HNB 1511 and HeNB/HNB 1513 is the carrier frequency (f4) for a CSG cell.
f4 denotes the carrier frequency for a CSG cell that is usable as the carrier frequency of the HeNB/HNB operating in a hybrid access mode. That is, f4 represents the carrier frequency used by a cell in a hybrid access mode and a cell in a closed access mode. The carrier frequency layer for a CSG cell that is usable by the HeNB/HNB operating in a hybrid access mode is represented by 2301.
For example, in the case of FIG. 23, an unnecessary process is generated in the measurement operation of neighbor cells for cell search by a user equipment in the following respect. Specific description is given with reference to FIG. 22. In Step ST1904 and Step ST1912, a user equipment performs measurements of neighbor cells for searching for base stations (a macro cell and a hybrid cell) supporting an open access mode. Accordingly, the search operation at the carrier frequency (f2 of FIG. 23) at which there is no base station supporting an open access mode, that is, at which there is only a base station operating in a closed access mode in Step ST1904 and Step ST1912 is an unnecessary process per se.
In Step ST2202, the user equipment performs measurements of neighbor cells for searching for a cell supporting a closed mode, that is, a CSG cell or hybrid cell. Accordingly, performing a search operation using the PCIs for non-CSG cells while targeting the carrier frequency (f2 of FIG. 23) for a CSG cell at which there is no base station being a hybrid cell, that is, which is not used as the carrier frequency of a HeNB/HNB operating in a hybrid access mode, in Step ST2202 is an unnecessary process per se.
The unnecessary processes by a user equipment as described above cause a problem that power consumption of a user equipment increases.

A solution in the second modification of the first embodiment is disclosed below. A user equipment is caused to recognize the types of carrier frequencies.
Three specific examples of the types of carrier frequencies are disclosed below. The (1) carrier frequency for a CSG cell that can be used by a HeNB/HNB operating in a hybrid access mode; (2) carrier frequency for a CSG cell that can be used by a HeNB/HNB operating in a hybrid access mode, carrier frequency for a CSG cell, and carrier frequency for a macro cell, and (3) carrier frequency are used as the carrier frequency for a CSG cell that can be used by the HeNB/HNB operating in a hybrid access mode, as the carrier frequency for a CSG cell, or as the carrier frequency for a macro cell.
A specific example of the information indicating the carrier frequencies is similar to that of the first modification of the first embodiment, which is not described. A specific example of the method of causing a user equipment to recognize the types of carrier frequencies is similar to that of the first modification of the first embodiment, which is not described. A specific example of the method of notifying a user equipment of the type of the carrier frequency from the core network is similar to that of the first modification of the first embodiment, which is not described.

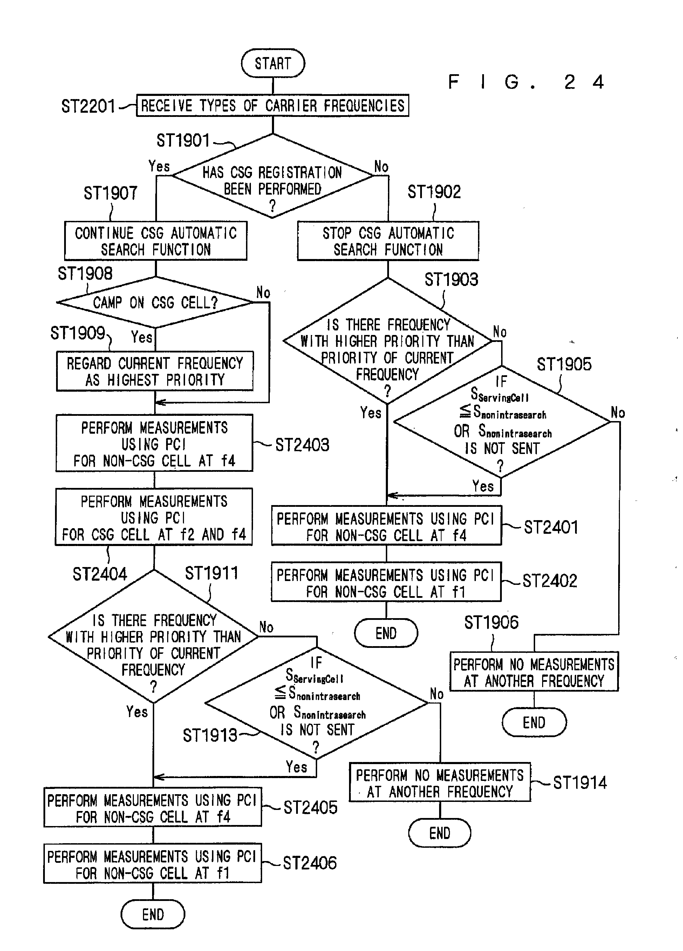

A specific example of the measurement operation of neighbor cells that is executed for cell search by a user equipment in a case where the second modification of the first embodiment is applied is described with reference to FIG. 24. The same reference numerals as those of FIG. 19 and FIG. 22 denote the corresponding portions, which are not described.
In Step ST2401, the user equipment performs measurements at a different frequency using the PCIs for non-CSG cells for detecting a hybrid cell. On that occasion, the user equipment performs measurements using the PCIs for non-CSG cells for detecting a hybrid cell, with the use of the types of carrier frequencies received from the core network in Step ST2201 at the carrier frequency (f4 of FIG. 23) for a CSG cell that can be used by the HeNB/HNB operating in a hybrid access mode.
In a case where the types of carrier frequencies have been determined in a static manner, the user equipment refers to the determined contents and performs measurements using the PCIs for non-CSG cells at the carrier frequency for a CSG cell that can be used by the HeNB/HNB operating in a hybrid access mode for detecting a hybrid cell.
In Step ST2402, the user equipment performs measurements at a different frequency using the PCIs for non-CSG cells for detecting a cell in an open access mode. On that occasion, the user equipment performs measurements using the PCIs for non-CSG cells for detecting a cell in an open access mode, with the use of the types of carrier frequencies received from the core network in Step ST2201 at the carrier frequency (f1 of FIG. 23) for a macro cell. In a case where the types of carrier frequencies have been determined in a static manner, the user equipment refers to the determined contents and performs measurements using the PCIs for non-CSG cells at the carrier frequency for a macro cell for detecting a cell in an open access mode.
In Step ST2403, the user equipment performs measurements at a different frequency using the PCIs for non-CSG cells for detecting a hybrid cell supporting a closed access mode. On that occasion, the user equipment performs measurements using the PCIs for non-CSG cells for detecting a hybrid cell, with the use of the types of carrier frequencies received from the core network in Step ST2201 at the carrier frequency (f4 of FIG. 23) for a CSG cell that can be used by the HeNB/HNB operating in a hybrid access mode. In a case where the types of carrier frequencies have been determined in a static manner, the user equipment refers to the determined contents and performs measurements using the PCIs for non-CSG cells at the carrier frequency for a CSG cell that can be used by the HeNB/HNB operating in a hybrid access mode for detecting a hybrid cell.
In Step ST2404, the user equipment performs measurements at different frequencies for detecting a CSG cell. On that occasion, the user equipment performs measurements using the PCIs for CSG cells for detecting a CSG cell, with the use of the types of carrier frequencies received from the core network in Step ST2201 at the carrier frequencies (f2 and f4 of FIG. 23) for a CSG cell and a CSG cell that can be used by the HeNB/HNB operating in a hybrid access mode. In a case where the types of carrier frequencies have been determined in a static manner, the user equipment refers to the determined contents and performs measurements using the PCIs for CSG cells at the carrier frequencies for a CSG cell and a CSG cell that can be used by the HeNB/HNB operating in a hybrid access mode for detecting a CSG cell.
In Step ST2405, the user equipment performs measurements at a different frequency using the PCIs for non-CSG cells for detecting a hybrid cell. On that occasion, the user equipment performs measurements using the PCIs for non-CSG cells for detecting a hybrid cell, with the use of the types of carrier frequencies received from the core network in Step ST2201 at the carrier frequency (f4 of FIG. 23) for a CSG cell that can be used by a HeNB/HNB operating in a hybrid access mode.
In a case where the types of carrier frequencies have been determined in a static manner, the user equipment refers to the determined contents and performs measurements using the PCIs for non-CSG cells at the carrier frequency for a CSG cell that can be used by the HeNB/HNB operating in a hybrid access mode for a hybrid cell for detecting a hybrid cell.
In Step ST2406, the user equipment performs measurements using the PCIs for non-CSG cells at a different frequency for detecting a cell in an open access mode. On that occasion, the user equipment performs measurements using the PCIs for non-CSG cells for detecting a cell in an open access mode, with the use of the types of carrier frequencies received from the core network in Step ST2201 at the carrier frequency (f1 of FIG. 23) for a macro cell. In a case where the types of carrier frequencies have been determined in a static manner, the user equipment refers to the determined contents and performs measurements using the PCIs for non-CSG cells at the carrier frequency for a macro cell for detecting a cell in an open access mode.

The second modification of the first embodiment can achieve the effects below in addition to those of the first embodiment and the first modification of the first embodiment. In a case of performing measurements of neighbor cells for searching for a base station supporting a hybrid access mode, the user equipment is only required to perform measurements of neighbor cells for cell search at a carrier frequency for a CSG cell that can be used by the HeNB/HNB operating in a hybrid access mode.
That is, in performing a search operation for searching for a base station supporting a hybrid access mode, it is possible to reduce the search operations at a carrier frequency for a CSG cell that is not used as the carrier frequency of the HeNB/HNB operating in a hybrid access mode. Further, it is possible to reduce the search operations using the PCIs for non-CSG cells at the carrier frequency for a CSG cell that is not used as the carrier frequency of the HeNB/HNB operating in a hybrid access mode. Accordingly, the effects of reductions in the processing load and power consumption of a user equipment can be achieved.
Moreover, 3GPP is currently proposing to reserve a subset of PCIs/PSCs for hybrid cells from a set available for a macro cell and broadcast the information to the user equipment. As a specific example, Non-Patent Document 8 proposes to reserve the PCI range (hereinafter, referred to as PCI for hybrid cells) used by the hybrid cells in the PCIs for non-CSG cells.
When the PCIs for hybrid cells are newly provided, according to the second modification of the first embodiment, in performing measurements of neighbor cells for searching for a base station supporting a hybrid access mode, the user equipment is only required to perform measurements of neighbor cells for cell search using the PCIs for hybrid cells only at the carrier frequency for a CSG cell that can be used by the HeNB/HNB operating in a hybrid access mode.
This enables to reduce the search operations using the PCIs for hybrid cells at the carrier frequencies other than the carrier frequency for a CSG cell that can be used by the HeNB/HNB operating in a hybrid access mode. Accordingly, the effects of reductions in the processing load and power consumption of a user equipment can be achieved.

Note that the second modification of the first embodiment can be executed even in a case where the first modification of the first embodiment is not executed.

### Second Embodiment

A second embodiment discloses another solution for a problem similar to that of the first embodiment.
In a mobile communication system in which carrier frequencies for CSG cells are provided, the access mode of a HeNB/HNB is set to a hybrid access mode. In addition, the access mode of a HeNB/HNB is set to a hybrid access mode in a case where the carrier frequency for a macro cell differs from the carrier frequency for a CSG cell.
All HeNBs/HNBs installed outside the coverage of a macro cell may become a hybrid access mode. Alternatively, part of the HeNBs/HNBs installed outside the coverage of a macro cell may become the hybrid access mode. In the case where part of the HeNBs/HNBs becomes a hybrid access mode, the required HeNBs/HNBs may become a hybrid access mode. Specific examples of the required cells include cells installed outside the coverage of a macro cell, from which a user equipment that has not been registered with a CSG to which the HeNBs/HNBs within the coverage of the HeNBs/HNBs belong receives the service of a mobile communication system.
The carrier frequency of the HeNB/HNB operating in the hybrid access mode is set to the carrier frequency for a macro cell. The carrier frequency of the HeNB/HNB operating in the hybrid access mode may be a frequency different from the carrier frequency for a CSG cell. The descriptions of the carrier frequencies for CSG cells and the carrier frequencies for macro cells are similar to those of the first embodiment, which are not described.

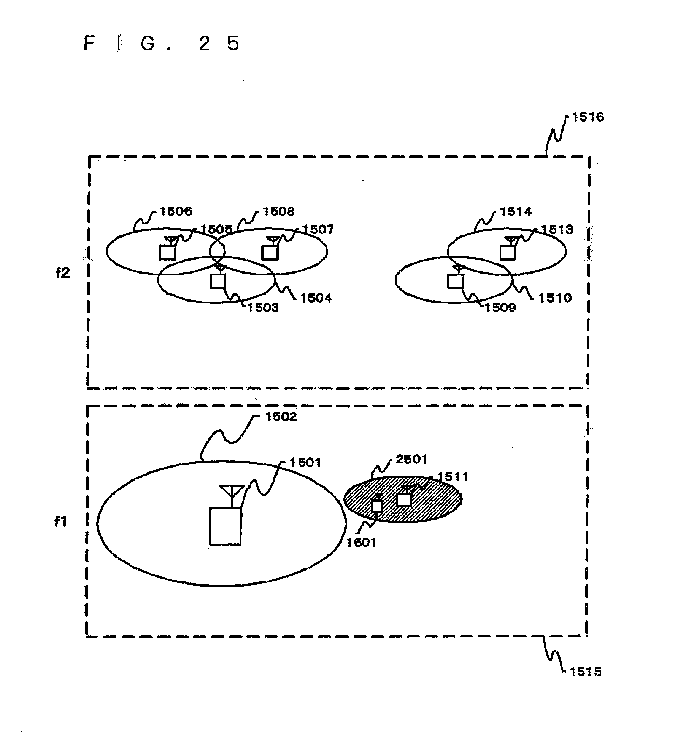

FIG. 25 is a conceptual diagram of the solution of the second embodiment. The same reference numerals as those of FIG. 15 and FIG. 16 denote the corresponding portions, which are not described.
For example, the user equipment 1601 is present outside the coverage of a macro cell. The HeNB/HNB 1509, HeNB/HNB 1511 and HeNB/HNB 1513 are installed outside the coverage of a macro cell and operate in a closed access mode. Considered here is the case where the user equipment 1601 is located in a coverage 2501 of the HeNB/HNB 1511. Here, the user equipment 1601 has not been registered with the CSG to which the HeNB/HNB 1511 belongs.
Meanwhile, the user equipment 1601 needs to receive the service of a mobile communication system. In the solution of the second embodiment, the access mode of the HeNB/HNB 1511 is set to a hybrid access mode. As a result, the coverage 2501 of the HeNB/HNB 1511 supports an open access mode, which is diagonally hatched in FIG. 25. The carrier frequency of the HeNB/HNB 1511 is a carrier frequency for a macro cell. In FIG. 25, the carrier frequency of the HeNB/HNB 1511 is f1.

A specific example of the method of selecting a cell to become a hybrid access mode is similar to that of the first embodiment, which is not described. A specific example of the method of selecting a cell whose setting as a hybrid access mode is released is similar to that of the first embodiment, which is not described.
A specific example of the method of setting a hybrid access mode is similar to that of the first embodiment, which is not described. A specific example of the method of setting the carrier frequency of a HeNB/HNB is similar to that of the first embodiment, which is not described. A specific example of performing a measurement operation of neighbor cells for cell search by a user equipment is similar to that of the first embodiment (FIG. 19), which is not described.

The second embodiment can achieve effects below. In a case where a HeNB/HNB operating in a closed access mode operates with the use of the carrier frequency for a CSG cell, a problem that a user equipment that has not been registered with the CSG to which the HeNB/HNB belongs cannot receive the service of a mobile communication system in a location in which the HeNB/HNB is installed outside the coverage of a macro cell can be solved without installing a macro cell which costs considerably.
That is, through setting of a HeNB/HNB operating in a closed access mode to a hybrid access mode without installing a macro cell, a user equipment that has not been registered with a CSG to which the HeNB/HNB belongs is allowed to receive the service of a mobile communication system in the location in which the HeNB/HNB is installed outside the coverage of a macro cell.

### First Modification of Second Embodiment

A problem to be solved by a first modification of the second embodiment is described. In a case where the solution of the second embodiment is executed, a new problem occurs as follows. Discussed here is the case where there are a plurality of carrier frequencies other than the carrier frequency (serving frequency) of a base station on which camping is performed or during communication. In this case, an unnecessary process is generated in the measurement operation of neighbor cells for cell search by a user equipment in the following respect.
Specific description is given with reference to FIG. 19. In the measurements in Step ST1904 and Step ST1912, a user equipment performs measurements of neighbor cells for searching for base stations (a macro cell and a hybrid cell) supporting an open access mode. Therefore, in Step ST1904 and Step ST1912, a search operation at the carrier frequency (f2 of FIG. 25) at which there is no base station supporting an open access mode, that is, at which there is only a base station operating in a closed access mode in Step ST1904 and Step ST1912 is an unnecessary process per se. In the measurements of Step ST1910, a user equipment performs measurements of neighbor cells for searching for suitable cells supporting closed access.
That is, the user equipment performs measurements of neighbor cells for searching for a CSG cell operating at the carrier frequency (f2 of FIG. 25) for a CSG cell and a hybrid cell operating at the carrier frequency (f1 of FIG. 25) for a macro cell. Accordingly, the measurement using the PCIs for non-CSG cells at the carrier frequency for a CSG cell and the measurement using the PCIs for CSG cells at the carrier frequency for a macro cell is an unnecessary process. Due to the unnecessary process by the user equipment, a problem that power consumption of a user equipment increases occurs.

A solution in the first modification of the second embodiment is disclosed below. A user equipment is caused to recognize the types of carrier frequencies.
Specific examples of the types of carrier frequencies are similar to those of the first modification of the first embodiment, which are not described. A specific example of the information indicating carrier frequencies is similar to that of the first modification of the first embodiment, which is not described.
A specific example of the method of causing a user equipment to recognize the types of carrier frequencies is similar to that of the first modification of the first embodiment, which is not described. A specific example of the method of notifying a user equipment of the types of carrier frequencies from the core network is similar to that of the first modification of the first embodiment, which is not described.

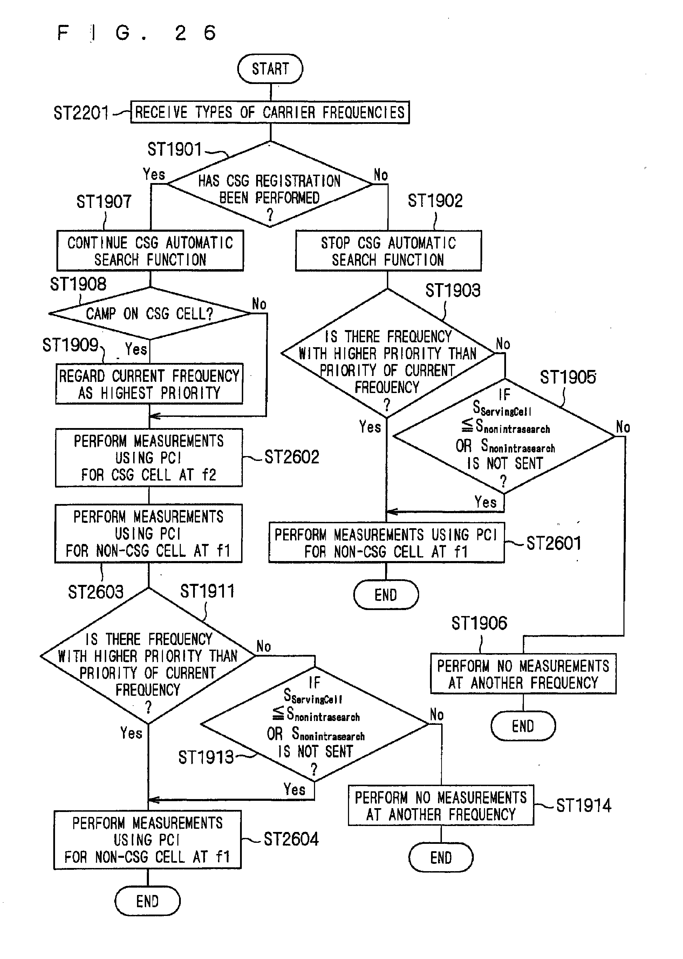

A specific example of the measurement operation of neighbor cells for cell search by a user equipment in a case where the first modification of the second embodiment is applied is described with reference to FIG. 26. The same reference numerals as those of FIG. 19 and FIG. 22 denote the corresponding portions, which are not described.
In Step ST2601, the user equipment performs measurements at a different frequency using the PCIs for non-CSG cells for detecting cells supporting an open access mode. On that occasion, the user equipment performs measurements using the PCIs for non-CSG cells for detecting cells supporting an open access mode, with the use of the types of carrier frequencies received from the core network in Step ST2201 at the carrier frequency (f1 of FIG. 25) for a macro cell.
The cells supporting an open access mode may be a macro cell and a hybrid cell. In a case where the types of carrier frequencies have been determined in a static manner, the user equipment refers to the determined contents and performs measurements using the PCIs for non-CSG cells at the carrier frequency for a macro cell for detecting a cell supporting an open access mode.
In Step ST2602, the user equipment performs measurements at a different frequency using the PCIs for CSG cells for detecting a suitable cell. On that occasion, the user equipment performs measurements using the PCIs for CSG cells for detecting a CSG cell, with the use of the types of carrier frequencies received from the core network in Step ST2201 at the carrier frequency (f2 of FIG. 25) for a CSG cell. In a case where the types of carrier frequencies have been determined in a static manner, the user equipment refers to the determined contents and performs measurements using the PCIs for
CSG cells at the carrier frequency for a CSG cell for detecting a CSG cell.
In Step ST2603, the user equipment performs measurements at a different frequency using the PCIs for non-CSG cells for detecting a suitable hybrid cell supporting a closed access mode. On that occasion, the user equipment performs measurements using the PCIs for non-CSG cells for detecting a hybrid cell, with the use of the types of carrier frequencies received from the core network in Step ST2201 at the carrier frequency (f1 of FIG. 25) for a macro cell. In a case where the types of carrier frequencies have been determined in a static manner, the user equipment refers to the determined contents and performs measurements using the PCIs for non-CSG cells at the carrier frequency for a macro cell for detecting a hybrid cell.
In Step ST2604, the user equipment performs measurements at a different frequency using the PCIs for non-CSG cells for detecting cells supporting an open access mode. On that occasion, the user equipment performs measurements using the PCIs for non-CSG cells for detecting cells supporting an open access mode, with the use of the types of carrier frequencies received from the core network in Step ST2201 at the carrier frequency (f1 of FIG. 25) for a macro cell.
The cells supporting an open access mode may be a macro cell and a hybrid cell. In a case where the types of carrier frequencies have been determined in a static manner, the user equipment refers to the determined contents and performs measurements using the PCIs for non-CSG cells at the carrier frequency for a macro cell for detecting cells supporting an open access mode.

The first modification of the second embodiment can achieve the effects below in addition to those of the second embodiment. In a case of performing measurements of neighbor cells for searching for a base station supporting an open access mode, the user equipment is only required to perform measurements of neighbor cells for cell search at a carrier frequency for a macro cell.
That is, in performing a search operation for searching for a base station supporting an open access mode, the search operations can be reduced at the carrier frequency at which only a base station operating in a closed access mode is present. This can achieve effects of reductions in the processing load and power consumption of a user equipment. The effects become more conspicuous for a user equipment with lower capability that cannot be registered with a CSG.
Further, it is possible to reduce unnecessary processes in which measurements using the PCIs for non-CSG cells are performed at the carrier frequency for a CSG cell at which there is no hybrid cell for searching for a base station supporting a closed access mode, and unnecessary processes, the measurements using the PCIs for non-CSG cells at the carrier frequency for a macro cell at which there is no CSG cell, can be reduced. Accordingly, the effects of reductions in the processing load and power consumption of a user equipment can be achieved.

### Second Modification of Second Embodiment

A problem to be solved by a second modification of the second embodiment is described. In a case where the solution of the first modification of the second embodiment is executed, a new problem occurs as follows.
Considered here is the case where there are a plurality of carrier frequencies for macro cells, including a carrier frequency for a macro cell that is used as the carrier frequency of a HeNB/HNB operating in a hybrid access mode, and a carrier frequency for a macro cell that is not used as the carrier frequency of the HeNB/HNB operating in the hybrid access mode. The carrier frequency for a macro cell that is not used as the carrier frequency of a HeNB/HNB operating in a hybrid access mode may be taken as a macro cell dedicated carrier frequency.

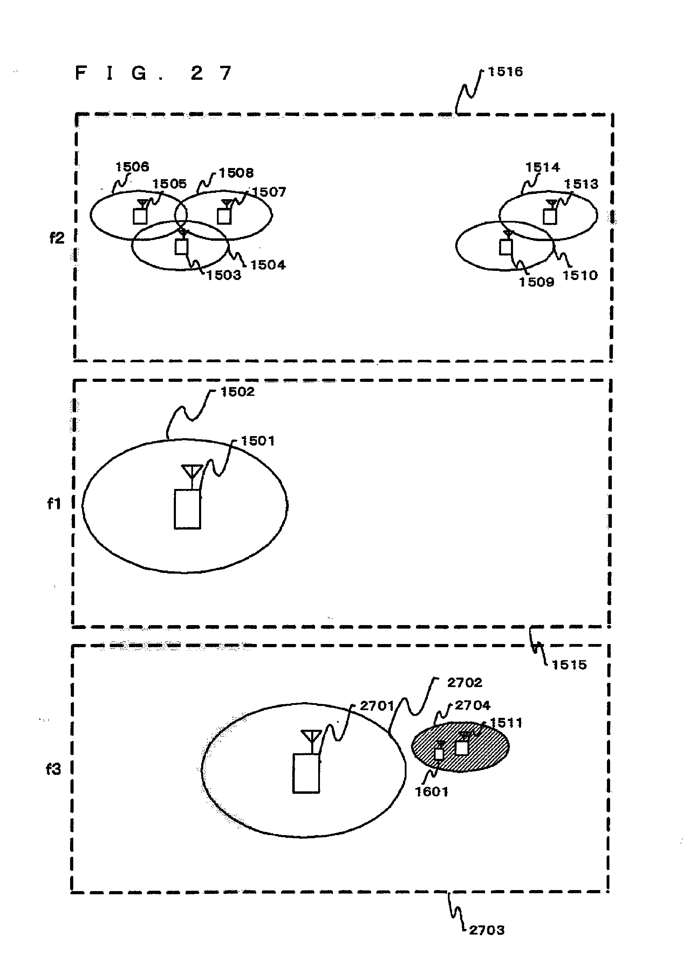

FIG. 27 is a conceptual diagram. The same reference numerals as those of FIG. 15 and FIG. 16 denote the corresponding portions, which are not described.
The frequency used by the macro cell 1501 may be the carrier frequency (f1) for a macro cell or a macro cell dedicated carrier frequency. The carrier frequency layer for the macro cell is represented by 1515. There is a macro cell 2701 apart from the macro cell 1501. The coverage of the macro cell 2701 is represented by 2702. The frequency used by the macro cell 2701 is the carrier frequency (f3) for a macro cell that can be used by the HeNB/HNB operating in a hybrid access mode. The carrier frequency layer for the macro cell is represented by 2703.
The carrier frequency used by the HeNB/HNB 1503, HeNB/HNB 1505, HeNB/HNB 1507, HeNB/HNB 1509 and HeNB/HNB 1513 is the carrier frequency (f2) for a CSG cell. The carrier frequency layer for the CSG cell is represented by 1516. The frequency used by the HeNB/HNB 1511 is the carrier frequency (f3) for a macro cell that can be used by a HeNB/HNB operating in a hybrid access mode. That is, f3 denotes the carrier frequency used by a cell in a hybrid access mode and a cell in an open mode.
In other words, f1 represents the carrier frequency for a macro cell that is not used as the carrier frequency of a HeNB/HNB operating in a hybrid access mode, and f3 represents the carrier frequency for a macro cell that can be used by a HeNB/HNB operating in a hybrid access mode. The coverage of the HeNB/HNB 1511 is represented by 2704.
For example, in the case of FIG. 27, an unnecessary process is generated in the measurement operation of neighbor cells for cell search by a user equipment in the following respect. Specific description is given with reference to FIG. 26. In Step ST2603, a user equipment performs measurements of neighbor cells for searching for a base station supporting a closed access mode, that is, a hybrid cell.
Accordingly, performing the search operation using the PCIs for non-CSG cells is an unnecessary process per se at the carrier frequency for a macro cell at which there is no base station of a hybrid cell, that is, which is not used as the carrier frequency of a HeNB/HNB operating in a hybrid access mode. As described above, the unnecessary process in a user equipment causes a problem that power consumption of a user equipment increases.

A solution in the second modification of the first embodiment is disclosed below. A user equipment is caused to recognize the types of carrier frequencies.
Three specific examples of the types of carrier frequencies are disclosed below. The (1) carrier frequency for a macro cell that can be used by a HeNB/HNB operating in a hybrid access mode, (2) carrier frequency for a macro cell that can be used by a HeNB/HNB operating in a hybrid access mode, carrier frequency for a CSG cell, and carrier frequency for a macro cell, and (3) carrier frequency are used as the carrier frequency for a macro cell that can be used by the HeNB/HNB operating in a hybrid access mode that can be used by the HeNB/HNB operating in a hybrid access mode, the carrier frequency for a CSG cell, or the carrier frequency for a macro cell.
A specific example of the information indicating the carrier frequencies is similar to that of the first modification of the first embodiment, which is not described. A specific example of the method of causing a user equipment to recognize the types of carrier frequencies is similar to that of the first modification of the first embodiment, which is not described. A specific example of the method of notifying a user equipment of the type of the carrier frequency from the core network is similar to that of the first modification of the first embodiment, which is not described.

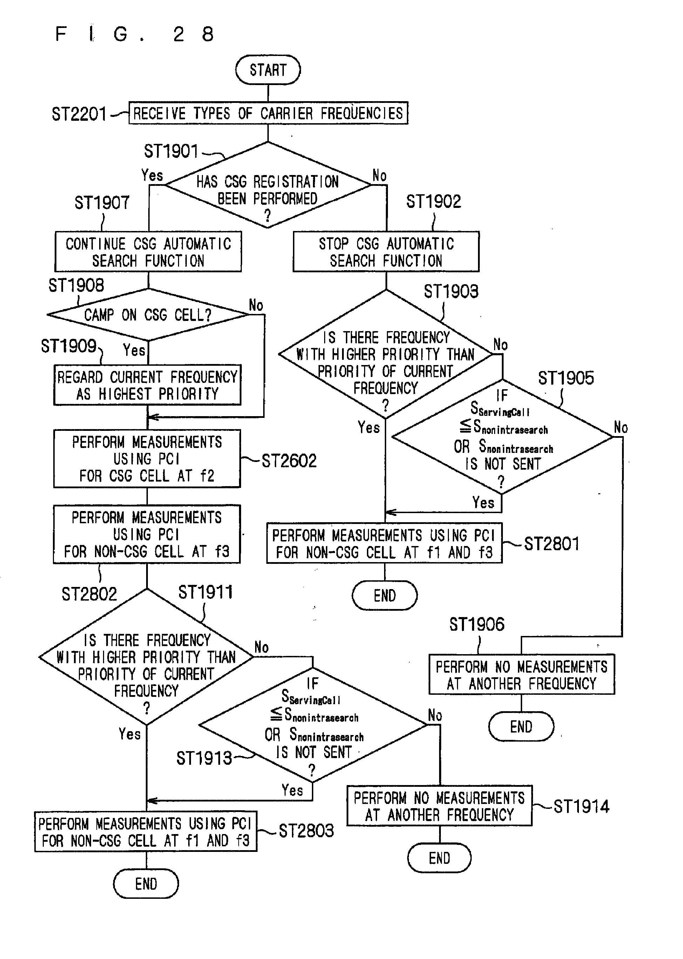

A specific example of the measurement operation of neighbor cells for cell search by a user equipment in a case where the second modification of the second embodiment is applied is described with reference to FIG. 28. The same reference numerals as those of FIG. 19, FIG. 22 and FIG. 26 denote the corresponding portions, which are not described.
In Step ST2801, a user equipment performs measurement at a different frequency using the PCIs for non-CSG cells for detecting cells supporting an open access mode. On that occasion, a user equipment performs measurements using the PCIs for non-CSG cells for detecting cells supporting an open access mode, with the use of the types of carrier frequencies received from the core network in Step ST2201 at the carrier frequency (f1 of FIG. 27) for a macro cell and the carrier frequency (f3 of FIG. 27) for a macro cell that can be used by a HeNB/HNB operating in a hybrid access mode.
The cells supporting an open access mode may be a macro cell and a hybrid cell. In a case where the types of carrier frequencies have been determined in a static manner, the user equipment refers to the determined contents and performs measurements using the PCIs for non-CSG cells at the carrier frequency for a macro cell and the carrier frequency for a macro cell that can be used by the HeNB/HNB operating in a hybrid access mode for detecting cells supporting an open access mode.
In Step ST2802, the user equipment performs measurements at a different frequency using the PCIs for non-CSG cells for detecting a hybrid cell. On that occasion, the user equipment performs measurements using the PCIs for non-CSG cells for detecting a hybrid cell, with the use of the types of carrier frequencies received from the core network in Step ST2201 at the carrier frequency (f3 of FIG. 27) for a macro cell that can be used by a HeNB/HNB operating in a hybrid access mode. In a case where the types of carrier frequencies have been determined in a static manner, the user equipment refers to the determined contents and performs measurements using the PCIs for non-CSG cells at the carrier frequency for a macro cell that can be used by a HeNB/HNB operating in a hybrid access mode for detecting a hybrid cell.
In Step ST2803, the user equipment performs measurements at a different frequency using the PCIs for non-CSG cells for detecting cells supporting an open access mode. On that occasion, the user equipment performs measurements using the PCIs for non-CSG cells for detecting cells supporting the open access mode, with the use of the types of carrier frequencies received from the core network in Step ST2201 at the carrier frequency (f1 of FIG. 27) for a macro cell and the carrier frequency (f3 of FIG. 27) for a macro cell that can be used by the HeNB/HNB operating in a hybrid access mode.
The cells supporting an open access mode may be a macro cell and a hybrid cell. In a case where the types of carrier frequencies have been determined in a static manner, the user equipment refers to the determined contents and performs measurements using the PCIs for non-CSG cells at the carrier frequency for a macro cell and the carrier frequency for a macro cell that can be used by the HeNB/HNB operating in a hybrid access mode for detecting cells supporting an open access mode.

The second modification of the second embodiment can achieve the effects below in addition to those of the second embodiment and the first modification of the second embodiment. In a case of performing measurements of neighbor cells for searching for a base station supporting a hybrid access mode, the user equipment is only required to perform measurements of neighbor cells for cell search at a carrier frequency for a macro cell that can be used by the HeNB/HNB operating in a hybrid access mode.
That is, in performing a search operation for searching for a base station supporting a hybrid access mode, it is possible to reduce the search operations at a carrier frequency for a macro cell that is not used as the carrier frequency of the HeNB/HNB operating in a hybrid access mode. Accordingly, the effects of reductions in the processing load and power consumption of a user equipment can be achieved.
Moreover, 3GPP is currently proposing to reserve a subset of PCIs/PSCs for hybrid cells from a set available for a macro cell and broadcast the information to the UE. As a specific example, Non-Patent Document 8 proposes to reserve the PCI range (hereinafter, referred to as PCI for hybrid cells) used by the hybrid cells in the PCIs for non-CSG cells.
When the PCI for hybrid cells is newly provided, according to the second modification of the second embodiment, in performing measurements of neighbor cells for searching for a base station supporting a hybrid access mode, the user equipment is only required to perform measurements of neighbor cells for cell search using the PCI for hybrid cells only at the carrier frequency for a macro cell that can be used by the HeNB/HNB operating in a hybrid access mode.
This enables to reduce the search operations using the PCI for hybrid cells that are performed at the carrier frequencies other than the carrier frequency for a hybrid cell. Accordingly, the effects of reductions in the processing load and power consumption of a user equipment can be achieved.

Note that the second modification of the second embodiment can be executed also in a case where the first modification of the second embodiment is not executed.

### Third Embodiment

A problem to be solved by a third embodiment is described. In a case where the solutions of the second embodiment, the first modification of the second embodiment, and the second modification of the second embodiment are executed, a new problem occurs as follows.
Cells belonging to a CSG with the same CSG-ID may use different frequencies. Specific description is given with reference to FIG. 25. It is considered here that the HeNB/HNB 1503, HeNB/HNB 1505 and HeNB/HNB 1511 belong to the same CSG. In the case where the second embodiment is executed, the HeNB/HNB 1511 is installed outside the coverage of a macro cell, and the user equipment that has not been registered with the CSG to which the HeNB/HNB belongs needs to receive the service of a mobile communication system, and thus operates in a hybrid access mode.
In that case, the second embodiment is executed, so that the carrier frequency of the HeNB/HNB 1511 operating in a hybrid access mode is taken as the carrier frequency for a macro cell. Meanwhile, the HeNB/HNB 1503 and HeNB/HNB 1505 are installed outside the coverage of a macro cell and operate in a closed access mode. Therefore, as conventionally, the carrier frequencies of the HeNB/HNB 1503 and HeNB/HNB 1505 are the carrier frequencies for CSG cells.
There is conceivable the service where the same owner has the cells having the same CSG-ID, the same charging benefit can be received from the cells having the same CSG-ID, or the same benefit can be received at a communication speed from the cells having the same CSG-ID. From the above, it is conceivable that a user may desire to select the cells having the same CSG-ID as the cell reselection destination or handover destination. Further, it is conceivable that a user may similarly desire to select the cells having the same CSG-ID also in the case where the user registers with only one CSG-ID.
As described above, in order to select the cells having the same CSG-ID, it is required to use the carrier frequency (f1 of FIG. 25) for a macro cell for detecting a hybrid cell and to use the carrier frequency (f2 of FIG. 25) for a CSG cell for detecting a CSG cell.
As described above, in realizing a request that the same CSG-ID is intended to be used continuously, there arise problems of increases in the processing load and power consumption in the search operation of a user equipment.

A solution in the third embodiment is disclosed below. In a mobile communication system in which carrier frequencies for CSG cells are provided, the access mode of a HeNB/HNB is set to a hybrid access mode. In a case where the carrier frequency for a macro cell differs from the carrier frequency for a CSG cell, the access mode of the HeNB/HNB is set to a hybrid access mode.
All HeNBs/HNBs installed outside the coverage of a macro cell may become a hybrid access mode. Alternatively, part of the HeNBs/HNBs installed outside the coverage of a macro cell may become the hybrid access mode. In the case where part of the HeNBs/HNBs is set to the hybrid access mode, the required HeNBs/HNBs may be set to the hybrid access mode. Specific examples of the required cells include cells installed outside the coverage of a macro cell, from which a user equipment that has not been registered with a CSG to which the HeNBs/HNBs within the coverage of the HeNBs/HNBs belong receives the service of a mobile communication system.
In the third embodiment, the access mode of the cell belonging to the same CSG as the CSG to which the HeNB/HNB operating in the hybrid access mode belongs is set to a hybrid access mode. Alternatively, even when the cell belonging to the same CSG as the CSG to which the HeNB/HNB operating in the hybrid access mode belongs is installed within the coverage of the macro cell, the access mode may be set to a hybrid access mode.
The carrier frequency of the HeNB/HNB operating in the hybrid access mode is set to the carrier frequency for a macro cell. Alternatively, the carrier frequency of the HeNB/HNB operating in the hybrid access mode may be set to a frequency different from the carrier frequency for a CSG cell.

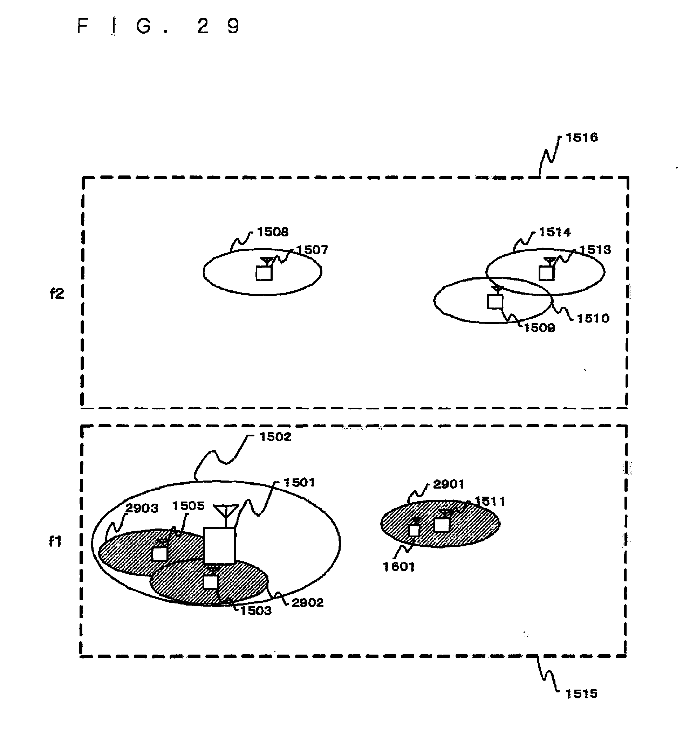

FIG. 29 is a conceptual diagram of the solution of the third embodiment. The same reference numerals as those of FIG. 15 and FIG. 16 denote the corresponding portions, which are not described.
For example, the user equipment 1601 is present outside the coverage of the macro cell. The HeNB/HNB 1509, HeNB/HNB 1511 and HeNB/HNB 1513 are installed outside the coverage of the macro cell and operate in a closed access mode. The user equipment 1601 has not been registered with the CSG to which the HeNB/HNB 1511 belongs. Meanwhile, the user equipment 1601 needs to receive the service of a mobile communication system. Considered here is the case in which the user equipment 1601 is located in a coverage 2901 of the HeNB/HNB 1511.
In the solution of the third embodiment, the access mode of the HeNB/HNB 1511 is set to a hybrid access mode. As a result, the coverage 2901 of the HeNB/HNB 1511 supports an open access mode, which is diagonally hatched in FIG. 29. The HeNB/HNB 1503 and HeNB/HNB 1505 are present as the cells belonging to the CSG to which the HeNB/HNB 1511 belongs. In that case, in the solution of the third embodiment, the access modes of the HeNB/HNB 1503 and HeNB/HNB 1505 are also set to the hybrid access mode. As a result, a coverage 2902 of the HeNB/HNB 1503 and a coverage 2903 of the HeNB/HNB 1505 support an open access mode, which is diagonally hatched in FIG. 29.
The carrier frequencies of the HeNB/HNB 1503, HeNB/HNB 1505 and HeNB/HNB 1511 are a carrier frequency for a macro cell. In FIG. 29, the carrier frequency is f1.

A specific example of the method of selecting a cell to become a hybrid access mode is similar to that of the first embodiment, which is not described. A specific example of the method of selecting a cell whose setting as a hybrid access mode is released is similar to that of the first embodiment, which is not described. A specific example of the method of setting a hybrid access mode is similar to that of the first embodiment, which is not described. A specific example of the method of setting the carrier frequency of a HeNB/HNB is similar to that of the first embodiment, which is not described.
Two specific examples of the method of selecting, among HeNBs/HNBs installed outside of the coverage of a macro cell, a cell belonging to the same CSG as that of the required HeNB/HNB (hereinafter, referred to as a cell having the same CSG-ID as that of the required HeNB/HNB) are disclosed.
(1) A core network searches for a cell having the same CSG-ID as that of the required HeNB/HNB. An S1 interface may be used in instructing the cell having the same CSG-ID as that of the required HeNB/HNB to set a hybrid access mode.
(2) Among HeNBs/HNBs installed outside the coverage of a macro cell, the HeNB/HNB set in the hybrid access mode searches for a cell belonging to the same CSG-ID. An X1 interface or S1 interface may be used in instructing the cell having the same CSG-ID as that of the required HeNB/HNB to set a hybrid access mode.
A specific example of the measurement operation of neighbor cells for cell search by a user equipment in the case where the third embodiment is applied is similar to that of the first embodiment (FIG. 19), which is not described. The first modification of the second embodiment can be applied, which achieves similar effects. The second modification of the second embodiment can be applied, which achieves similar effects.
The third embodiment can be used in combination with the fourth embodiment and the fifth embodiment.

The third embodiment can achieve the effects below, in addition to those of the second embodiment, first modification of the second embodiment and second modification of the second embodiment. It is only required to execute a search operation using a single carrier frequency for selecting the cells having the same CSG-ID.
It is not required to change a carrier frequency in the search operation for selecting a cell having the same CSG-ID. This enables to reduce the control time required for selecting the cell having the same CSG-ID. Accordingly, effects of reductions in the processing load and power consumption of a user equipment can be achieved.

### Fourth Embodiment

A fourth embodiment discloses another solution for a similar problem to that of the first embodiment. In a mobile communication system in which carrier frequencies for CSG cells are provided, the access mode of the HeNB/HNB is set to a hybrid access mode. Further, in the case where the carrier frequency for a macro cell differs from the carrier frequency for a CSG cell, the access mode of a HeNB/HNB is set to a hybrid access mode.
All HeNBs/HNBs installed outside the coverage of a macro cell may become a hybrid access mode. Alternatively, part of the HeNBs/HNBs installed outside the coverage of a macro cell may become the hybrid access mode. In the case where part of the HeNBs/HNBs is set to the hybrid access mode, the required HeNBs/HNBs may be set to the hybrid access mode. Specific examples of the required cells include cells installed outside the coverage of a macro cell, from which a user equipment that has not been registered with a CSG to which the HeNBs/HNBs within the coverage of the HeNBs/HNBs belong receives the service of a mobile communication system.
The carrier frequency of the HeNB/HNB operating in the hybrid access mode is set to the carrier frequency for a macro cell in an open mode and set to the carrier frequency for a CSG cell in a closed access mode. Alternatively, one HeNB/HNB may use a plurality of carrier frequencies. Still alternatively, one HeNB/HNB may use a carrier frequency for a plurality of access modes. The descriptions of the carrier frequency for a CSG cell and the carrier frequency for a macro cell are similar to those of the first embodiment, which are not described.

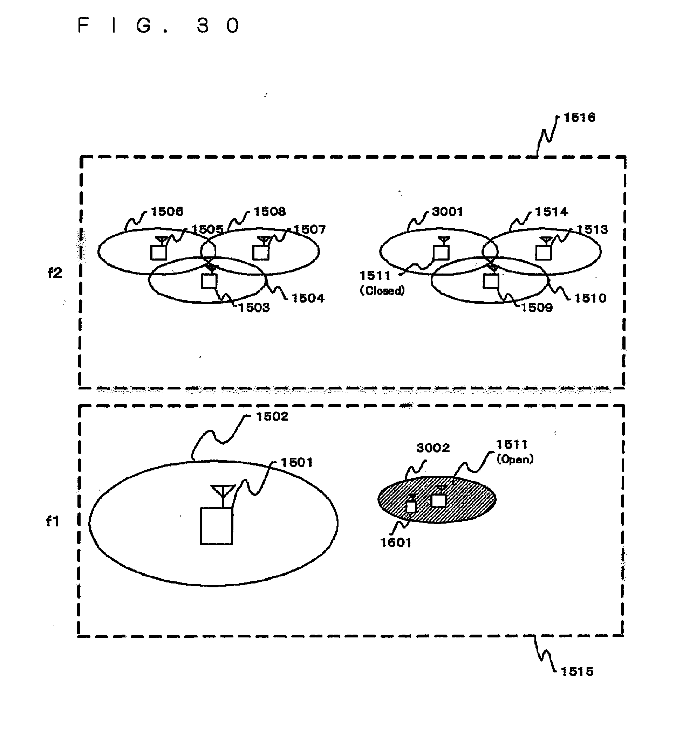

FIG. 30 is a conceptual diagram of the solution of the fourth embodiment. The same reference numerals as those of FIG. 15 and FIG. 16 denote the corresponding portions, which are not described.
For example, the user equipment 1601 is present outside the coverage of the macro cell. The HeNB/HNB 1509, HeNB/HNB 1511 and HeNB/HNB 1513 are installed outside the coverage of the macro cell and operate in a closed access mode. The user equipment 1601 has not been registered with the CSG to which the HeNB/HNB 1511 belongs.
Meanwhile, the user equipment 1601 needs to receive the service of a mobile communication system. Considered here is the case in which the user equipment 1601 is located in a coverage 3002 of the HeNB/HNB 1511. In the solution of the fourth embodiment, the access mode of the HeNB/HNB 1511 is set to a hybrid access mode. As a result, the coverage 3002 of the HeNB/HNB 1511 supports an open access mode.
Further, in the solution of the fourth embodiment, the carrier frequency of the HeNB/HNB 1511 is set to the carrier frequency for a macro cell in an open access mode and the carrier frequency for a CSG cell in a closed access mode. The coverage of the HeNB/HNB 1511 in a closed access mode is represented by 3001. The coverage of the HeNB/HNB 1511 in an open access mode is represented by 3002. Those are diagonally hatched in FIG. 30. In FIG. 30, the carrier frequencies of the HeNB/HNB 1511 are f1 and f2.

A specific example of the method of selecting a cell to become a hybrid access mode is similar to that of the first embodiment, which is not described. A specific example of the method of selecting a cell whose setting as a hybrid access mode is released is similar to that of the first embodiment, which is not described.
A specific example of the method of setting a hybrid access mode is similar to that of the first embodiment, which is not described. A specific example of the method of setting the carrier frequency of a HeNB/HNB is similar to that of the first embodiment, which is not described. A specific example of performing a measurement operation of neighbor cells for cell search by a user equipment is similar to that of the first embodiment (FIG. 19), which is not described.

The fourth embodiment can achieve effects below. In a case where a HeNB/HNB operating in a closed access mode operates with the use of the carrier frequency for CSG cells, a problem that a user equipment that has not been registered with the CSG to which the HeNB/HNB belongs cannot receive the service of a mobile communication system in a location in which the HeNB/HNB is installed outside the coverage of a macro cell can be solved without installing a macro cell which costs considerably.
That is, through setting of a HeNB/HNB operating in a closed access mode to a hybrid access mode without installing a macro cell, a user equipment that has not been registered with a CSG to which the HeNB/HNB belongs is allowed to receive the service of a mobile communication system in the location in which the HeNB/HNB is installed outside the coverage of a macro cell.

### First Modification of Fourth Embodiment

A problem to be solved by a first modification of the fourth embodiment is described. In a case where the solution of the fourth embodiment is executed, a new problem occurs as follows. Discussed here is the case in which there are a plurality of carrier frequencies other than the carrier frequency (serving frequency) of a mobile communication on which camping is performed or during in communication.
In this case, an unnecessary process below is generated in the measurement operation of neighbor cells for cell search by a user equipment. Specific description is given with reference to FIG. 19. In the measurements of Step ST1910, a user equipment performs CSG registration. That is, in Step ST1910, a user equipment performs measurements of neighbor cells for searching for base stations supporting a closed access mode (a CSG cell and a hybrid cell). Accordingly, performing the search operation at the carrier frequency (f1 of FIG. 30) at which there is no base station supporting a closed access mode, that is, at which there is only a base station operating in an open access mode in Step ST1910, is an unnecessary process per se.
In the measurements of Step ST1904 and Step ST1912, a user equipment performs measurements of neighbor cells for searching for base stations (a macro cell and a hybrid cell) supporting an open access mode. Accordingly, the search operation at the carrier frequency (f2 of FIG. 30) at which there is no base station supporting an open access mode, that is, at which there is only a base station operating in a closed access mode in Step ST1910, is an unnecessary process per se.
Due to the unnecessary process in a user equipment described above, a problem that power consumption of a user equipment increases occurs.

A solution in the first modification of the fourth embodiment is disclosed below. A user equipment is caused to recognize the types of carrier frequencies.
Specific examples of the types of carrier frequencies are similar to those of the first embodiment, which are not described. A specific example of the information indicating carrier frequencies is similar to that of the first modification of the first embodiment, which is not described. A specific example of the method of causing a user equipment to recognize the types of carrier frequencies is similar to that of the first modification of the first embodiment, which is not described. A specific example of the method of notifying a user equipment of the type of a carrier frequency from the core network is similar to that of the first modification of the first embodiment, which is not described.

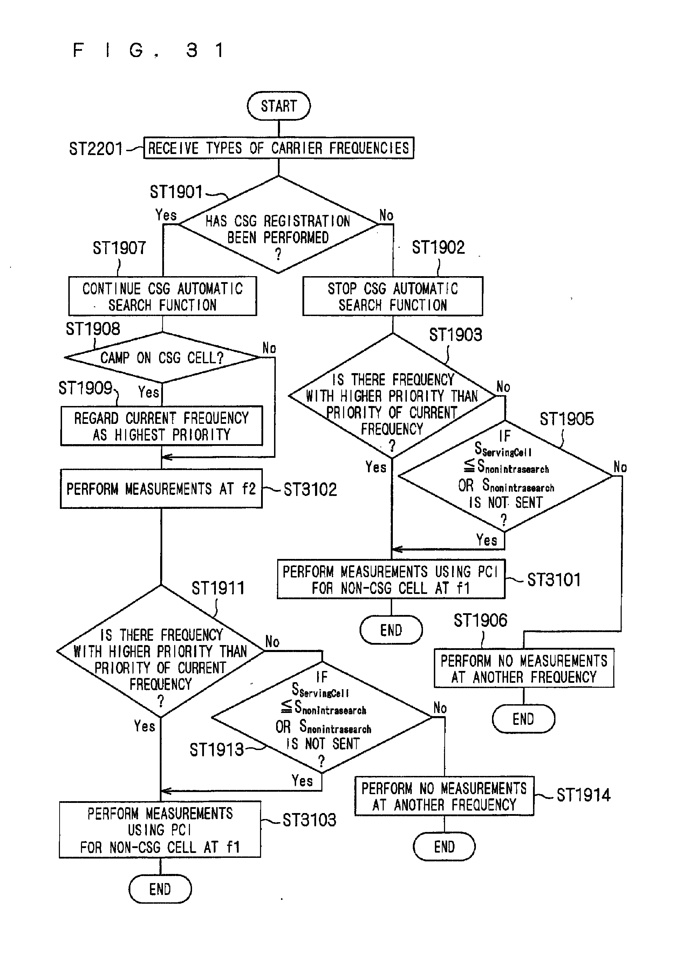

A specific example of the measurement operation of neighbor cells for cell search by a user equipment in the case where the first modification of the fourth embodiment is applied is described with reference to FIG. 31. The same reference numerals s those of FIG. 19 and FIG. 22 denote the corresponding portions, which are not described.
In Step ST3101, a user equipment performs measurements at a different frequency using the PCIs for non-CSG cells for detecting cells supporting an open access mode. On that occasion, the user equipment performs measurements using the PCIs for non-CSG cells for detecting cells supporting an open access mode, with the use of the types of carrier frequencies received from the core network in Step ST2201 at the carrier frequency (f1 of FIG. 30) for a macro cell.
The cells supporting an open access mode may be a macro cell and a hybrid cell. In a case where the types of carrier frequencies have been determined in a static manner, the user equipment refers to the determined contents and performs measurements using the PCIs for non-CSG cells at the carrier frequency for a macro cell for detecting cells supporting an open access mode.
In Step ST3102, in order to detect a suitable cell supporting a closed access mode, a user equipment performs measurements at a different frequency using all PCIs for detecting a CSG cell and a hybrid cell. On that occasion, a user equipment performs measurements using all PCIs for detecting a CSG cell and a hybrid cell, with the use of the types of carrier frequencies received from a core network in Step ST2201 at the carrier frequency (f2 of FIG. 30) for a CSG cell. In a case where the types of carrier frequencies have been determined in a static manner, a user equipment refers to the determined contents and, for detecting a CSG cell, performs measurements using all PCIs for detecting a CSG cell and a hybrid cell at the carrier frequency for a CSG cell.
In Step ST3103, the user equipment performs measurements at a different frequency using the PCIs for non-CSG cells for detecting cells supporting an open access mode. On that occasion, the user equipment performs measurements using the PCIs for non-CSG cells for detecting a cell supporting an open access mode, with the use of the types of carrier frequencies received from the core network in Step ST2201 at the carrier frequency (f1 of FIG. 30) for a macro cell.
The cells supporting an open access mode may be a macro cell and a hybrid cell. In a case where the types of carrier frequencies have been determined in a static manner, the user equipment refers to the determined contents and performs measurements using the PCIs for non-CSG cells for detecting cells supporting an open access mode at the carrier frequency for a macro cell.

The first modification of the fourth embodiment can achieve the effects below in addition to those of the fourth embodiment. In a case of performing measurements of neighbor cells for searching for a base station supporting an open access mode, the user equipment is only required to perform measurements of neighbor cells for cell search at a carrier frequency for a macro cell.
That is, in performing a search operation for searching for a base station supporting an open access mode, the search operations can be reduced at the carrier frequency at which there is only a base station operating in a closed access mode. This can achieve effects of reductions in the processing load and power consumption of a user equipment. The effects become more conspicuous for a user equipment with lower capability that cannot be registered with a CSG.
Further, in a case of performing measurements of neighbor cells for searching for a base station supporting a closed access mode, the user equipment is only required to perform measurements of neighbor cells for cell search at the carrier frequency for a CSG cell. That is, in performing the search operation for searching for a base station supporting a closed access mode, it is possible to reduce the search operations at the carrier frequency at which there is only a base station operating in an open access mode. This can achieve effects of reductions in the processing load and power consumption of a user equipment.
The effects become more conspicuous compared with the second embodiment, first modification of the second embodiment, second modification of the second embodiment, third embodiment, first modification of the third embodiment and second modification of the third embodiment. In the second embodiment, first modification of the second embodiment, second modification of the second embodiment, third embodiment, first modification of the third embodiment and second modification of the third embodiment, a user equipment needs to perform search using the frequencies belonging to a plurality of types for detecting a suitable cell supporting a closed access mode.
That is, in the second embodiment including the modifications and the third embodiment including the modifications, a user equipment that has been registered with a CSG needs to perform search using a plurality of frequencies including the carrier frequency for a CSG cell and the carrier frequency for a macro cell for detecting a suitable CSG cell. The search operation through change of carrier frequencies requires a large processing load for a user equipment.
Further, a user equipment that has been registered with a CSG needs to perform a search operation at a different frequency for detecting a suitable CSG cell even when the reception quality of a serving cell is good or even in a case of a high reselection priority of a carrier frequency of a base station on which camping is currently performed. Accordingly, the fact that target carrier frequencies for detecting a suitable cell supporting a closed access mode can be reduced by performing the present embodiment leads to a large effect in a reduction in the processing load of a user equipment.

### Second Modification of Fourth Embodiment

A problem to be solved by a second modification of the fourth embodiment is described. In a case where the solution of the first modification of the fourth embodiment is executed, a new problem occurs as follows.

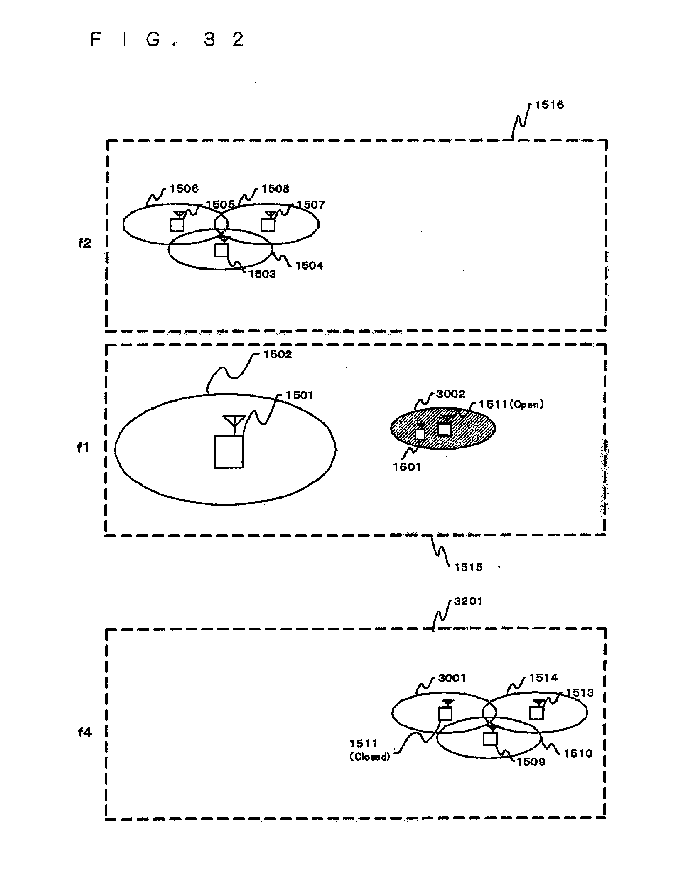

FIG. 32 is a conceptual diagram. The same reference numerals as those of FIG. 15, FIG. 16 and FIG. 30 denote the corresponding portions, which are not described.
The frequency used by the macro cell 1501 is the carrier frequency (f1) for a macro cell. The carrier frequency layer for a macro cell is represented by 1515. The frequency used by the HeNB/HNB 1503, HeNB/HNB 1505 and HeNB/HNB 1507 is the carrier frequency (f2) for a CSG cell. It may be the carrier frequency for a CSG cell that is not used as the carrier frequency for a closed access mode of the HeNB/HNB operating in a hybrid access mode or the carrier frequency dedicated to a CSG cell.
The carrier frequency layer for the CSG cell is represented by 1516. The frequency used by the HeNB/HNB 1513 in a closed access mode of the HeNB/HNB 1509 and the HeNB/HNB 1511 operating in the hybrid access mode is the carrier frequency (f4) for a CSG cell. f4 represents the carrier frequency for a CSG cell that is usable in a closed access mode of the HeNB/HNB operating in a hybrid access mode. The carrier frequency layer for a CSG cell that is usable in the closed access mode of the HeNB/HNB operating in a hybrid access mode is represented by 3201.
In other words, f2 represents the carrier frequency for a CSG cell that is not used as the carrier frequency for a closed access mode of a HeNB/HNB operating in a hybrid access mode, and f4 is the carrier frequency for a CSG cell that can be used in a closed access mode of a HeNB/HNB operating in a hybrid access mode. The coverage of the HeNB/HNB 1511 in a closed access mode is represented by 3001. The coverage of the HeNB/HNB 1511 in an open access mode is represented by 3002, which is diagonally hatched in FIG. 30.

For example, in the case of FIG. 32, an unnecessary process described below is generated in the measurement operation of neighbor cells for cell search by a user equipment. A specific description is given with reference to FIG. 31.
In Step ST3102, a user equipment performs measurement of neighbor cells for searching for a cell supporting a closed mode, that is, a CSG cell or hybrid cell. Accordingly, performing the search operation with the use of the PCIs for non-CSG cells at the carrier frequency (f2 of FIG. 32) for a CSG cell at which there is no base station of a hybrid cell, that is, which is not used as the carrier frequency for a closed access mode of a HeNB/HNB operating in a hybrid access, in Step ST3102 is an unnecessary procedure per se. Due to the unnecessary process by a user equipment, a problem that power consumption of a user equipment increases occurs.

A solution in the second modification of the fourth embodiment is disclosed below. A user equipment is caused to recognize the types of carrier frequencies.
Three specific examples of the types of carrier frequencies are disclosed below. The (1) carrier frequency for a CSG cell that can be used in a closed access mode of a HeNB/HNB operating in a hybrid access mode; (2) carrier frequency for a CSG cell that can be used in a closed access mode of a HeNB/HNB operating in a hybrid access mode, carrier frequency for a CSG cell, and carrier frequency for a macro cell, and (3) carrier frequency are used as the carrier frequency for a CSG cell that can be used in the closed access mode of the HeNB/HNB operating in a hybrid access mode, as the carrier frequency for a CSG cell, or the carrier frequency for a macro cell.
A specific example of the information indicating the carrier frequencies is similar to that of the first modification of the first embodiment, which is not described. A specific example of the method of causing a user equipment to recognize the types of carrier frequencies is similar to that of the first modification of the first embodiment, which is not described. A specific example of the method of notifying a user equipment of the types of carrier frequencies from the core network is similar to that of the first modification of the first embodiment, which is not described.

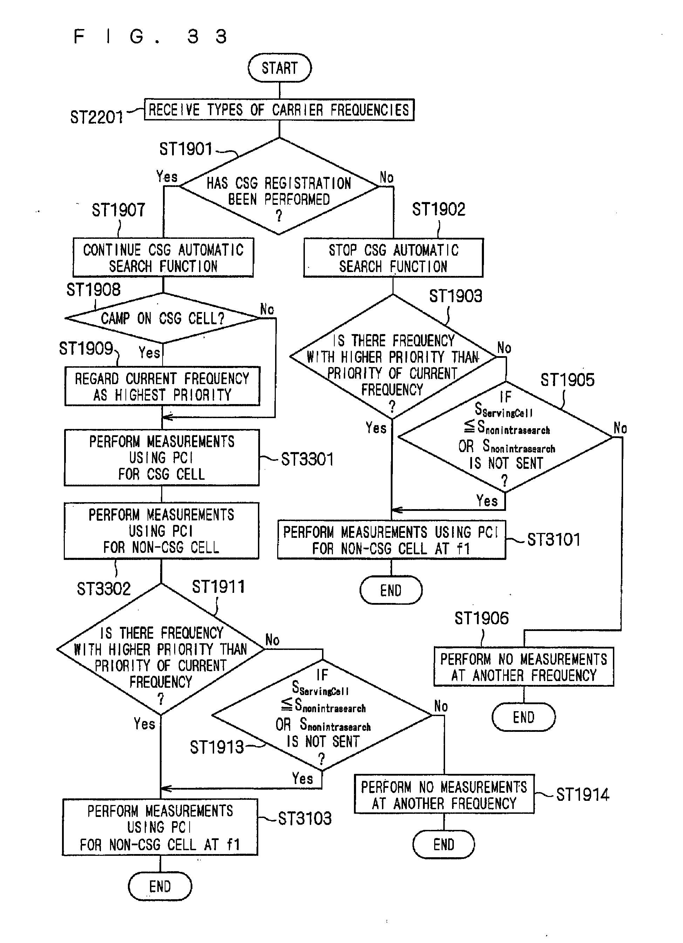

A specific example of the measurement operation of neighbor cells for cell search by a user equipment in a case where the second modification of the fourth embodiment is applied is described with reference to FIG. 33. The same reference numerals as those of FIG. 19 and FIG. 22 denote the corresponding portions, which are not described.
In Step ST3301, a user equipment performs measurements at a different frequency using the PCIs for CSG cells for detecting a suitable CSG cell. On that occasion, the user equipment performs measurements using the PCIs for CSG cells for detecting a CSG cell, with the use of the types of carrier frequencies received from the core network in Step ST2201 at the carrier frequency (f4 of FIG. 32) for a CSG cell that can be used in the closed access mode of the HeNB/HNB operating in a hybrid access mode and the carrier frequency (f2 of FIG. 32) for a CSG cell that is not used as the carrier frequency for a closed access mode of a HeNB/HNB operating in a hybrid access mode.
The user equipment may perform measurements using the PCIs for CSG cells for detecting a CSG cell, with the use of the types of carrier frequencies received from the core network in Step ST2201 at the carrier frequencies (f2 and f4 of FIG. 32) for a CSG cell. In a case where the types of carrier frequencies have been determined in a static manner, the user equipment refers to the determined contents and performs measurements using the PCIs for CSG cells at the carrier frequency for a CSG cell that can be used in the closed access mode of a HeNB/HNB operating in a hybrid access mode and the carrier frequency for a CSG cell that is not used as the carrier frequency for a closed access mode of the HeNB/HNB operating in a hybrid access mode for detecting a CSG cell.
Alternatively, in a case where the types of carrier frequencies have been determined in a static manner, the user equipment may refer to the determined contents and perform measurements using the PCIs for CSG cells for detecting a CSG cell at the carrier frequencies (f2 and f4 of FIG. 32) for a CSG cell.
In Step ST3302, the user equipment performs measurements at a different frequency using the PCIs for non-CSG cells for detecting a closed access mode of the HeNB/HNB operating in a hybrid access mode. On that occasion, the user equipment performs measurements using the PCIs for non-CSG cells for detecting a hybrid cell, with the use of the types of carrier frequencies received from the core network in Step ST2201 at the carrier frequency (f4 of FIG. 32) for a CSG cell that can be used in the closed access mode of the HeNB/HNB operating in a hybrid access mode.
In a case where the types of carrier frequencies have been determined in a static manner, the user equipment refers to the determined contents and performs measurements using the PCIs for non-CSG cells for detecting a hybrid cell, at the carrier frequency (f4 of FIG. 32) for a CSG cell that can be used in the closed access mode of the HeNB/HNB operating in a hybrid access mode.

The second modification of the fourth embodiment can achieve the effects below in addition to those of the fourth embodiment and the first modification of the fourth embodiment. In a case of performing measurements of neighbor cells for searching for a base station supporting a hybrid access mode, the user equipment is only required to perform measurements of neighbor cells for cell search at a carrier frequency for a CSG cell that can be used in the closed access mode of the HeNB/HNB operating in a hybrid access mode.
That is, in performing a search operation for searching for a base station supporting a hybrid access mode, it is possible to reduce the search operations at a carrier frequency for a CSG cell that is not used as the carrier frequency of the HeNB/HNB operating in a hybrid access mode. Accordingly, the effects of reductions in the processing load and power consumption of a user equipment can be achieved.
Moreover, 3GPP is currently proposing to reserve a subset of PCIs/PSCs for hybrid cells from a set available for a macro cell and broadcast the information to the UE. As a specific example, Non-Patent Document 8 proposes to reserve the PCI range (hereinafter, referred to as PCI for hybrid cells) used by the hybrid cells in the PCIs for non-CSG cells.
When the PCI for hybrid cells is newly provided, according to the second modification of the fourth embodiment, in a case of performing measurements of neighbor cells for searching for a base station supporting a hybrid access mode, the user equipment is only required to perform measurements of neighbor cells for cell search using the PCI for hybrid cells only at the carrier frequency for a hybrid cell. This enables to reduce the search operations using the PCIs for hybrid cells at the carrier frequencies other than the carrier frequency for a hybrid cell. Accordingly, the effects of reductions in the processing load and power consumption of a user equipment can be achieved.

Note that the second modification of the fourth embodiment can be executed also in a case where the first modification of the fourth embodiment is not executed.

### Fifth Embodiment

A fifth embodiment discloses another solution for a problem similar to that of the first embodiment. In a mobile communication system in which carrier frequencies for CSG cells are provided, the access mode of a HeNB/HNB is set to a hybrid access mode. Further, in a case where the carrier frequency for a macro cell differs from the carrier frequency for a CSG cell, the access mode of a HeNB/HNB is set to a hybrid access mode.
All HeNBs/HNBs installed outside the coverage of a macro cell may become a hybrid access mode. Alternatively, part of the HeNBs/HNBs installed outside the coverage of a macro cell may become a hybrid access mode. In the case where part of the HeNBs/HNBs is in the hybrid access mode, the required HeNBs/HNBs may become the hybrid access mode. Specific examples of the required cells include cells installed outside the coverage of a macro cell, from which a user equipment that has not been registered with a CSG to which the HeNBs/HNBs within the coverage of the HeNBs/HNBs belong receive the service of a mobile communication system.
The carrier frequency of the HeNB/HNB operating in the hybrid access mode is set to a carrier frequency dedicated to a hybrid access mode. Alternatively, a carrier frequency different from the carrier frequency of a CSG cell and the carrier frequency for a macro cell may be used.
The carrier frequency dedicated to a hybrid access mode may be a frequency included in the frequency band dedicated to a hybrid access mode. The carrier frequency dedicated to a hybrid access mode may indicate the frequency band dedicated to a hybrid access mode. Further, the carrier frequency dedicated to a hybrid access mode may indicate part of frequencies included in the frequency band dedicated to a hybrid access mode. Alternatively, in a case where there is a frequency band for a CSG cell, the carrier frequency dedicated to a hybrid access mode may be a carrier frequency included in the frequency band for a CSG cell.
Still alternatively, in a case where there is a frequency band for a macro cell, the carrier frequency dedicated to a hybrid access mode may be part of carrier frequencies included in the frequency band for a macro cell. The descriptions of the carrier frequencies for CSG cells and carrier frequencies for macro cells are similar to those of the first embodiment, which are not described.

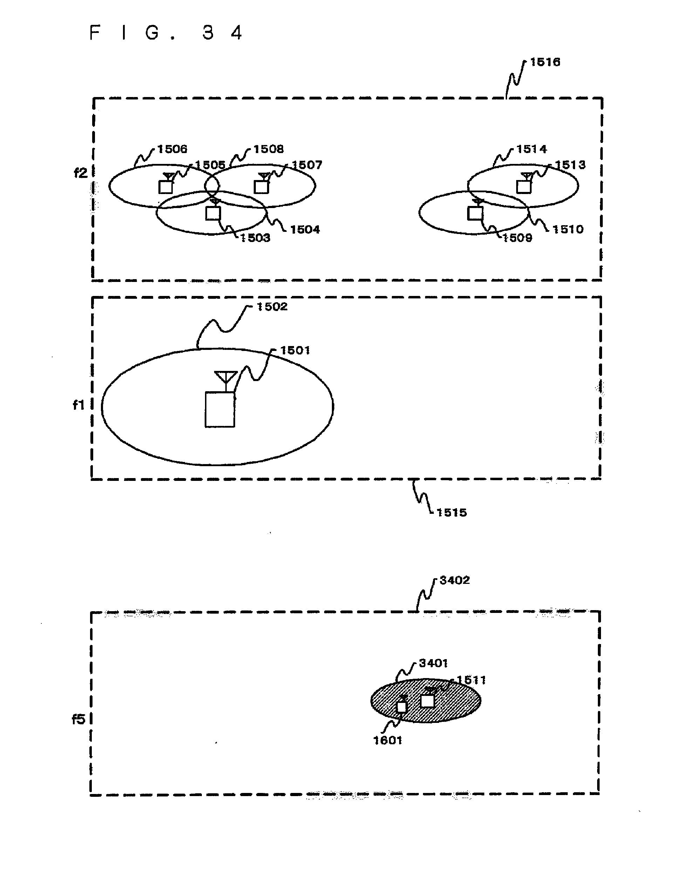

FIG. 34 is a conceptual diagram of a solution of the fifth embodiment. The same reference numerals as those of FIG. 15 and FIG. 16 denote the corresponding portions, which are not described. For example, the user equipment 1601 is present outside the coverage of a macro cell. The HeNB/HNB 1509, HeNB/HNB 1511 and HeNB/HNB 1513 are installed outside the coverage of a macro cell and operate in a closed access mode.
The user equipment 1601 has not been registered with the CSG to which the HeNB/HNB 1511 belongs. Meanwhile, the user equipment 1601 needs to receive the service of a mobile communication system. Considered here is the case where the user equipment 1601 is located in a coverage 3401 of the HeNB/HNB 1511. In the solution of the fifth embodiment, the access mode of the HeNB/HNB 1511 is a hybrid access mode.
As a result, the coverage 3401 of the HeNB/HNB 1511 supports an open access mode, which is diagonally hatched in FIG. 34. The carrier frequency of the HeNB/HNB 1511 is a carrier frequency dedicated to a hybrid access mode. In FIG. 34, the carrier frequency of the HeNB/HNB 1511 is f5. The carrier frequency layer dedicated to a hybrid access mode is represented by 3402.

A specific example of the method of selecting a cell to become a hybrid access mode is similar to that of the first embodiment, which is not described. A specific example of the method of selecting a cell whose setting as a hybrid access mode is released is similar to that of the first embodiment, which is not described. A specific example of the method of setting a hybrid access mode is similar to that of the first embodiment, which is not described.
A specific example of the method of setting the carrier frequency of a HeNB/HNB is similar to that of the first embodiment, which is not described. A specific example of a measurement operation of neighbor cells for cell search by a user equipment in the case where the fifth embodiment is applied is similar to that of the first embodiment (FIG. 19), which is not described.

The fifth embodiment can achieve effects below. In a case where a HeNB/HNB operating in a closed access mode operates with the use of the carrier frequency for a CSG cell, a problem that a user equipment that has not been registered with the CSG to which the HeNB/HNB belongs cannot receive the service of a mobile communication system in a location in which the HeNB/HNB is installed outside the coverage of a macro cell can be solved without installing a macro cell which costs considerably.
That is, through setting of a HeNB/HNB operating in a closed access mode to a hybrid access mode without installing a macro cell, a user equipment that has not been registered with a CSG to which the HeNB/HNB belongs is allowed to receive the service of a mobile communication system in the location in which the HeNB/HNB is installed outside the coverage of a macro cell.

### First Modification of Fifth Embodiment

A problem to be solved by a first modification of the fifth embodiment is described. In a case where the solution of the fifth embodiment is executed, a new problem occurs as follows. Considered here is the case where there are a plurality of carrier frequencies other than the carrier frequency (serving frequency) of a base station on which camping is performed or during communication. In this case, an unnecessary process is generated as described below in the measurement operation of neighbor cells for cell search by a user equipment. Specific description is given with reference to FIG. 19.
In the measurements of Step ST1904 and Step ST1912, a user equipment performs measurements of neighbor cells for searching for a base station supporting an open access mode. Accordingly, performing the search operation at the carrier frequency (f2 of FIG. 34) at which there is no base station supporting an open access mode, that is, at which there is only a base station operating in a closed access mode, in Step ST1904 and Step ST1912 is an unnecessary process per se.
In the measurements of Step ST1910, a user equipment performs measurements of neighbor cells for searching for a suitable cell supporting a closed access mode. That is, the user equipment performs measurements of neighbor cells for searching for a CSG cell operating at the carrier frequency (f2 of FIG. 34) for a CSG cell and a hybrid cell operating at the carrier frequency (f5 of FIG. 34) for dedicated to a hybrid access mode.
Accordingly, performing the search operation at the carrier frequency (f1 of FIG. 34) at which there is no base station supporting a closed access mode, that is, at which there is only a base station operating in an open access mod, in Step ST1910 is an unnecessary process per se. That is, the measurements using the PCIs for non-CSG cells at the carrier frequency (f2 of FIG. 34) for a CSG cell, the measurements using the PCIs for CSG cells at the carrier frequency (f5 of FIG. 34) dedicated to a hybrid access mode, and the search operation at the carrier frequency (f1 of FIG. 34) for a macro cell in Step ST1910 is an unnecessary process per se.
Due to the unnecessary process in a user equipment, a problem that power consumption of a user equipment increases occurs.

A solution in the first modification of the fifth embodiment is disclosed below. A user equipment is caused to recognize the types of carrier frequencies.
Two specific examples of the types of carrier frequencies are disclosed: (1) a carrier frequency for a CSG cell, a carrier frequency for a macro cell, and a carrier frequency dedicated to a hybrid access mode; and (2) a carrier frequency is used as the carrier frequency for a CSG cell, as the carrier frequency for a macro cell, or the carrier frequency dedicated to a hybrid access mode.
A specific example of the information indicating the carrier frequencies is similar to that of the first modification of the first embodiment, which is not described. A specific example of the method of causing a user equipment to recognize the types of carrier frequencies is similar to that of the first modification of the first embodiment, which is not described. A specific example of the method of notifying a user equipment of the type of the carrier frequency from the core network is similar to that of the first modification of the first embodiment, which is not described.

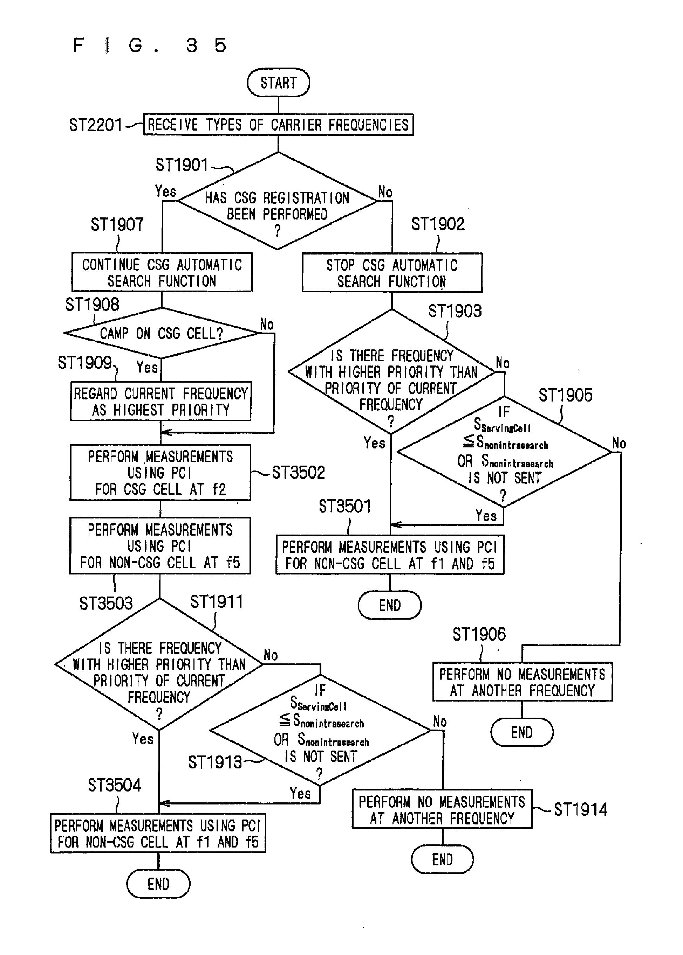

A specific example of the measurement operation of neighbor cells for cell search by a user equipment in a case where the first modification of the fifth embodiment is applied is described with reference to FIG. 35. The same reference numerals as those of FIGS. 19 and 22 denote the corresponding portions, which are not described.
In Step ST3501, a user equipment performs measurements at a different frequency using the PCIs for non-CSG cells for detecting a cell supporting an open access mode. On that occasion, a user equipment performs measurements using the PCIs for non-CSG cells for detecting CSG cells supporting an open access mode, with the use of the types of carrier frequencies received from the core network in Step ST2201 at the frequency (f1 of FIG. 34) for a macro cell and the carrier frequency (f5 of FIG. 34) dedicated to hybrid access.
The cells supporting an open access mode may be a macro cell and a hybrid cell. In a case where the types of carrier frequencies have been determined in a static manner, the user equipment refers to the determined contents and performs measurements using the PCIs for non-CSG cells for detecting CSG cells supporting an open access mode, at the carrier frequency for a macro cell and the carrier frequency dedicated to hybrid.
In Step ST3502, the user equipment performs measurements at a different frequency using the PCIs for CSG cells for detecting a suitable CSG cell. On that occasion, the user equipment performs measurements using the PCIs for CSG cells for detecting a CSG cell, with the use of the types of carrier frequencies received from the core network in Step ST2201 at the carrier frequency (f2 of FIG. 34) for a CSG cell. In a case where the types of carrier frequencies have been determined in a static manner, the user equipment refers to the determined contents and performs measurements using the PCIs for CSG cells at the carrier frequency for a CSG cell for detecting a CSG cell for detecting a hybrid cell.
In Step ST3503, the user equipment performs measurements at a different frequency using the PCIs for non-CSG cells for detecting a suitable cell supporting a closed access mode. On that occasion, the user equipment performs measurements using the PCIs for non-CSG cells for detecting a hybrid cell, with the use of the types of carrier frequencies received from the core network in Step ST2201 at the carrier frequency (f5 of FIG. 34) dedicated to a hybrid access mode. In a case where the types of carrier frequencies have been determined in a static manner, the user equipment refers to the determined contents and performs measurements using the PCIs for non-CSG cells at the carrier frequency for a macro cell.
In Step ST3504, the user equipment performs measurements at a different frequency using the PCIs for non-CSG cells for detecting a cell supporting an open access mode. On that occasion, the user equipment performs measurements using the PCIs for non-CSG cells for detecting cells supporting an open access mode, with the use of the types of carrier frequencies received from the core network in Step ST2201 at the carrier frequency (f1 of FIG. 34) for a macro cell and the carrier frequency (f5 of FIG. 34) dedicated to hybrid access.
The cells supporting an open access mode may be a macro cell and a hybrid cell. In a case where the types of carrier frequencies have been determined in a static manner, the user equipment refers to the determined contents and performs measurements using the PCIs for non-CSG cells at the carrier frequency for a macro cell and the carrier frequency dedicated to hybrid for detecting a hybrid cell.

The first modification of the fifth embodiment can achieve the effects below in addition to those of the fifth embodiment. In a case of performing measurements of neighbor cells for searching for a base station supporting a closed access mode, the user equipment is only required to perform measurements of neighbor cells for cell search at the carrier frequency for a CSG cell and a carrier frequency dedicated to a hybrid access mode.
That is, in the case of performing a search operation for searching for a base station supporting a closed access mode, it is possible to reduce the search operations at a carrier frequency at which there is only a base station operating in an open access mode. Accordingly, the effects of reductions in the processing load and power consumption of a user equipment can be achieved.
The search operation through change of carrier frequencies requires a high amount of processing load for a user equipment. In addition, a user equipment that has been registered with the CSG needs to perform a search operation at a different frequency for detecting a suitable CSG cell even when the reception quality of a serving cell is good or even in a case of high reselection priority of a carrier frequency of a base station on which camping is currently performed.
Accordingly, the fact that target carrier frequencies for detecting a suitable CSG cell can be reduced by performing the present embodiment leads to a large effect in a reduction of the processing load of a user equipment.
In a case of performing measurements of neighbor cells for searching for a base station supporting an open access mode, the user equipment is only required to perform measurements of neighbor cells for cell search at a carrier frequency for a macro cell and a carrier frequency dedicated to a hybrid access mode.
That is, in performing a search operation for searching for a base station supporting an open access mode, the search operations can be reduced at the carrier frequency at which there is only a base station operating in a closed access mode. This can achieve effects of reductions in the processing load and power consumption of a user equipment. The effects become more conspicuous for a user equipment with lower capability that cannot be registered with a CSG.

While the LTE system (E-UTRAN) has mainly been described in the present invention, the present invention is applicable to the W-CDMA system (UTRAN, UMTS) and LTE-Advanced. Further, the present invention is applicable to a mobile communication system in which a closed subscriber group (CSG) is introduced, and a communication system in which an operator specifies subscribers and the specific subscribers are allowed access as in the CSG.

The present invention has mainly described the case where the method A or method B of Non-Patent Document 7 is applied as the solution for an interference problem in a case where a HeNB/HNB is installed within the coverage of the macro cell, which is also applicable to the case where the method D of Non-Patent Document 7 is used.
This is because, though it is described in the method D that a HeNB/HNB is a CSG or a partial co-channel, the method D hardly differs from the method A and method B in that the carrier frequency for a CSG cell and the carrier frequency for a macro cell are separated from each other.
Further, it is conceivable to cause a macro cell to operate in a closed access mode. Such a situation is also referred to as the use of a macro cell as a CSG cell. If a macro cell operating in a closed access mode is installed outside the coverage of the macro cell operating in an open access mode even in this case, there may arise a situation in which a user equipment that has not been registered with the CSG to which the macro cell operating in a closed access mode belongs cannot receive the service within the coverage of the macro cell operating in a closed access mode.
In a solution using a conventional method, a macro cell caused to operate in an open access mode is newly installed in that location. As a result, that location is included within the coverage of the macro cell operating in an open access mode, which also enables the user equipment that has not been registered with the CSG to receive the service of a mobile communication system in that location. However, this causes a new problem that it costs considerably for installing a new macro cell.
The above-mentioned problem can be solved by the use of the present invention. This achieves an effect that a mobile communication system can be provided, in which in a case where a base station operating in a closed access mode is installed outside the communication area of a base station that does not specify a user equipment that makes access, even a user equipment other than an specific user equipment can receive the communication service while suppressing costs within the communication area of the base station operating in a closed mode.
In a case of using the present invention, it suffices that the present invention is applied by taking a macro cell operating in a closed access mode installed outside the coverage of the macro cell operating in an open access mode as a HeNB/HNB installed outside the coverage of the macro cell of the method disclosed in the present invention.
The present invention has mainly described the case where the HeNB/HNB and macro cell support a closed access mode. Further, the present invention is applicable to a case where a cell with a small coverage, for example, micro-cell, pico-cell, femto-cell, hot sport or relay supports a closed access mode.

## Claims

1. A mobile communication system comprising a base station for specific subscribers and a base station, the base station for specific subscribers operating in a closed access mode setting corresponding to a closed access mode in which specific user equipments are allowed access and in a hybrid access mode setting corresponding to the closed access mode as well as an open access mode in which user equipments to be allowed access are not specified, the base station not specifying a user equipment that makes access,
wherein upon the base station for specific subscribers being installed outside a communication area of the base station that does not specify a user equipment that makes access, the base station for specific subscribers is caused to operate in the hybrid access mode setting.

2. The mobile communication system according to claim 1,
wherein upon a carrier frequency used by the base station for specific subscribers being provided, the base station for specific subscribers is caused to operate in the hybrid access mode setting.

3. The mobile communication system according to claim 1,
comprising a tracking area management device managing a tracking area being a target for tracking a location of a user equipment, wherein upon the tracking area management device transmitting a tracking area update reject signal for a tracking area update request signal transmitted from the user equipment, the base station for specific subscribers is caused to operate in the hybrid access mode setting.

4. The mobile communication system according to claim 1,
comprising a base station location information management device managing location information of a base station,
wherein upon the base station location information management device judging that the base station for specific subscribers is installed outside a communication area of a base station that does not specify a user equipment that makes access, the base station for specific subscribers is caused to operate in the hybrid access mode setting.

5. The mobile communication system according to claim 2,
wherein a carrier frequency used by the base station for specific subscribers operating in the hybrid access mode setting is set to a frequency different from a carrier frequency used by the base station for specific subscribers operating in the closed access mode setting.

6. The mobile communication system according to claim 1,
wherein the base station for specific subscribers operating in the hybrid access mode setting uses a first carrier frequency same as the carrier frequency used by the base station for specific subscribers operating in the closed access mode setting in the closed access mode and uses a second carrier frequency different from the first carrier frequency in the open access mode.

7. The mobile communication system according to claim 1,
wherein a user equipment is caused to recognize a carrier frequency used by the base station for specific subscribers.
